# EUROPEAN PATENT SPECIFICATION

(11) **EP 2 618 633 B1**
(45) Date of publication and mention of the grant of the patent: **08.11.2017**
(21) Application number: 11824729.5
(22) Date of filing: 31.08.2011
(51) Int. Cl.: H05B 6/12, H05B 6/06

(54) **INDUCTION HEAT COOKER**
INDUKTIONSHERD
CUISEUR THERMIQUE À INDUCTION

(30) Priority: 13.09.2010 JP 2010204315
(43) Date of publication of application: 24.07.2013
(60) Divisional application: 17188849.8
(73) Proprietor: Mitsubishi Electric Corporation, Tokyo 100-8310 (JP); Mitsubishi Electric Home Appliance Co., Ltd., Fukaya-shi, Saitama 369-1295 (JP)
(72) Inventor: ITO, Masanobu, Fukaya-shi Saitama 369-1295 (JP); KAMEOKA, Kazuhiro, Fukaya-shi Saitama 369-1295 (JP); KAWATA, Yukio, Fukaya-shi Saitama 369-1295 (JP); KISAICHI, Hiroyasu, Tokyo 100-8310 (JP); NISHI, Kenichiro, Tokyo 100-8310 (JP); TAKANO, Koshiro, Tokyo 100-8310 (JP); MORII, Akira, Tokyo 100-8310 (JP)
(74) Representative: Pfenning, Meinig & Partner mbB
(86) International application number: PCT/JP2011/004872
(87) International publication number: WO 2012/035709

(56) References cited:
- WO-A1-2010/079583
- WO-A1-2010/079583
- WO-A1-2010/101135
- WO-A1-2010/101202
- JP-A- 2007 335 180
- JP-A- 2008 159 494
- JP-A- 2009 218 041
- JP-A- 2010 165 656
- US-A- 4 453 068
- US-B1- 6 498 325

## Description

### Technical Field

The present invention relates to an induction cooking system that heats a heated object such as a metal pan, which holds an object to be cooked therein, on the top plate from below the top plate.

### Background Art

Cooking systems that perform induction heating of a heated object, such as a metal pan, with a heating coil has been recognized by consumers for their safety, cleanliness, and high efficiency and have gradually become popular in recent years.

Such induction cooking systems are broadly categorized, by their installation form, into a table-top type that is used by placing the system on a top side of a sink cabinet or the like and into a built-in (embedded) type that is set in an installation space of a piece of kitchen furniture such as a sink cabinet. In either type, widely known induction cooking systems are ones with a top side covered with a top plate (also referred to as a "top") formed by a heat-resisting glass plate or the like on substantially all of the top side and with a single or a plurality of induction heating source disposed below the top plate. As for the induction heating source of the above, one including a toric heating coil and a high-frequency generating power circuit (also referred to as an "inverter circuit") that supplies high-frequency power to the heating coil is used. Further, boiling-over detection electrodes are disposed on the underside of a top plate along the rim of a heating coil so as to detect boiling over of an object to be cooked from a heated object such as a pan (see Patent Literature 1, for example).

Further, as another induction cooking system, there is one that disposes a plurality of arc-shaped electrodes on the underside of a top plate for detecting boiling over such that when an object to be cooked on the top plate boils over, the change in static capacitance of the electrodes are captured and high frequency heating is stopped (see Patent Literature 2, for example).

Furthermore, as still another induction cooking system, there is one that disposes a circular heating coil at the center, arranges a plurality of side heating coils adjacent to the both sides of the center heating coil, and drives the center heating coil and the side heating coils with different high-frequency generating power circuits. By considering the directions of the high-frequency currents flowing in the plurality of side heating coils and the center heating coil, induced electromotive forces generated in the plurality of side heating coils and the center heating coil are canceled out allowing the induction heating system to be used for purposes such as simultaneous heating of a wide planar region (see Patent Literature 3, for example).

The publication US 4,453,068 describes an induction heating system which includes a plurality of induction heating coils. Touch control pads are provided together with circuitry for generating energization control signals. Circuitry is provided for electrically energizing the induction heating coils. An electronic digital processor is responsive to the energization control signals for generating energization signals for actuating and controlling the energization circuitry to thereby vary the energization of the plurality of induction heating coils.

### Citation List

### Patent Literature

Patent Literature 1: Japanese Unexamined Patent Application Publication No. 2010-182659 (p. 1, Fig. 2)
Patent Literature 2: Japanese Unexamined Patent Application Publication No. 2010-182662 (p. 1, Fig. 2)
Patent Literature 3: Japanese Patent No. 3725249 (pp. 1 and 2, Fig. 3)

### Summary of Invention

### Technical Problem

However, in conventional induction cooling systems, since the entire bottom of a single heated object such as a metal pan is heated with an toric coil having an circular outer shape or simultaneously with three coils, that is, a circular center heating coil and lateral heating coils at both sides of the center heating coil, it is not yet sufficient to generate convection in the object to be cooked with a long convection channel that approaches the other facing side from one side of the pan. Further, since boiling-over detection having a single toric heating coil as its premise has only been proposed, disadvantageously, it has not been possible to provide a highly reliable boiling-over detection function when heating control, which generates convection with a long convection route, is performed.

The present invention is addressed to the above-described problems and a main object of the invention is to add, as well as other functions, a highly reliable boiling-over detection function in an induction cooking system employing control that is capable of accelerating generation of convection in liquid, such as water, soup of stewed food and the like, in the heated object. Solution to Problem

Above mentioned problems are solved by the induction cooking system according to claim 1. The dependent claims describe advantageous embodiments of the induction cooking system according to claim 1.

In the following some advantages are described which may be achieved by the present invention.

It may be possible to positionally change the heated portion of the heated object and accelerate generation of convection in the liquid such as water, soup of stewed food and the like, in the heated object, as well as being capable of controlling the driving of the inverter circuit while the boiling over phenomenon, in which the liquid flows to the outer periphery of the first and second sub heating coils, is promptly detected.

Accordingly, it may be possible to positionally change the heated portion of the heated object and accelerate generation of convection in the liquid such as water, soup of stewed food and the like, in the heated object, as well as being capable of controlling the driving of the inverter circuit while the boiling over phenomenon, in which the liquid flows to the outer periphery of each sub heating coil of the first group and second group, is promptly detected.

It may be possible to positionally change the heated portion of the heated object and accelerate generation of convection in the liquid such as water, soup of stewed food and the like, in the heated object, as well as being capable of controlling the driving of the inverter circuit while the boiling over phenomenon, in which the liquid flows to the outer periphery of the first and the second sub heating coils, is promptly detected. Further, when the user desires to perform cooking putting importance on uniformity of the heating temperature, the user can carry out control that accelerates convection of the object to be cooked by carrying out selection in the operating unit.

It may be possible to positionally change the heated portion of the heated object and accelerate generation of convection in the liquid such as water, soup of stewed food and the like, in the heated object, as well as being capable of controlling the driving of the inverter circuit while the boiling over phenomenon, in which the liquid flows to the outer periphery of each sub heating coil of the first group and the second group, is promptly detected. Further, when the user desires to perform cooking putting importance on uniformity of the heating temperature, the user can carry out control that accelerates convection of the object to be cooked by carrying out selection in the operating unit.

It may be possible to positionally change the heated portion of the heated object and accelerate generation of convection in the liquid such as water, soup of stewed food and the like, in the heated object, as well as being capable of controlling the driving of the inverter circuit while the boiling over phenomenon, in which the liquid flows to the outer periphery of the first and second sub heating coils, is promptly detected. Further, with the individual light emitting units, it may be possible to improve usability such as making it easier for the user to confirm the boiling-over detection area and enabling the user to approximately understand the propriety of the placing position of the pan.

It may be possible to perform cooperative heating of a large diameter pan, a noncircular pan such as an elliptical pan, or the like with the main heating coil and the sub heating coils, and even when boiling over of the object to be cooked occurs while the main heating coil is performing non-cooperative heating, it may be possible to perform early detection of the boiling over with the inner electrode(s) that is disposed near the outer circumference of the main heating coil, and further, in a case in which the boiling over spreads to the outside of the inner electrode(s), boiling over is detected by the outer electrode(s). With such double boiling-over detection operation, the user can carry out induction cooking at ease and it is possible to prevent stain to adhere on or damage the cooking system or the surroundings of the system due to a large amount of boiling over.

According to the invention, uniformity of temperature can be anticipated by accelerating convection of the whole object to be cooked during heating with the main heating coil and at least the two sub heating coils provided on the both sides of the main heating coil.

Further, according to the invention, when there is accidental boiling over of the object to be cooked owing to the driving of the sub heating coil(s), the boiling over can be promptly detected by the electrode(s) near the sub heating coil(s) and the driving of the inverter circuit can be controlled.

As such, it is possible to provide an induction cooking system with a boiling-over detection function that facilitates uniform heating, that has usability, and that is highly reliable.

### Brief Description of Drawings

[Fig. 1] Fig. 1 is a block diagram illustrating a basic configuration of an entirety of a built-in induction cooking system according to Embodiment 1 of the invention.
[Fig. 2] Fig. 2 includes plan views illustrating induction heating coils of the built-in induction cooking system according to Embodiment 1 of the invention.
[Fig. 3] Fig. 3 is a first explanatory diagram of a heating operation of the induction heating coils of the built-in induction cooking system according to Embodiment 1 of the invention.
[Fig. 4] Fig. 4 is a first explanatory diagram of energizations of the induction heating coils of the built-in induction cooking system according to Embodiment 1 of the invention.
[Fig. 5] Fig. 5 is an explanatory diagram of control steps illustrating a basic heating operation of the entire built-in induction cooking system according to Embodiment 1 of the invention.
[Fig. 6] Fig. 6 is a plan view illustrating a modification of the induction heating coils of the built-in induction cooking system according to Embodiment 1 of the invention.
[Fig. 7] Fig. 7 is a second explanatory diagram of the energizations of the induction heating coils of the built-in induction cooking system according to Embodiment 1 of the invention.
[Fig. 8] Fig. 8 is a third explanatory diagram of the energizations of the induction heating coils of the built-in induction cooking system according to Embodiment 1 of the invention.
[Fig. 9] Fig. 9 is a second explanatory diagram of the heating operation of the induction heating coils of the built-in induction cooking system according to Embodiment 1 of the invention.
[Fig. 10] Fig. 10 is a plan view illustrating the entirety of the built-in induction cooking system according to Embodiment 1 of the invention.
[Fig. 11] Fig. 11 is a perspective view illustrating an entirety of a built-in induction cooking system according to Embodiment 2 of the invention with a partially exploded portion.
[Fig. 12] Fig. 12 is a perspective view illustrating an entirety of a main body of the built-in induction cooking system according to Embodiment 2 of the invention in a state in which a top panel has been removed.
[Fig. 13] Fig. 13 is a plan view illustrating the entirety of the main body of the built-in induction cooking system according to Embodiment 2 of the invention.
[Fig. 14] Fig. 14 is a plan view illustrating an overall arrangement of heating coils of the built-in induction cooking system according to Embodiment 2 of the invention.
[Fig. 15] Fig. 15 is a plan view illustrating an induction heating source on the left side of the built-in induction cooking system according to Embodiment 2 of the invention.
[Fig. 16] Fig. 16 is a wiring description of a main heating coil of the induction heating source on the left side of the built-in induction cooking system according to Embodiment 2 of the invention.
[Fig. 17] Fig. 17 is an enlarged plan view of the main heating coil of the induction heating source on the left side and its peripheral area of the built-in induction cooking system according to Embodiment 2 of the invention.
[Fig. 18] Fig. 18 is a plan view of a coil support of the main heating coil of the induction heating source on the left side of the built-in induction cooking system according to Embodiment 2 of the invention.
[Fig. 19] Fig. 19 is a general drawing of a control circuit of the built-in induction cooking system according to Embodiment 2 of the invention.
[Fig. 20] Fig. 20 is a diagram of a full bridge circuit that is the main portion of the control circuit of the built-in induction cooking system according to Embodiment 2 of the invention.
[Fig. 21] Fig. 21 is a schematic diagram of a full bridge circuit that is the main portion of the control circuit of the built-in induction cooking system according to Embodiment 2 of the invention.
[Fig. 22] Fig. 22 is a general block diagram of the built-in induction cooking system according to Embodiment 2 of the invention.
[Fig. 23] Fig. 23 is a longitudinal sectional view illustrating a portion of a left IH heat source of the built-in induction cooking system according to Embodiment 2 of the invention.
[Fig. 24] Fig. 24 is an explanatory diagram of control steps illustrating a basic heating operation of the entire built-in induction cooking system according to Embodiment 2 of the invention.
[Fig. 25] Fig. 25 is a first flowchart of a control operation of the built-in induction cooking system according to Embodiment 2 of the invention.
[Fig. 26] Fig. 26 is a second flowchart of a control operation of the built-in induction cooking system according to Embodiment 2 of the invention.
[Fig. 27] Fig. 27 is a third flowchart illustrating a control operation of the built-in induction cooking system according to Embodiment 2 of the invention when the heating power is changed.
[Fig. 28] Fig. 28 is a fourth flowchart illustrating a control operation of a boiling-over detection unit and an individual light emitting unit of a right IH heat source unit of the built-in induction cooking system according to Embodiment 2 of the invention.
[Fig. 29] Fig. 29 are charts illustrating heating levels (electric power for heating) of a main heating coil MC and sub heating coils SC1 to SC4 of the built-in induction cooking system according to Embodiment 2 of the invention when the heating power is set to 3 kW or 1.5kW.
[Fig. 30] Fig. 30 are charts illustrating heating levels (electric power for heating) of the main heating coil MC and the sub heating coils SC1 to SC4 of the built-in induction cooking system according to Embodiment 2 of the invention when the heating power is set to 500 W.
[Fig. 31] Fig. 31 is a plan view illustrating essential parts on the right side of a built-in induction cooking system according to Embodiment 3 of the invention.

### Description of Embodiments

### Embodiment 1

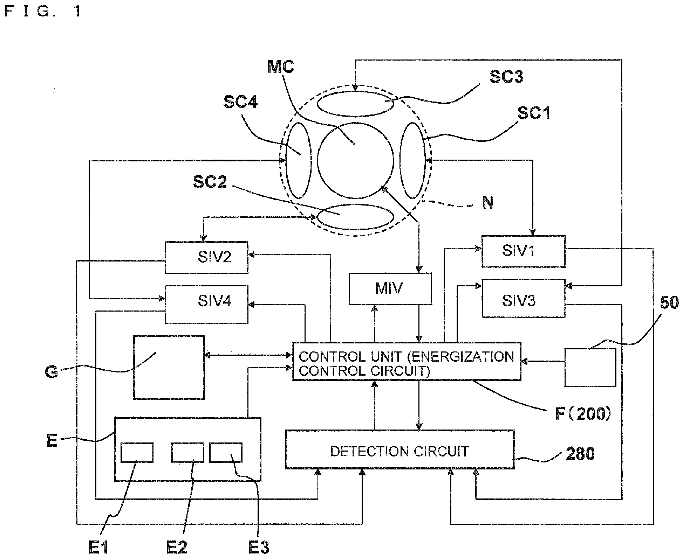

Figs. 1 to 10 illustrate an exemplary built-in (embedded) induction cooking system and illustrate an induction cooking system according to Embodiment 1 of the invention.

Fig. 1 is a block diagram illustrating a basic configuration of an entirety of the built-in induction cooking system according to Embodiment 1 of the invention.

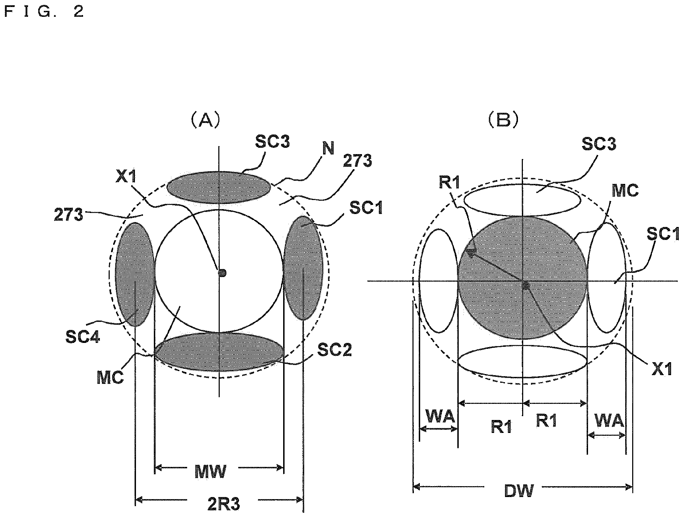

Fig. 2 includes plan views illustrating induction heating coils of the built-in induction cooking system according to Embodiment 1 of the invention.

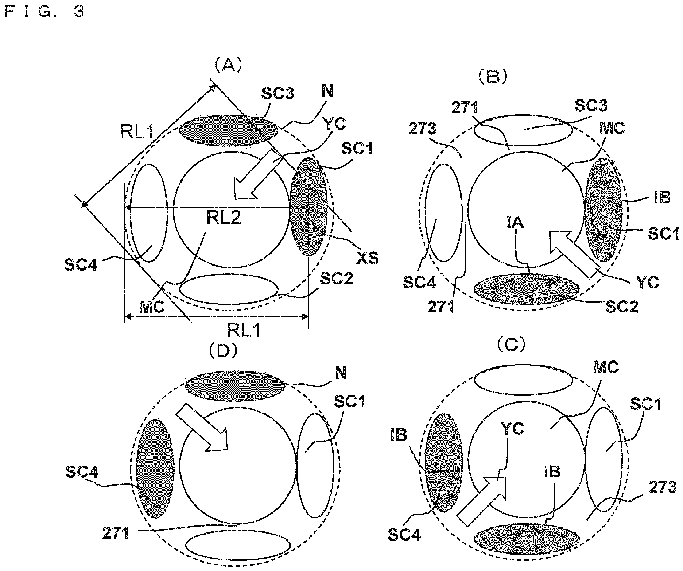

Fig. 3 is a first explanatory diagram of a heating operation of the induction heating coils of the built-in induction cooking system according to Embodiment 1 of the invention.

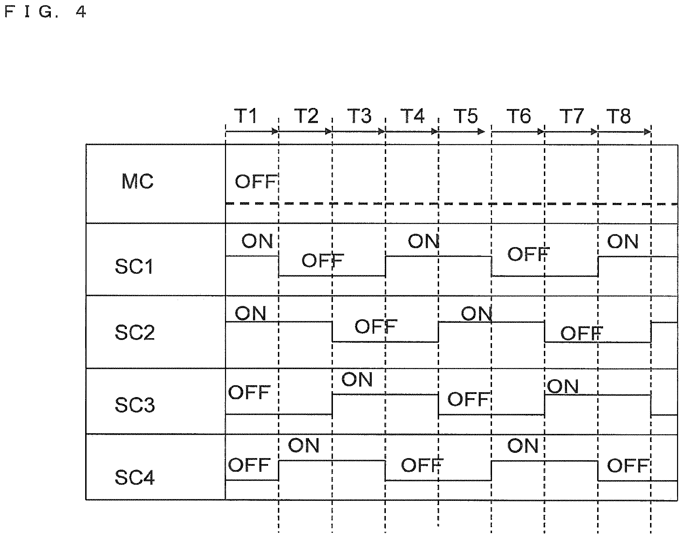

Fig. 4 is a first explanatory diagram of energizations of the induction heating coils of the built-in induction cooking system according to Embodiment 1 of the invention.

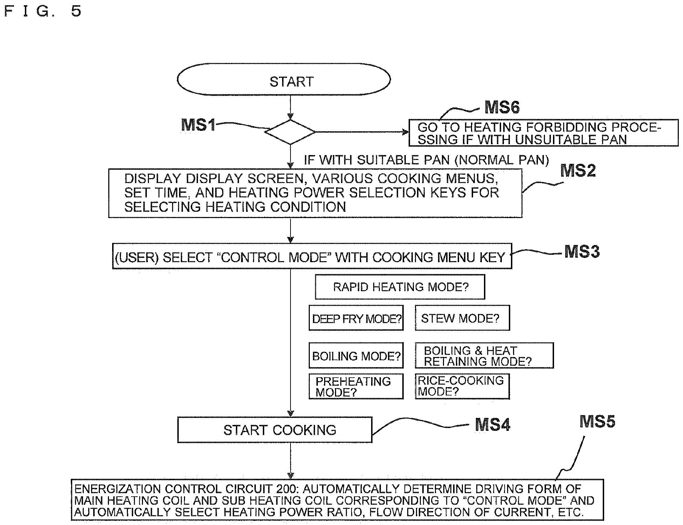

Fig. 5 is an explanatory diagram of control steps illustrating a basic heating operation of the entire built-in induction cooking system according to Embodiment 1 of the invention.

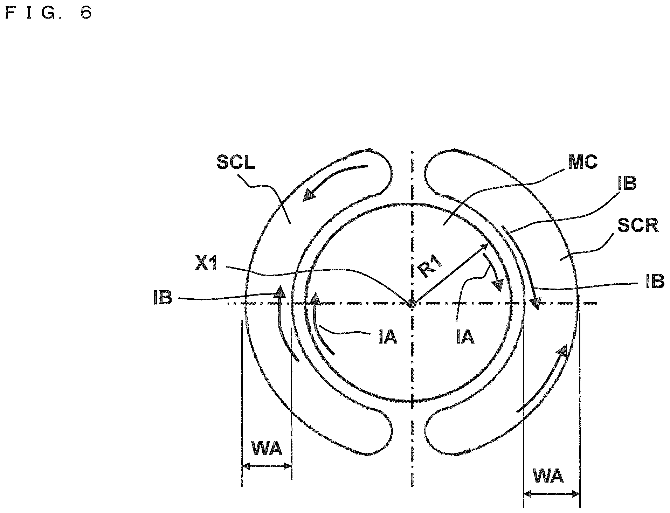

Fig. 6 is a plan view illustrating a modification of the induction heating coils of the built-in induction cooking system according to Embodiment 1 of the invention.

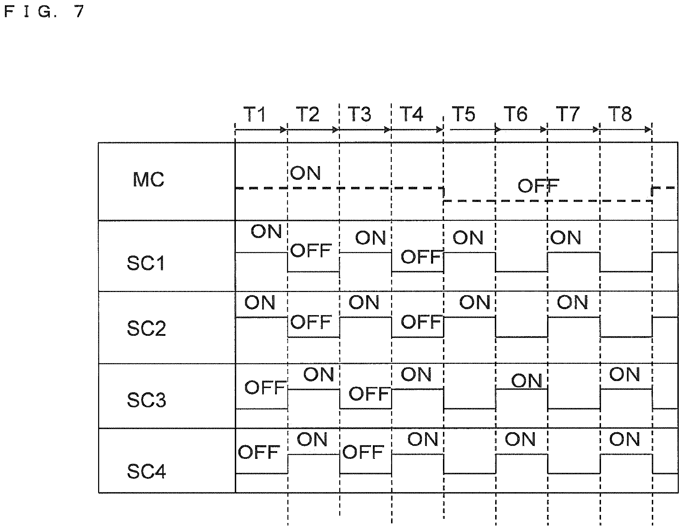

Fig. 7 is a second explanatory diagram of the energizations of the induction heating coils of the built-in induction cooking system according to Embodiment 1 of the invention.

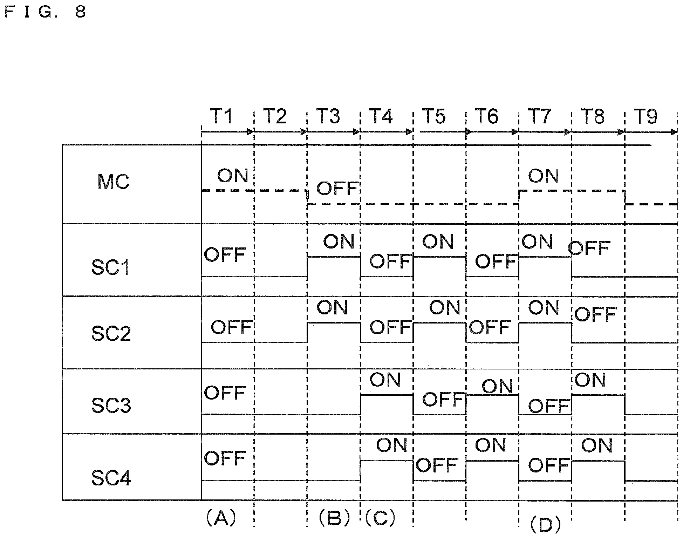

Fig. 8 is a third explanatory diagram of the energizations of the induction heating coils of the built-in induction cooking system according to Embodiment 1 of the invention.

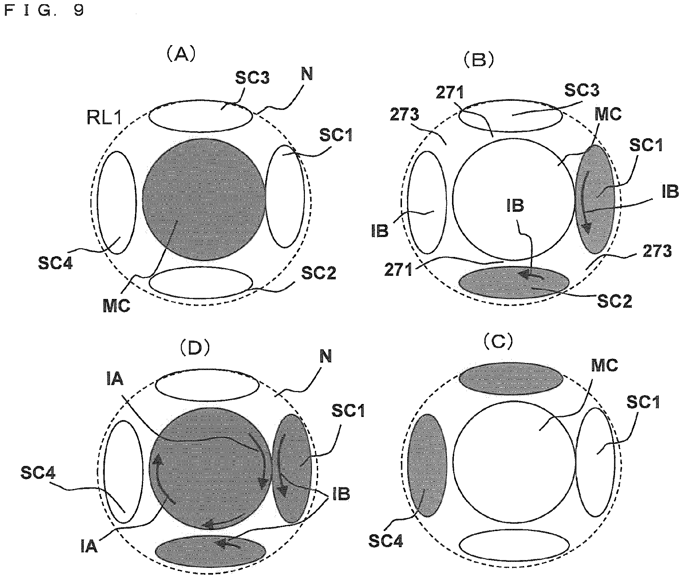

Fig. 9 is a second explanatory diagram of the heating operations of the induction heating coils of the built-in induction cooking system according to Embodiment 1 of the invention.

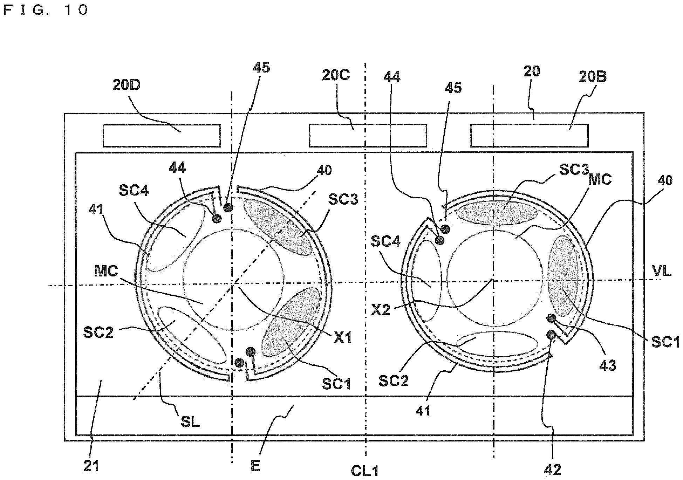

Fig. 10 is a plan view illustrating the entirety of the built-in induction cooking system according to Embodiment 1 of the invention. Note that in each figure, like parts or corresponding parts are designated with like reference numerals.

Terms that will be used in the embodiments of the invention will each be defined.

"Operating condition" of the heating means is an electric and physical condition for heating and is a collective term for energization time, energization amount (heating power), heating temperature, energization pattern (continuous energization or intermittent energization), and the like. That is, "operating condition" is an energization condition of the heating means.

"Displaying" is an operation that visually informs a user of the operating condition of the cooking system and related information that serves as a reference while cooking (including information with the aim to alarm abnormal use and occurrence of an abnormal operating state, hereinafter, merely referred to as "cooking related information") by means of characters and symbols, by illustration, by whether there is color or emittance of light, or by change such as luminance of emitted light. Note that when "displaying" by emitting or lighting a "wide area light emitting unit" or an "individual light emitting unit" described later, and when "display" is used such as in "first display" or "second display", the emitting or lighting is mere illumination of light of a predetermined color. When the state of lighting and visual effect, such as color of light, brightness, and continuous lighting or blinking, are changed, it may be described as "changing" or "switching" the display. Further, while "emitting" and "lighting" have the same meaning, in many cases, emitting is used when a light-emitting element such as a light emitting diode itself emits light and lighting is used when a lamp emits light. In the following description, both may be written side by side as above. Note that even if the emitting unit is emitted or lighted electrically and physically, there are cases in which a weak light not enough to be visually recognized by the user may reach the user. Unless specified otherwise, such cases does not correspond to the terms "emitting" and "lighting" since the user cannot recognize the outcome of the "emitting" or "lighting". For example, the top plate described later is typically not colorless or transparent but has a light color in the material itself from before it is coated on the surface. As such, since the transmittance rate of the visible light is not 100%, there are cases in which the light cannot be visually recognized from above the top plate when the light of the light emitting diode is weak, for example.

If not specified otherwise, the "display means" of the display unit includes a liquid crystal display (LCD), various light-emitting elements (a semiconductor light-emitting element has, for example, two types, that is, light emitting diode (LED) and laser diode (LD)), organic electro luminescence (Electro Luminescence:EL) element, or the like. Accordingly, the display means includes a liquid crystal screen, an EL screen, or the like. However, the display means such as the "wide area light emitting unit" and the "individual light emitting unit" described below may be mere light emitting means such as a lamp or an LED.

"Notifying" is an operation notifying the user with the object to make the user recognize the operating condition of the control means and the cooking related information by display or electrical speech (phonetic sound electrically created or synthesized).

If not specified otherwise, "notifying means" includes notifying means with audible sound such as a buzzer, a speaker, and the like and notifying means with characters and symbol, illustration, animation, or visible light.

"Cooperative heating" is an operation that heats the same single heated object by induction by supplying electric power to each of the two or more heating coils serving as induction heating sources. In the invention, examples of the cooperative heating are illustrated in Embodiment 2 and Embodiment 3 described later.

Embodiment 1 of the induction cooking system according to the invention will be described below in detail with reference to Figs. 1 to 10. Figs. 1 and 2 are plan views schematically illustrating the induction heating coils of an induction cooking system 1 according to the invention.

Referring to Figs. 1 and 2, the induction cooking system of the invention includes a single rectangular main body A (see Fig. 10). This main body A includes a top panel B (not shown) that constitutes a top side of the main body A, the entire surface of the top side of the top panel B other than a portion of its circumference being covered with a top plate; a housing C (not shown) constituting a periphery (outer wall) of the main body A other than the top side; heating means D (such as a main heating coil described later)that heats a pan, foodstuff, and the like with electric energy and the like; operation means E that is operated by a user; control means F that controls the heating means by receiving a signal from the operation means, and display means G that displays the operating condition of the heating means.

Further, although not used in Embodiment 1, there are cooking systems that includes, as a part of the heating means D, electric heating means referred to as a "grill chamber (grill heating chamber)" or a "roaster". Referring to Fig. 1, E1 is a first selection section in the operation means E provided at the front of the top side of the main body A, to which input operation is performed by means of a touch key that detects if there has been an input or not with the difference in static capacitance, a press key that has an electromechanical contact, or other keys. Similarly, E2 is a second selection section and E3 is a third selection section. The user can select various menus described later by operating these selection sections. The characteristics of the function of each of the selection sections E1 to E3 will be described in detail later.

Referring to Figs. 1 and 2, "MC" is the main heating coil of the induction heating source (hereinafter, referred to as an "IH heat source") and is disposed adjacent to the bottom of the top plate (not shown) on which a heated object N such as a metal pan is placed. Circles depicted by broken lines in the drawings are the external form of the heated object N such as a pan. Further, the main heating coil is ultimately formed into a disc shape by bundling about 30 fine wires with a size of approximately 0.1 mm to 0.3 mm, twisting one or a plurality of this bundle (hereinafter, referred to as an "assembled wire"), and spirally winding this so that a circular outer shape is formed with a center point X1 as its cardinal point. The diameter (maximum outer diameter) of the main heating coil MC is about 180 mm to about 200 mm and its radius R1 is 90 to 100 mm. In Embodiment 1, the maximum electric power consumption (maximum heating power) of the main heating coil is 3 kW, for example.

"SC1 to SC4" are four elliptical sub heating coils that are disposed with even distances and are disposed symmetrically in the front-rear and the left-right positions with a center point X1 of the main heating coil MC as the cardinal point. When viewed radially from the center point X1, the transverse dimension, that is, the "thickness" (also referred to as "breadth") WA of each sub heating coil has the size amounting to 50% to 30% of the radius R1 of the main heating coil MC. In the examples of Figs. 1 and 2, sub heating coils in which WA is set to 40 mm are used. Further, a major axis MW of each sub heating coil is about double of R1, that is, the same as the diameter (maximum outer diameter) of the main heating coil MC, and is about 180 mm to 200 mm. Note that, if there is no contradiction with the other descriptions in particular, taking Fig. 2 as an example, the "side" of the main heating coil MC naturally indicates the right side and the left side, and also includes the upper side and the lower side (the front side) and "both sides" naturally indicates both the left and right sides, and also the front and rear sides as well as the diagonal sides.

Each of the four sub heating coils SC1 to SC4 is disposed to maintain a predetermined space (size of a few millimeters to one centimeter), namely space 271, with the circumference of the main heating coil MC. Spaces between the sub heating coils SC1 to SC4 are set at substantially even intervals (maintaining a space 273 between each other). These sub heating coils are also formed so as to have an ellipse or oval outer shape by twisting one or a plurality of assembled wires and spirally winding the assembled wires in a predetermined direction, and then by partially binding it with a binding tool or by hardening it with heat-resistant resin so as to maintain its shape. The four sub heating coils SC1 to SC4 have a same planar shape, and the dimensions of the length, width, and height (thickness) are all the same. Accordingly, four sub heating coils of the same kind are fabricated and are disposed at four positions.

As shown in Fig. 2, in the circumference of the main heating coil MC having a radius R1 from the center point X1, the tangential direction coincide with the center line of each of the sub heating coils SC1 to SC4 in their longitudinal direction. In other words, it is in accord with the major axis direction.
Each of the sub heating coils SC1 to SC4 electrically constitute a single closed circuit while the assembled wires are extended and bent into an elliptical shape. Further, the dimension of the main heating coil MC in the vertical direction (the height, also referred to as "thickness") and the dimension of each of the sub heating coils SC1 to SC4 in the vertical direction are the same. Further, the main heating coil MC and the sub heating coils SC1 to SC4 are horizontally disposed and fixed such that the facing distances between their upper sides and the bottom side of the top plate are the same.

Referring to Fig. 2, "DW" indicates the outer diameter of the heated object N such as a metal pan. In the example in Fig. 2, from the diameter of the main heating coil MC and the thicknesses WA of the sub heating coils SC1 to SC4 above, the outer diameter DW of the heated object N is about 220 mm to 240 mm.

Fig. 1 is a circuit block diagram of a built-in power supply of the induction cooking system 1. Broadly, the power supply according to the invention includes a converter that converts three-phase alternating current power into direct current (referred to as a "diode bridge circuit" or a "rectifier bridge circuit", for example), a smoothing capacitor connected to an output terminal of the converter, a main inverter circuit (power circuit) MIV for the main heating coil MC connected in parallel to this smoothing capacitor, as well as the sub inverter circuits (power circuit) SIV1 to SIV4 for the sub heating coils SC1 to SC4 connected in parallel to the smoothing capacitor.

"50" is a boiling-over detection unit that includes a first electrode 40 and a second electrode 41, which will be described later. The electrodes are adhered and attached to the underside of the glass top plate described later. When liquid of the object to be cooked that has boiled over the heated object N such as a pan and the like reaches a position immediately above the electrodes 40 and 41, the static capacitance of the electrodes change. The boiling-over detection unit 50 captures this change and sends a determination signal to the energization control circuit 200 that indicates that there has been a boil-over. Note that the determination method will be described in detail later.

Each of the main inverter circuit MC and the sub inverter circuits SIV1 to SIV4 converts the direct current from the converter into a high-frequency current and supplies the high-frequency current individually (to each other) to the corresponding one of the main heating coil MC and the sub heating coils SC1 to SC4.

Generally, impedance of an induction heating coil changes depending on whether there is a heated object N over the induction heating coil and on the size (area) of the heated object N. Amperage of the main inverter circuit MIV and the sub inverter circuits SIV1 to SIV4 changes accordingly. The power supply according to the invention includes a current detection unit (detection means) 280 for detecting the amperage of each of the main heating coil MC and the sub heating coils SC1 to SC4. This current detection unit is a type of a placement-of-heated-object determination unit described later.

The invention is capable of detecting the size (bottom diameter) and the placed position of the heated object N by using the current detection unit 280 to detect the amperage of the main heating coil MC and the sub heating coils SC1 to SC4 in order to estimate whether there is a heated object N placed above each coil or whether the bottom area of the heated object N is larger than a predetermined value, and by transmitting the estimated result to a control unit (hereinafter, referred to as an "energization control circuit") 200.

Note, although a current detection unit 280 is used to detect the amperage of the main inverter circuit MIV and the sub inverter circuits SIV1 to SIV4, the invention is not limited to this unit and other arbitrary sensors such as a mechanical sensor or an optical sensor may be used to detect the placed state of the heated object N.

As shown in the drawing, the energization control circuit 200 of the power supply of the invention is connected to the current detection unit 280 and provides a control signal to the main inverter circuit MIV and the sub inverter circuits SIV1 to SIV4 in accordance with the placed state of the heated object N. That is, the energization control circuit 200 receives a signal (data indicating the placed state of the heated object N) related to the amperage of the main heating coil MC and the sub heating coils SC1 to SC4 detected by the current detection unit 280, and when it is determined that that there is no heated object N placed or that the diameter of the heated object N is smaller than a predetermined value (120 mmφ, for example), then the energization control circuit 200 selectively controls the main inverter circuit MIV and the sub inverter circuits SIV1 to SIV4 such that supply of the high-frequency currents to the main heating coil MC and the sub heating coils SC1 to SC4 are prohibited or (if already been supplied) stopped.

The invention is capable of controlling power supply to the main heating coil MC and the sub heating coils SC1 to SC4 individually to each other by supplying the control signal to the main inverter circuit MIV and the sub inverter circuits SIV1 to SIV4 with the energization control circuit 200 in accordance with the placed state of the heated object N. Further, by not driving the main heating coil MC at the center (switching it to an OFF state) and by driving all of the sub heating coils SC1 to SC4 (switching them to an ON state), it will be possible to carry out cooking methods such as preheating of the pan surface of a frying pan and the like such that preheating of the pan bottom, as well as preheating of its side can be carried out at the same time.

Specific operations will be described next. However, before that, main cooking menus that can be performed with the energization control circuit 200 that constitutes the core of the control means F of the invention will be described.

### Rapid heating mode (A cooking menu putting priority on the heating speed. Selected with a first selection section E1)

The heating power exerted to the heated object N can be set manually.

The level of the total heating power of the main heating coil MC and the sub heating coils is selected by the user from among the below-described nine levels in the range of 120W to 3.0 kW.
120 W, 300 W, 500 W, 750 W, 1.0 kW, 1.5 kW, 2.0 kW, 2.5 kW, 3.0 kW.

A heating power ratio of the main heating coil MC and the sub heating coils SC1 to SC4 (hereinafter, referred to as a "main-sub heating power ratio") is automatically determined by the energization control circuit 200 so as to not exceed the limit that is the above-mentioned total heating power selected by the user and so as to be within the range of the predetermined heating power ratio; the user cannot arbitrarily set the heating power ratio.

For example, the main-sub heating power ratio ranges from 2:3 (during high heating power) to 1:1 (during low heating power).

The main heating coil MC and the sub heating coils SC1 to SC4 are driven simultaneously. In such a case, directions of the high-frequency currents in the adjacent areas of the main heating coil MC and the sub heating coils SC1 to SC4 are controlled to coincide with each other.

Deep fry mode (automatic). (A cooking menu that requires rapid heating and heat retaining function. Selected with a third selection section E3)

Heating the heated object N (deep-frying pan and the like) containing oil for deep frying to a predetermined temperature (first step), automatically controlling the heating power such that the temperature of the heated object N is maintained within a predetermined range with the energization control circuit 200 (second step).

First step: rapid heating to a predetermined temperature (180°C, for example).

The heating power of the main heating coil is 2.5 kW.

Second step: deep frying is carried out at this step and the ingredients and the like of the deep-fried food is cast in. Operating for 30 minutes at the maximum. During this step, setting of (arbitrarily) heating power with the heating power setting unit is prohibited. After elapse of 30 minutes, the heating operation is automatically ended (it is possible to command extension of the operation).

The main-sub heating power ratio is automatically determined so as to be within a predetermined range in both the first and second steps, and the user cannot arbitrarily set the heating power ratio of the main heating coil and the sub heating coils. For example, the main-sub heating power ratio automatically changes from 2:3 (during high heating power) to 1:1 (during low heating power).

The main and sub heating coils are simultaneously driven in the first step and the flows of the high-frequency currents where the main and sub heating coils are adjacent to each other coincide. This is for performing rapid heating up to the predetermined temperature. The main and sub heating coils are simultaneously driven and the flows of the currents coincide each other in the second step as well. However, when a state in which there is little temperature change during deep frying continues, the direction of the currents are made to counter each other in order to uniformize the heating.

### Preheating mode (A cooking menu putting priority on uniformity of heating. Selected with a second selection section E2)

Performing a first preheating step that heats the heated object N with a predetermined heating power while prohibiting setting or changing of the heating power, and after the end of the first preheating step, performing a heat retaining step that maintains the heated object N within a predetermined temperature range (using the detection temperature signal from the temperature sensor).

### Preheating step:

The main heating coil set to 1.0 kW (fixed)

The sub heating coils set to 1.5 kW (fixed)

Heat retaining step: five minutes at the maximum. During this time period, when (arbitrary) heating power setting is not performed, the heating operation is ended automatically after elapse of five minutes.
Main heating coil set between 300 W to 100W (the user unable to perform setting)
Sub heating coils set between 300 W to 100 W (the user unable to perform the setting)

During the heat retaining step, when an arbitrary heating power is set, it will be the same as rapid heating.

When setting the arbitrary heating power, the user can select a level of the total heating power of the main heating coil MC and the sub heating coils from among the below-described nine levels in the range of 120W to 3.0 kW.
120 W, 300 W, 500 W, 750 W, 1.0 kW, 1.5 kW, 2.0 kW, 2.5 kW, 3.0 kW.

In this case, the main-sub heating power ratio is automatically determined by the energization control circuit 200 so that it will be within a predetermined range; the user cannot arbitrarily determine the main-sub heating power ratio. For example, the main-sub heating power ratio ranges from 2:3 (during high heating power) to 1:1 (during low heating power).

The main and sub heating coils are simultaneously driven in the preheating step and the flows of the high-frequency currents where the main and sub heating coils are adjacent to each other are in completely opposite directions. This is because importance is put on uniformizing the heating intensity by having the magnetic flux generated from both coils in adjacent areas interfere with each other. The main and sub heating coils are simultaneously driven also in the heat retaining step; however, the directions of the high-frequency currents in the areas where the main heating coil and the sub heating coils are adjacent to each other are opposite. This is to uniformize the overall temperature distribution.

Note that in the heat retaining step (when the temperature of the heated object N is 98°C or higher), convection acceleration control is started on the basis of an instruction from the user. The convection acceleration control will be described later.

### Water-boiling mode (A cooking menu putting priority on the heating speed. Selected with the first selection section E1)

After the user starts to heat the water in the heated object with an arbitrary heating power and after the water starts to boil (when the energization control circuit 200 determines that the water is in a boiling state from information such as the temperature of the heated object N and the change in the degree of temperature rise detected by a temperature sensor, a display means G informs the user that the water is boiling. The heating power from then on is automatically set, and the boiling state is maintained as it is for just two minutes.

### Water-boiling step:

The total heating power of the main heating coil and the sub heating coils is 120 W to 3.0 kW. (Arbitrarily set from among nine levels from heating level 1 to heating level 9. Default setting is heating level 7 = 2.0 kW).

The main-sub heating power ratio is automatically determined by the energization control circuit 200 so as to not exceed the limit that is the above-mentioned total heating power selected by the user and so as to be within the range of the predetermined heating power ratio; the user cannot arbitrarily set the heating power ratio. For example, the main-sub heating power ratio ranges from 2:3 (during high heating power) to 1:1 (during low heating power).

Heat retaining step: two minutes at the maximum. After elapse of 2 minutes, the heating operation is automatically ended.
Main heating coil set to 1.0 kW or lower (the user unable to perform the setting)
Sub heating coils set to 1.5 kW or lower (the user unable to perform the setting)

During this time period, when an arbitrary heating power is set by the user, it will be the same as rapid heating. The heating power can be selected from nine heating levels ranging from 120 W to 3.0 kW.

Until the object to be cooked starts to boil, the main heating coil MC and the sub heating coils SC1 to SC4 are driven simultaneously. In such a case, directions of the high-frequency currents in the adjacent areas of the main heating coil MC and the sub heating coils SC1 to SC4 are controlled to coincide each other. After the object to be cooked starts to boil, the directions of the currents are made to counter each other.

### Rice cooking mode (A cooking menu putting priority on uniformity of heating. Selected with the second selection section E2)

After the user has set a container, which is to be the heated object N, having therein appropriate amount of rice and water, the container is heated according to a predetermined rice-cooking program (sequential program including a water absorbing step, a heating step, a boiling step, and a steaming step) and automatic rice-cooking is performed.

Water absorbing step and rice-cooking step
Main heating coil set to 0.6 kW or lower (the user unable to perform the setting. Changes in accordance with the proceeding step)
Sub heating coils set to 0.7 kW or lower (the user unable to perform the setting. Changes in accordance with the proceeding step)
Steaming step: five minutes
Main coil, no heating (heating power 0 W)
Heat retaining step: five minutes at the maximum.
Main heating coil set to 200 W or lower (the user unable to perform setting)
Sub heating coils set to 200 kW or lower (the user unable to perform setting)

The main and sub heating coils are simultaneously driven and the flows of the high-frequency currents where the main and sub heating coils are adjacent to each other are controlled so that they are in opposite directions. This is because importance is put on uniformizing the heating intensity by having the magnetic flux generated from the two coils in adjacent areas interfere with each other.

Note that after the rice-cooling step is completed, if the detection circuit (a placement-of-heated-object detection unit) 280 detects that the heated object N is not placed above the main and sub heating coils, or during either of the steaming step and the heat retaining step, if the placement-of-heated-object detection unit similarly detects that the heated object N is not placed above the main and sub heating coils at the same time, then the heating operation of the main and sub heating coils are immediately stopped.

### Stew mode (A cooking menu putting priority on the heating speed. Selected with the first selection section E1)

Heating step (until boiling starts):
the heating power exerted to the heated object N can be set manually.

The level of the total heating power of the main heating coil MC and the sub heating coils is selected by the user from among the below-described nine levels in the range of 120W to 3.0 kW.
120 W, 300 W, 500 W, 750 W, 1.0 kW, 1.5 kW, 2.0 kW, 2.5 kW, 3.0 kW.

The default value is 2 kW (when the user does not select any heating power, heating is started at 2 kW)

The main-sub heating power ratio is automatically determined by the energization control circuit 200 so that it will be within a predetermined range; the user cannot arbitrarily determine the main-sub heating power ratio. For example, the main-sub heating power ratio ranges from 2:3 (during high heating power) to 1:1 (during low heating power).

### After start of boiling:

When the water starts to boil (when the control unit estimates that the water is in a boiling state from information such as the temperature of the heated object N and the change in the degree of temperature rise detected by the temperature sensor), it is informed to the user.

Then, for 30 minutes continuously (can be extended), the heating operation is automatically continued at a default value (600 W) so as to maintain the boiling state; however, the user may arbitrary select the heating power after the start of boiling.

In all of the steps until the object to be cooked starts to boil, the main heating coil MC and the sub heating coils SC1 to SC4 are driven simultaneously. The directions of the high-frequency currents in the adjacent areas of the main heating coil MC and each of the sub heating coils SC1 to SC4 are controlled to coincide each other. After start of boiling, convection acceleration control is started on the basis of an operation by the user. The convection acceleration control will be described later.

### Water-boiling and heat retaining mode (A cooking menu putting priority on the heating speed and on uniformity of the heating. Selected with the third selection section E3)

After the user starts to heat the water in the heated object N with an arbitrary heating power and after the water starts to boil (when the control unit estimates that the water is in a boiling state from information such as the temperature of the heated object N and the change in the degree of temperature rise detected by a temperature sensor), a display unit G informs the user that the water is boiling. The heating power from then on is automatically set, and the boiling state is maintained as it is for just two minutes.

### Water-boiling step:

The total heating power of the main heating coil and the sub heating coils is 120 W to 3.0 kW (Arbitrarily set from among nine levels from heating level 1 to heating level 9. Default setting is heating level 7 = 2.0 kW).

The main-sub heating power ratio is automatically determined by the energization control circuit 200 so as to not exceed the limit that is the above-mentioned total heating power selected by the user and so as to be within the range of the predetermined heating power ratio; the user cannot arbitrarily set the heating power ratio. For example, the main-sub heating power ratio ranges from 2:3 (during high heating power) to 1:1 (during low heating power).

Heat retaining step: 10 minutes at the maximum. After elapse of 10 minutes, the heating operation is automatically ended.
Main heating coil set to 1.0 kW or lower (the user unable to perform the setting)
Sub heating coils set to 1.5 kW or lower (the user unable to perform the setting)

Until the object to be cooked starts to boil, directions of the high-frequency currents in the adjacent areas of the main heating coil MC and each of the sub heating coils SC1 to SC4 are controlled to coincide each other. After the object to be cooked starts to boil, the directions of the currents are reversed. After start of boiling, convection acceleration control is started on the basis of an operation by the user. The convection acceleration control will be described later.

The basic operation of the induction cooking system according to the invention will be described below with reference to Fig. 5. After activating the main power, when the user instructs an operation preparing heating with the operating unit (not shown), the amperage of the main heating coil MC and the sub heating coils SC1 to SC4 are detected using the current detection unit 280 to determine whether there is a heated object placed above each coil or whether the bottom area of the heated object N is larger than a predetermined value. The result is transmitted to the energization control circuit 200 that is a control unit (step MS1).

When the pan is a suitable one, the energization control circuit 200 makes, for example, a liquid crystal display screen of the display means G that is disposed in the control unit E or near the control unit E to display a display that encourages selection of the desired cooking menu (MS2). When the pan is an unsuitable deformed pan (one with a concave bottom or the like) or is an abnormally small pan or the like, heating forbidding processing is performed (MS6).

When the user selects and inputs, with the operating unit, the cooking menu, heating power, the cooking time, and the like, a full-fledged heating operation is started (MS4).
As the cooking menu displayed on the display means G, there are seven modes, namely "rapid heating mode", "deep fry mode", "water-boiling mode", "preheating mode", "rice-cooking mode", "boiling mode", and "water-boiling and heat retaining mode" that are described above. In the subsequent description, the wording "mode" may be omitted and, for example, "rapid heating mode" may be described as "rapid heating".

When the user selects an arbitrary menu from the seven cooking menus, the program embedded in the energization control circuit 200 automatically selects a control mode corresponding to the menu, and setting such as whether to energize each of the main heating coil MC and the sub heating coils SC1 to SC4, the amount of energization (heating power) of the coils, and the energization time are set. Depending on the cooking menu, a display encouraging the user to set an arbitrary heating power, energizing time, and the like is displayed on the display unit (MS5).

Note that while there are three selection sections, namely the first, second, third selection sections E1, E2, and E3, there are seven cooking menus displayed on the display means G. However, actually, there is a key in E1 that allows selection of three modes, namely, the "rapid heating", the "water-boiling", and the "boiling", for example. Similarly, in the selection section E2, there is a key for two modes, namely, the "preheating" and the "rice-cooking", and in the selection section E3, there is a key for two modes, namely, the "water-boiling and heat-retaining" and the "deep fry".

### (Convection Acceleration Control)

The convection acceleration control that is a characteristic of the invention will be described next. There are three types of convection acceleration control. Note that after start of boiling or immediately before the boiling, for example, in a case in which the temperature sensor detects that the temperature of the heated object N has risen to 98°C, or in a case in which the energization control circuit 200 determines that it is close to a boiling state based on the elapsed time from the start of cooking, it is desirable that the convection acceleration control is started after the above and at a timing the user has instructed arbitrarily, for example, immediately after the operation of the user. However, in a specific cooking menu, after it is in a boiling state, if the user does not prohibit or if the heating is stopped midway, it may be shifted to convection acceleration control automatically.

### (First Convection Acceleration Control)

This control heats the heated object N with the sub heating coils SC1 to SC4 during the time period in which the main heating coil MC is not driven.

Fig. 2(A) illustrates a state in which high-frequency currents are simultaneously supplied to the four sub heating coils SC1 to SC4 from each of the inverter circuits SIV1 to SIV4.

Fig. 2(B) illustrates a state in which the four sub heating coils SC1 to SC4 are not supplied with any high-frequency currents and are suspended of their heating operations, and, conversely, the main heating coil MC alone is supplied with the high-frequency current from the main inverter circuit MIV and is heat driven.

Fig. 3(A) illustrates a state in which high-frequency currents are individually and, further, simultaneously supplied to the neighboring pair (hereinafter, referred to as a "group") of sub heating coils SC1 and SC3 among the four sub heating coils SC1 to SC4 from the inverter circuits SIV1 and SIV3. In the above case, the heat generating portion of the heated object N is a belt-shaped portion including portions immediately above the two neighboring sub heating coils SC1 and SC3 and a portion between the two. Accordingly, the object to be cooked, such as miso soup or stew, contained in the heated object N is heated in the belt-shaped portion including portions immediately above the two neighboring sub heating coils SC1 and SC3 and the portion between the two, and an upflow is generated with the heated portion as its reference point. As depicted by an arrow YC in Fig. 3(A), when this state is continued, it will be possible to generate a long convection heading towards the opposite side that is the farthest side from the sub heating coils SC1 and SC3. Generation of reflux is facilitated in which the convection turns into a downflow at the opposite side, flows laterally through the bottom of the object to be cooked, and returns towards the sub heating coils SC1 and SC3 again.

In other words, the sequential route (referred to as a "circulation path" or a "convection loop") can be made long, in which the liquid object to be cooked returns back again with drop in temperate after spontaneously ascending with increase in temperature.

RL1 indicates a length of the long convection route where the ascended liquid of the object to be cooked moves towards the other side to turn into a downflow. The starting point of RL1 is a center point XS of the sub heating coils SC1 to SC4. Further, RL2 indicates a length from a single sub heating coil SC1 to the opposite wall of the heated object N such as a pan. As it can be understood from Fig. 3(A), RL1 and RL2 are the same (RL1 = RL2).

Next, as shown in Fig. 3(B), a state in which high-frequency currents IB are individually and simultaneously supplied to the two neighboring sub heating coils SC1 and SC2 among the four sub heating coils SC1 to SC4 from each of the inverter circuits SIV1 and SIV3 is illustrated. The direction of the currents IB flowing in the sub heating coils SC1 and SC2 are opposite each other. In this case, since the heat generating portion of the heated object N is a belt-shaped portion including portions immediately above the two neighboring sub heating coils SC1 and SC2 and a portion between the two, the direction of the generated convection is as indicated by an arrow YC in Fig. 3(B).

Similarly, as shown in Fig. 3(C), a state in which high-frequency currents IB are individually and simultaneously supplied to the pair of two neighboring sub heating coils SC2 and SC4 among the four sub heating coils SC1 to SC4 from each of the inverter circuits SIV2 and SIV4 is illustrated. In this case, since the heat generating portion of the heated object N is a belt-shaped portion including portions immediately above the two neighboring sub heating coils SC2 and SC4 and a portion between the two, the direction of the generated convection is, as indicated by an arrow YC in Fig. 3(C), completely in an opposite direction to the state illustrated in Fig. 3(A).

As described in the above embodiment, the first convection acceleration control is a method in which main heating is carried out by a group of two neighboring sub heating coils out of the four sub heating coils SC1 to SC4. In other words, it is a method of driving half or more to less than all of the sub heating coils simultaneously, among the four sub heating coils. The first convection acceleration control is implemented not only to a case with four sub heating coils SC1 to SC4. In a case in which, for example, six sub heating coils are used, three or four sub heating coils may be simultaneously driven. That is, three or four sub heating coils may be grouped as a group and heating and driving may be carried out per each group.

With this first convection acceleration control, it will be possible to induce a flow accelerating convection through the entire width of the pan from one side to the opposing other side of the pan and conversely returning from the other side to the one side. Further, even if no convection is caused, since the position of the pan heated by the sub heating coils SC1 to SC4 changes on the outer periphery of the main heating coil MC, when heating a thick cooked liquid with high viscosity, it will be possible to suppress local burning due to evaporation of water content caused by concentration of heat to only one place.

The preferable timing for sequentially switching from Fig. 3(A) to Fig. 3(B) and from Fig. 3(B) to Fig. 3(C) is not the same among objects to be cooked; however, switching is started at least from after the object to be cooked reaches its boiling temperature or when close to 100°C that is immediately before start of its boiling. From then on, the switching is performed at, for example, a 10 to 15 second interval.

Alternatively, when a 30-minute stew cooking is set, the switching may be started five minutes before the end of cooking and be performed for 5 minutes until the end of cooking. Further, switching of 30 seconds may be repeated a few times so that the soup will be absorbed by the ingredients such as vegetables, meat, and the like. It is desirable that the heating power, the interval of energization, and the order of the four sub heating coils SC1 to SC4 are selected based on experiment results of various cooking menus because the generated intensity of the convection is affected greatly by the viscosity of the liquid of the object to be cooked even when the same sub heating coils are heat driven with the same heating power in actuality.

With this first convection acceleration control, it will be possible to carry out a cooking method (heating method) such as heating the pan surface of a frying pan and the like, that is, preheating the side of the pan as well by driving (setting to an ON state) the four sub heating coils SC1 to SC4 (that is disposed on the same circumference with a predetermined interval) corresponding to the periphery of the heated object N.

Fig. 4 is an explanatory diagram illustrating the distribution timings of the currents flowing in the main heating coil MC and the sub heating coils SC1 to SC4. "ON" indicates an ON state in which high-frequency current is applied to the coils that is to be heat driven, and "OFF" indicates an OFF state in which current is not applied.

In Fig. 4, as indicated by a broken line, the main heating coil MC is not energized. During this unenergized period, a group of sub heating coils including half or more and less then all of the sub heating coils, in this example, a group of a pair of sub heating coils constituted by two neighboring sub heating coils, performs induction heating.

As it can be understood from Fig. 4, in the first energization interval (hereinafter, the energization interval will be abbreviated to an "interval") T1 that is set at a predetermined time interval, the sub heating coils SC1 and SC2 are ON, and in the next interval T2, the sub heating coil SC1 is turned OFF while SC2 is kept ON. SC3 is turned ON.

In the next interval T3, the sub heating coil SC1 is kept OFF while SC2 is turned OFF. SC3 is kept ON and SC4 is turned on anew. In the next interval T4, SC3 is turned OFF. SC4 is kept ON and SC1 is turned on anew. As mentioned above, each of the intervals T1 to T4 shown in this diagram may be about 10 to 15 seconds. Subsequently, the currents flowing in the sub heating coils SC1 to SC4 are turned ON and OFF in a predetermined time interval.

### (Modification of Group of Sub Heating Coils)

Note, in Embodiment 1, although the constitution of the sub heating coils making up the group is changed in each of the intervals (T1, T2, T3, and the like), the constitution may be unchanged and be fixed. For example, the sub heating coils may be divided into a group of SC1 and SC2 and a group of SC3 and SC4 at all times, and the two groups may be energized alternately such that while one group is ON, the other group is OFF.

### (Modification of Sub Heating Coils)

As shown in Fig. 6,the four sub heating coils SC1 to SC4 may be reduced to two sub heating coils. That is, a right-side sub heating coil SCR shown in Fig. 6 is like a connection of the sub heating coils SC1 and SC2 illustrated in Figs. 1 to 3 and the entirety is curved extending along substantially the entire right side of the peripheral line of the main heating coil MC. The entirety of a left sub heating coil SCL has a curved shape extending along substantially the entire left side of the peripheral line of the main heating coil MC. The left sub heating coil SCL has a shape that is bilaterally symmetrical with the center point X1 of the main heating coil in between.

The right sub heating coil SCR and the left sub heating coil SCL are completely the same sub heating coils. These sub heating coils can be commonly used by just changing their disposed orientation. Further, the breadth of the two sub heating coils SCR and SCL are about half of the radius of the main heating coil MC. When the diameter of the main heating coil MC is about 180 to 200 mm, the breath of each of the sub heating coils SCR and SCL is about 45 to 50 mm. In order to increase the degree of flatness and further elongate its shape, there lies many technical constrains such as the winding method of the assembled wires.

In this modification, when high-frequency current is alternately applied in a predetermined interval (the interval does not have to be uniform) to the sub heating coil SCR on the right side and left sub heating coil SC from the respective one of the inverter circuits, since the right peripheral line and the left peripheral line of the heated object N are alternately and intensively induction heated, convection is alternately generated in the object to be cooked from the right and the left. In this case as well, it is effective to set the heating power of the sub heating coil SCR on the right side performing heating alone or the heating power of the left sub heating coil SCL performing heating alone during the convection acceleration mode to be higher than the heating power of the sub heating coil SCR on the right side and the heating power of the left sub heating coil SCL during induction heating with maximum heating power while the right and left side sub heating coils SCR and SCL are in an ON state. Note that an arrow IA illustrated on the main heating coil MC indicates the direction of a high-frequency current IA that flows in the main heating coil MC when the coil is driven.

In view of heating efficiency, it is preferable that when the main heating coil MC and either or both of the right sub heating coil SCR and the left sub heating coil SCL are simultaneously heat driven, the direction of the high-frequency current IA flowing in the main heating coil MC and the direction of the high-frequency current IB flowing in each of the left and right sub heating coils SCR and SCL are the same on the adjacent sides as shown by solid-line arrows in Fig. 6 (In Fig. 6, a case in which the direction is clockwise in the main heating coil MC and anticlockwise in the left and right sub heating coils SCR and SCL is shown). This is because, in an area where two independent coils are adjacent to each other, when the currents of the coils flow in the same direction, the magnetic fluxes generated by the currents intensifies each other, the density of the magnetic flux that interlink with the heated object N is increased, and more eddy current is generated on the bottom side of the heated object; hence, efficient induction heating is enabled.

The heating power of 3 kW--when the three coils, namely the right sub heating coil SCR, left sub heating coil SCL, and the main heating coil MC, are simultaneously heating a single pan, and when the right sub heating coil SCR is set to 1 kW, the left sub heating coil SCL is set to 1 kW, and the main heating coil MC is set to 1 kW--is, in the case of the above described convection acceleration mode, set such that the right sub heating coil SCR is set to 1.5 kW and the left sub heating coil SCL is also set to 1.5 kW while the two are alternately switched to an ON state. Note that when the number of sub heating coils is reduced to two, it will be possible to reduce the driven number of inverter circuits; hence, advantages such as cost reduction due to reduction in circuit configuration and miniaturization due to reduction in area of the circuit board can be anticipated.

As it is apparent from the modification in Fig. 6, the first convection acceleration control includes a top plate on which a heated object such as a pan for holding an object to be cooked is placed, an annular main heating coil MC disposed below the top plate, flat first sub heating coil SCR and second sub heating coil SCL that are adjoinedly disposed on the both sides of the main heating coil and that has a width that is smaller than the radius of the main heating coil, inverter circuits that each supply induction heating power to the main heating coil MC and the first and second sub heating coils SCR and SCL, a control unit that controls the output of each inverter circuit, an operating unit that instructs the start of heating and the heating power settings to the control unit. The control unit repeats the energization switching operation of the first and the second sub heating coils for a plural number of times such that the second sub heating coil is supplied with induction heating power from the relevant inverter circuit during a time period in which the first sub heating coil is not supplied with the induction heating power, and subsequently, the first sub heating coil is supplied with induction heating power from the relevant inverter circuit during a time period in which the supply of the induction heating power to the second sub heating coil is stopped.

As described above, in Embodiment 1, it is possible to easily select the intended cooking menu since in the display means E that displays the heating condition, selection keys E1, E2, and E3 of the first, second, and third selection section are displayed in form of keys such as a capacitance switch that enables selection operation by the user. With the selection, the control unit automatically determines the suitable heat driving pattern, and, thus, it will be possible to perform cooking with a heating coil driving form according to the intent and desire of the user such as prioritization of heating time or prioritization of uniformity of temperature. Since the selection key for the cooking menu is made operable in the display unit, an advantage such as elimination of improper use by the user and alleviation of mental stress can be enjoyed.

As regards an application of the modification, there is one that enables generation of a different convection route by alternating the energization period of the main heating coil MC at the center and that of the right sub heating coil SCR and the left sub heating coil SCL. For example, the right sub heating coil SCR is first driven for 15 seconds with a heating power of 1 kW, then the left sub heating coil is driven for 15 seconds with a heating power of 1 kW. After repeating this two times, the main heating coil MC is driven alone for 15 seconds with a heating power of 1 kW. With the above, it will be possible to create convection that ascends from above the main heating coil MC and that spreads out radially to the peripheral line side of the pan. With the above, including the convection with a long route created by heating the bottom of the pan in its outer circumference with the left and right sub heating coils SCR and SCL, it will be possible to create two types of convections. As such, stirring effect and temperature uniformization of the entire object to be cooked in the pan and suppression of boiling over can be anticipated.

### (Second Convection Acceleration Control)

In this control, during the period in which the main heating coil MC is not driven, the heated object N is heated by a group of more than two neighboring sub heating coils (also referred to as a "group") and driving power is made different between the groups of sub heating coils. That is, the control is characterized in that induction heating power higher than the power supplied to a first sub heating coil group is supplied to a second sub heating coil group, and, subsequently, the induction heating power supplied to the first sub heating coil group is reduced and power higher than this is supplied to the second sub heating coil group, and, further, this operation is repeated a plurality of times. In other words, it is a method in which, among the four sub heating coils, half or more and less than all of the sub heating coils constituting a group are simultaneously driven, and the driving power is changed in the remaining one or a group of sub heating coils such that the total heating power of the group of half or more and less than all of the sub heating coils is higher than the total heating power of the remaining one or a group of sub heating coils.

Subsequently, description will be given in detail.

As shown in Fig. 3(B), the high-frequency currents IB are simultaneously supplied to the two neighboring sub heating coils SC1 and SC2 among the four sub heating coils SC1 to SC4 from each of the inverter circuits SV1 and SIV2. In this case, a heating power of 1.0 kW (a second heating power) is set to each of the two sub heating coils SC1 and SC2. In this case, each of the two sub heating coils SC4 and SC3 that are at a position symmetric to the two sub heating coils SC1 to SC2 with the center point X1 in between are driven with a heating power of 500 W (a first heating power).

Next, as shown in Fig. 2(C), among the two sub heating coils SC1 and SC2 described above, while the heating power of SC1 is reduced by half to 500 W (the first heating power) and the heating power of SC2 is kept the same, the sub heating coil SC4 that is adjacent to SC2 is driven at 1.0 kW (the second heating power). SC3 is kept at 500 W (the first heating power).

Next, as shown in Fig. 2(D), among the two sub heating coils SC2 and SC4 described above, while the heating power of SC2 is reduced by half to 500 W and the heating power of SC4 is kept the same, the sub heating coil SC3 that is adjacent to SC4 is driven at 1.0 kW. SC1 is kept at 500 W.

As it is apparent from the above description, the control is characterized in that the group of two neighboring sub heating coils is driven with a high heating power and the group of the remaining two sub heating coils is driven with a lower heating power, and further the group with high heating power and the group with low heating power are switched such that the position of the portion where heating is intense is changed.

With this control, it will be possible to carry out cooking methods and heating methods such as heating the center portion of the frying pan and the like while effectively preheating the pan surface (side of the pan). Further, since the center portion of the pan heated by the sub heating coils SC1 to SC4 changes in the circumference of the main heating coil MC, when heating a thick cooked liquid with high viscosity, it will be possible to suppress local burning.

As such, the second convection acceleration control is a method in which main heating is carried out by a pair of two neighboring sub heating coils out of the four sub heating coils SC1 to SC4. In other words, it is a method of driving, among the four sub heating coils, half or more to less than all of the sub heating coils simultaneously and creating a difference between the driven heat power of the group of the remaining one or multiple sub heating coils and that of the half or more to less than all of the sub heating coils. The second convection acceleration control is implemented not only to a case with four sub heating coils SC1 to SC4. In a case in which, for example, six sub heating coils are used, three or four sub heating coils may be simultaneously driven. Note that it is preferable that the second heating power is twice or more of the first heating power; however, it may be 1.5 times or more. Further, in the method in which the four or more sub heating coils are divided into the first group that includes two neighboring sub heating coils and the other group (the second group), it is preferable that the total of the second heating power to the sub heating coils of the first group is twice or more of the total of the second heating power; however, it may be 1.5 times or more.

Furthermore, as shown in Fig. 6 which is a modification of the sub heating coils, two sub heating coils are provided in place of the four sub heating coils SC1 to SC4. This modification also applies to the second convection acceleration control. That is, a top plate in which a heated object such as a pan for holding a cooked object is placed, an annular main heating coil MC disposed below the top plate, flat first sub heating coil SCR and second sub heating coil SCL that are adjoinedly disposed on the both sides of the main heating coil and that has a width that is smaller than the radius of the main heating coil, inverter circuits that each supply induction heating power to the main heating coil MC and the first and second sub heating coils SCR and SCL, a control unit that controls the output of each inverter circuit, an operating unit that instructs the start of heating and the heating power settings to the control unit is included. The control unit supplies induction heating power that is higher than the power supplied to the first sub heating coil SCR from the relevant inverter circuit to the second sub heating coil SCL, and subsequently, reduces the induction heating power supplied to the second sub heating coil SCL and supplies power that is higher than this to the first sub heating coil SCR from the relevant inverter circuit. The control unit repeats the energization switching operation of the first and the second sub heating coils SCR and SCL for a plural number of times.

### (Third Convection Acceleration Control)

This control is related to the third aspect of the invention. At the same time period when the main heating coil MC is driven or when the main heating coil MC is suspended of its driving, heating of the heated object N is performed with the sub heating coils SC1 to SC4. That is, the characteristics of the third control are as below. The plurality of flat sub heating coils that has a width that is smaller than the radius of the main heating coil and that is disposed on both sides of the main heating coil are divided into the first group and the second group. The groups are disposed on the both sides of the main heating coil. During a time period in which induction heating power having the first heating power is continuously or intermittently supplied to the main heating coil, and under a state in which supply of induction heating power to the first group is stopped, a second heating power that is higher than the first heating power is supplied to the second group from the relevant inverter circuit. Subsequently, the induction heating power supplied to the first group is stopped, a third heating power that is higher than the first heating power is supplied to the second group from the relevant inverter circuit. The above operation is repeated for a plurality of times to generate convection with a long route in the object to be cooked inside the heated object. Even if no convection is created with the above, since the center portion of the pan heated by the sub heating coils SC1 to SC4 changes in the portion outside the circumference of the main heating coil MC, when heating a thick cooked liquid with high viscosity, it will be possible to suppress local burning.

Fig. 7 is a diagram illustrating the distribution timings of the currents flowing in the main heating coil MC and the sub heating coils SC1 to SC4. "ON" indicates an ON state in which high-frequency current is applied to the coils that is to be heat driven, and "OFF" indicates an OFF state in which current is not applied.

As indicated by a broken line in Fig. 7, the main heating coil MC is energized continuously from the first interval T1 to interval T4, but undergoes an unenergized period in the subsequent four intervals. Induction heating is performed by a group of half or more to less than all (in this example, two) of the sub heating coils during this energized and unenergized period. The control is characterized in that the total heating power during this induction heating is set to be higher than the heating power (first heating power) of the main heating coil "when driving for non-convection acceleration control".

The "when driving for non-convection acceleration control" indicates each of the below two cases. Note that when control is performed, the first heating power may not be determined by a condition that satisfies both of the below case, and the first heating power may be determined by either one of the case.
(1) When cooking is performed under normal operation in which the main heating coil MC and all of the sub heating coils are simultaneously driven to exert the maximum level of heating. For example, when the main heating coil MC and all of the sub heating coils are driven simultaneously, the maximum heating power setting is 3 kW, the heating is set to 3 kW, and the heating power ratio distributed to the main heating coil is 1 kW, then this 1 kW is the heating power of the main heating coil "when driving for non-convection acceleration control".
(2) In a case in which cooking is performed by heat driving the main heating coil MC alone in a regular manner, when the main heating coil MC is operated under its maximum heating power setting. For example, when the maximum heating power of the main heating coil MC alone is 1.2 kW, this 1.2 kW is the heating power of the main heating coil "when driving for non-convection acceleration control".

As it is apparent from Fig. 7, in all of the intervals, the group of half or more to less than all of the sub heating coils (first group) is constituted by the two sub heating coils SC1 and SC2 and the second group is constituted by the two coils SC3 and SC4. In the first interval T1, the first group is ON and the second group is OFF. In the next interval T2, the first group is turned OFF and the second group is turned ON.

In the next interval T3, the first group is turned ON again and the second group is turned OFF. Each of the intervals T1 to T4 shown in this diagram may be, for example, about 10 to 15 seconds. Subsequently, as above, the currents flowing in the sub heating coils of the first group and the second group are turned ON and OFF alternately in a predetermined time interval.

### (Modification of Third Convection Acceleration Control)

Fig. 8 is a diagram illustrating the distribution timings of the currents flowing in the main heating coil MC and the sub heating coils SC1 to SC4. "ON" indicates an ON state in which high-frequency current is applied to the coils that is to be heat driven, and "OFF" indicates an OFF state in which current is not applied. Regarding the sub heating coils, the group of sub heating coils (first group) is constituted by half or more to less than all of the sub heating coils, namely the two sub heating coils SC1 and SC2. On the other hand, the second group is constituted by the remaining two, that is, SC3 and SC4. The constitution of the groups are not changed during cooking such that the first group is fixed to the sub heating coils SC1 and SC2 at all times.

As indicated by a broken line in Fig. 8, the main heating coil MC is energized (with the first heating power) continuously from the first intervals T1 to T2, but undergoes an unenergized period in the subsequent four intervals (T3 to T6). During the induction heating period of the main coil MC (with the first heating power) in the first two intervals, the driving of all the four sub heating coils SC1 to SC4 are stopped.

In the next interval T3, the energization of the main heating coil MC is stopped. Alternatively, when in this interval T3, the sub heating coils of the first group are heat driven. The total heating power during this induction heating is a (second) heating power (1.5 kW or 2 kW, for example) that is higher than the first heating power (1 kW, for example) of the main heating coil. The second group of sub heating coils is not heat driven.

Next, when in interval T4, while energization of the main heating coil MC is still suspended, the heating to the sub heating coils of the first group is stopped in this interval T4. Alternatively, the sub heating coils SC3 and SC4 of the second group is heat driven. The total heating power during this induction heating is the (third) heating power (1.5 kW or 2 kW, for example) that is higher than the first heating power (1 kW) of the main heating coil. Note that the heating power of the third heating power and the second heating power are the same. As long as they are higher than the first heating power (1 kW), they do not have to be the same.

Next, when in interval T5, while energization of the main heating coil MC is still suspended, in this interval T5, the heat driving to the sub heating coils of the first group is resumed. In this case, the total driven heat power of the two sub heating coils SC1 and SC2 are set to the second heating power (1.5 kW or 2 kW, for example) that is higher than the first heating power. In this interval T5, the heating of sub heating coils SC3 and SC4 of the second group are stopped.

Next, when in interval T6, while energization of the main heating coil MC is still suspended, in this interval T6, the heating to the sub heating coils of the first group is stopped once again, and, alternatively, the second group is heat driven. In this case, the total driven heat power of the two sub heating coils SC3 and SC4 of the second group is set to the third heating power that is higher than the first heating power.

In the next interval T7, the energization of the main heating coil MC is resumed. At this time, the heating power is set to the first heating power. Further, in this interval T7, the sub heating coils of the first group are heat driven again. In this case, the total driven heating power of the two sub heating coils SC1 and SC2 of the first group is set to heating power 2 that is higher than the first heating power. The heating of the second group is suspended.

Next, when in interval T8, while energization of the main heating coil MC is maintained at heating power 1, the heating to the sub heating coils SC1 and SC2 of the first group is stopped. Alternatively, the sub heating coils of the second group are heat driven once again. In this case, the heating power level is set to the third heating power.

As above, the main heating coil MC is heat driven in two intervals, and the heating thereof is suspended in four intervals. Hereafter, it is a repetition of the above. Meanwhile, the sub heating coils of the first and second groups follow a pattern in which heating is suspended for four intervals, and, then, heat driving is performed once in every other interval alternately. Note that symbol (A) has been attached to interval T1 of Fig. 8, (B) to interval T3, (C) to interval T4, and (D) to interval T7. The intervals (A), (B), (C), and (D) correspond to (A), (B), (C), and (D) of Fig. 9. The sequential switching of the driving period in Fig. 9 can be understood. As such, there is a total of five energization patterns.

Note that the preferable timing for switching the energization, that is, each interval (T1 to T9, etc.) is not the same among objects to be cooked; however, switching is started at least from after the object to be cooked reaches its boiling temperature or when close to 100°C that is immediately before start of boiling. From then on, the switching is performed at, for example, a 10 to 15 second interval. Alternatively, when a 30-minute stew cooking is set, the switching may be started five minutes before the end of cooking and be performed for 5 minutes until the end of cooking.

It is desirable that the heating level, the interval of energization, and the order are selected based on experiment results of various cooking menus because the intensity of the convection, generated by the difference in heating powers between the first, second, and third heating powers or the absolute value of each of the first, second, and third heating power, is greatly affected in actuality by the viscosity of the liquid of the object to be cooked when the main heating coil MC and the sub heating coils are heat driven with the first and second heating powers.

Specific examples of the above when applied to actual cooking menus will be described below.

For example, a case in which the cooking menu "boiling" is carried out at 2.0 kW will be described.

As described above, since the default value is 2.0 kW, heating is started at 2.0 kW from the start with no need to initially input 2.0 kW to the heating power setting unit (not shown). In this case, the main-sub heating power ratio is automatically determined by the energization control circuit 200 such that there is no need for the user to arbitrary set the ratio. For example, the heating power of the main heating coil MC is set to 800 W and the total heating power of the four sub heating coils is set to 1200 W (that is higher than the "first heating power").

Then, when water starts to boil (when the control unit estimates that the water is in a boiling state from information such as the temperature of the heated object N and the change in the degree of temperature rise detected by a temperature sensor) after being heated at 2.0 kW, the energization control circuit 200 issues a notification signal which is then displayed to notify the user of boiling by means of characters and light on the display means G that displays the operating condition of the heating means. At this time, if the heating power is not set once more, automatic reduction of the heating power is notified.

If the user does not perform any operation, the energization control circuit 200 outputs a signal commanding reduction of heating power to the main inverter circuit MIV and the sub inverter circuits SIV1 to SIV4 when a boiling state is reached. For example, the heating power of the main heating coil MC is set to 300 W and the total heating power of the four sub heating coils is set to 300 W.

This state is continued for 30 minutes at the longest. If no user operation is performed during this period, driving of all the induction heating sources are automatically stopped. Until this step in which boiling starts, directions of the high-frequency currents in the adjacent areas of the main heating coil MC and the sub heating coils SC1 to SC4 are controlled to coincide each other.

On the other hand, if the user sets the heating power once more after start of boiling, the third convection acceleration control is performed automatically.

For example, if the user increases the heating power to 2.0 kW rather than leaving it at the default value (600 W) after start of boiling, the energization control circuit 200 sets the heating power (first heating power) of the main heating coil MC to 500 W (first heating power), the total heating power of the two neighboring sub heating coils to 1.5 kW, and the total heating power (third heating power) of the other group of sub heating coils to 1.5 kW.

While the main heating coil MC is continuously driven at 500 W, the four adjacent sub heating coils are divided into two groups such as a group of two sub heating coils SC1 and SC2, and a group of two sub heating coils SC3 and SC4, the two groups are alternately heat driven for 15 seconds each at a total of 1.5 kW (heating power of 750 W is input to a single sub heating coil).

Further, if the user increases the heating power to 3.0 kW, which is the maximum heating power, rather than to 2 kW after start of boiling, the energization control circuit 200 sets the heating power (first heating power) of the main heating coil MC to 1.0 kW (first heating power), the total heating power of the two neighboring sub heating coils to 2.0 kW, and the total heating power (third heating power) of the other group of sub heating coils to 2.0 kW.

Until the step in which boiling starts, the directions of the high-frequency currents in the areas in which the main heating coil MC and each of the sub heating coils SC1 to SC4 are adjacent to each other are controlled to be the same so that high heating power can be exerted; however, after start of boiling, the currents are switched to opposite directions. For example, in the adjacent area of the main heating coil MC and the sub heating coil SC1, and the adjacent area of the main heating coil MC and the sub heating coil SC2, the directions of the high-frequency currents are made to counter each other.

Note that in the above description, when the heating power after the start of boiling is set to 2 kW, a method is used in which the main heating coil MC is intermittently driven at 500 W; however, the main heating coil MC may be driven continuously. In either case, it is for generating more convection with at least two adjacent sub heating coils. That is, specific gravity of the object to be cooked at the peripheral line becomes low since the object to be cooked is induction heated alternately with the two groups of sub heating coils at a position near, to the greatest extent possible, to the periphery of the heated object N. Note that the invention is not limited to the above-described exemplary heating power of the main heating coil MC and the exemplary total heating power of the sub heating coils.

Further, in order to increase the convection acceleration effect, it is preferable that the heating at the peripheral line of the heated object N is more intense than the heating at its center portion. Assuming that the main heating coil MC is set to 1.5 kW as a first heating power and the total of the plural adjacent sub heating coils out of the sub heating coils SC1 to SC4 is set to 1.5 kW (as a second heating power), by carrying out the energization rate control of the main heating coil MC at all times such that the energization rate is switched to 50% during the time after start of boiling, the heating power will be substantially equivalent to 750 W. In such a case as above, it is possible to obtain the convection acceleration effect of the present invention as well.

As shown in Fig. 3, the "time selective" energization switching control of the sub heating coils SC1 to SC4 can suppress boiling over when stewing and boiling. That is, as in the above-described "water-boiling and heat-retaining mode", when in the boiling stage after the start of boiling with the cooking menu putting priority on heating speed and uniformity, it will be possible to avert a state in which the center or a specific single position of the pan is intensively heated, which is equivalent to sequentially moving the bottom of the pan that is induction heated, by performing energization switching control of the sub heating coils SC1 to SC4 as shown in Fig. 3.

The portion of the sub heating coils that is energized heats the pan and, on the other hand, the pan bottom portion above the portion of the sub heating coils that is unenergized and that is away from the energized coils does not perform heating; however, the heat from the heated portion is transmitted through the pan bottom so as to perform preheating, thus, an advantageous effect of uniform distribution of heat to the entire object to be cooked in the pan can be anticipated. Note that "time selective" not only refers to a constant cycle (for example, 30 seconds), but also means that, during the same cooking menu, the switching cycle of the starting timing and the ending timing of the initial cycle may be changed, that is, the next cycle may be changed or that the cycle and the repetition number thereof may be changed depending on the cooking menu and the type of object to be cooked.

As such, the third convection acceleration control is a method in which a pair of two neighboring sub heating coils, out of the four sub heating coils SC1 to SC4, carries out heating of the peripheral part of the pan while the main heating coil heats the center portion thereof. In other words, it is a method of driving, among the four sub heating coils, half or more to less than all of the sub heating coils simultaneously and creating a difference between the driven heat power of the group of the remaining one or multiple sub heating coils and that of the half or more to less than all of the sub heating coils. The second convection acceleration control is implemented not only to a case with four sub heating coils SC1 to SC4. In a case in which, for example, six sub heating coils are used, three or four sub heating coils may be simultaneously driven.

### (Modification of Group of Sub Heating Coils)

Note that in Embodiment 1, the sub heating coils constituting the groups of sub heating coils are fixed and is divided into a group of SC1 and SC2 and a group of SC3 and SC4 throughout all of the intervals (T1, T2, T3, and the like); however, it may be changed in a predetermined time interval. For example, as shown in Fig. 4, it may be changed in each interval. That is, the combination of the two sub heating coils constituting a group may be sequentially changed in the clockwise direction or in the right-handed direction.

Note that as a modification of the sub heating coils, the four sub heating coils SC1 to SC4 are integrated into two sub heating coils (see Fig. 6) in the first convection acceleration control. This modification also applies to the third convection acceleration control.

That is, the third convection acceleration control, which uses the first and second sub heating coils SCR and SCL, includes a heated object N such as a pan for holding in an object to be cooked, a top plate on which the heated object is placed, an annular main heating coil MC disposed below the top plate, flat first sub heating coil SCR and second sub heating coil SCL that are each adjoinedly disposed on the respective side of the main heating coil and that has a width that is smaller than the radius of the main heating coil, inverter circuits that each supply induction heating power to the main heating coil MC and the first and second sub heating coils SCR and SCL, a control unit that controls the output of each inverter circuit, an operating unit that instructs the start of heating and the heating power settings to the control unit. The control unit repeats the energization switching operation of the first and the second sub heating coils SCR and SCL a plurality of times such that the first sub heating coil SCR is supplied with induction heating power having a second heating power (1.2 kW, for example) that is higher than a first heating power from the relevant inverter circuit during a time period in which the main heating coil MC is supplied with the induction heating power with the first heating power (800 W, for example), and subsequently, supply of induction heating power to the first sub heating coil SCR is stopped and the second sub heating coil SCL is supplied with induction heating power having a third heating power (1.2 kW, for example) that is higher than the first heating power from the relevant inverter circuit.

In the above case, as it has been described above, in view of heating efficiency, it is preferable that when the main heating coil MC and the right sub heating coil SCR or the left sub heating coil SCL is simultaneously heat driven, the direction of the high-frequency current IA flowing in the main heating coil MC and the high-frequency current IB flowing in each of the left and right sub heating coils SCR and SCL are the same on the adjacent sides as shown by solid-line arrows in Fig. 6. Accordingly, in the convection acceleration mode, in an area where two independent coils are adjacent to each other, when the currents of the coils are controlled so as to flow in the same direction, the magnetic fluxes generated by the currents intensifies each other, the density of the magnetic flux that interlink with the heated object N is increased, more eddy current is generated on the bottom side of the heated object, and efficient induction heating is enabled. Hence it is possible to effectively perform heating for causing convection.

Next, the overall structure of the cooking system employing induction heating sources as above will be described. Referring to Fig. 10, the entirety of the top side of the main body A is covered by a top plate 21, of which its periphery is covered by a metal frame (also referred to as an "upper frame") 20 of a picture frame shape.

"20B" is a right vent hole that is formed on the right rear portion of the frame 20, "20C" is a center vent hole that is formed on the center rear portion of the frame 20, and "20D" is, similarly, a left vent hole that is formed on the left rear portion of the frame 20. After indoor air is forcibly introduced into the internal space of the main body A from the left and right vent holes 20B and 20D and is made to cool the induction heating sources, the semiconductor parts for power control, and the like, the air is discharged from the center vent hole 20C.

In a space below the top plate 21, a left induction heating source (hereinafter, referred to as a "left IH heat source") 6L and a right induction heating source (hereinafter, referred to as a "right IH heat source") 6R are disposed in a bilaterally symmetrical position with a left-right center line CL1 of the top plate 21 in between. As illustrated in Figs. 1 to 3, the right IH heat source 6R has an arrangement in which each of the sub heating coils SC1 to SC4 are disposed in the respective front, back, left, and right of the main heating coil MC.

Basically, the left IH heat source 6L has the same structure as that of the right IH heat source 6R; however, the left IH heat source 6L has a structure in which the four sub heating coils SC1 to SC4 are positioned so that they are 45 degrees turned in the clockwise direction compared with the right IH heat source 6R when disposed in the main body A.
A center point X2 of the right IH heat source 6R and a center point X1 of the left IH heat source 6L are both positioned on a straight line VL that passes through the center of the front-rear direction of the main body A. Note that "SL" is a straight line that intersects the straight line VL at the center point X1 at a 45 degree angle. As illustrated in Fig. 10, the straight line SL traverses the center portion of each of the sub heating coils SC2 and SC3. Note that the main coil MC is slightly of an elliptical shape slightly long in the straight line SL direction. Accordingly, the distance between the facing sub heating coils SC2 and SC3 is slightly larger than the distance between the facing sub heating coils SC1 and SC4. With such a structure, it is possible to place and use an elliptical pan with a larger major axis in the straight line SL direction.

"40" are first electrodes that are provided on the underside of the top plate 21 near the outer circumference of the right IH heat source 6R and the left IH heat source 6L. The first electrodes have a semicircular shape that covers the entire outer circumference side of the sub heating coil SC1 and the adjacent sub heating coil SC3. "42A" is one of the connecting terminals of each of the first electrodes 40, and "42B" is the other connecting terminal of each of the first electrodes 40. The static capacitance value of each of the first electrodes 40 between the two terminals 42A and 42B is input to the boiling-over detection unit 50 continuously at intervals of a predetermined short time (for example, one second or shorter). Note that, although not shown, on the basis of information from a temperature sensor of an infrared sensor type that detects the temperature of the heated object N from below the top plate 21, the energization control circuit 200 estimates the temperature of the heated object N and when the temperature has not risen to 100°C or to 98°C, renders the boiling-over detection unit 50 inoperable.

"41" are second electrodes that have a semicircular shape that covers the entire outer circumference side of the sub heating coil C2 and the adjacent sub heating coil SC4 "43A" is one of the connecting terminals of each of the second electrodes 41, and "43B" is the other connecting terminal of each of the second electrodes 41. The static capacitance value of each of the second electrodes 41 between the two terminals 43A and 43B is input to the boiling-over detection unit 50 continuously at intervals of a predetermined short time (for example, one second or shorter). Note that, although not shown, on the basis of information from a temperature sensor of an infrared sensor type that detects the temperature of the heated object N from below the top plate 21, the energization control circuit 200 estimates the temperature of the heated object N and when the temperature has not risen to 100°C or to 98°C, renders the boiling-over detection unit 50 inoperable.

In the Embodiment shown in Fig. 10, the first convection acceleration control described above is employed. Not that the constitution of the sub heating coils making up the group is not changed in each of the intervals (T1, T2, T3, and the like), as shown in Figs. 3 and 4, and the constitution is fixed. Specifically, the coils are constantly divided into the first group constituted by two sub heating coils SC1 and SC2 and into the second group constituted by two sub heating coils SC3 and SC4, and the two groups are alternately energized such that while one group is turned ON, the other group is turned OFF. This corresponds to an exemplary modification of the first convection acceleration control described above.

A "boiling-over detection operation" that is a characteristic of the invention will be described next.

At the start of cooking, the main heating coil MC and the four sub heating coils SC1 to SC4 are simultaneously heat driven. When the temperature sensor detects that the temperature of the object to be cooked in the heated object N has increased to 98°C or a boiling temperature above this, the energization control circuit 200 issues a command starting the first convection acceleration control to each of the inverter circuits SV1 to SIV4. Note that, as in the exemplary modification, in a case in which control is performed such that the energization of the main heating coil MC at the center portion and the energization of the right sub heating coil SCR and the left sub heating coil SCL are performed alternately, the energization control circuit 200, naturally, carries out the convection acceleration control with the main inverter circuit MIV as well.

With the continuation of the convection acceleration control, convection that rises straight up from the sub heating coils of the first and second groups can be created. This convection turns into convection that heads towards the opposite end of the pan that is a position far from the rising convection. With the above, convection with a long route is created in the heated object N by heating of the bottom of the pan in its outer circumference with the sub heating coils of the first and second groups, that is, with the four sub heating coils. As such, stirring effect and temperature uniformization of the entire object to be cooked in the pan and suppression of boiling over can be anticipated. However, with the proceeding of the cooking process, there are cases in which a small bubble created on the liquid surface of the object to be cooked increases gradually turning into a big rise. Further, there are cases in which the user casts in liquid seasoning, water, and other cooking soup into the heated object in the middle of cooking, raising concern of the liquid of the object to be cooked flowing over and boiling over the rim of the object to be cooked while the convection acceleration control is performed.

Accordingly, in the invention, a boiling-over detection operation such as the one below is performed as a countermeasure for the boiling over. When boiling over is detected, the energization control circuit 200 immediately issues a command to stop the driving of all of the inverter circuits or to reduce the heating power. As an example of reducing the heating power, as described above, when the user has set the heating power to one of the heating power out of the nine levels, for example, to 1 kW, then it is lowered three levels to 300 W. Alternatively, regardless of the employed heating level, the heating level is uniformly reduced to 300 W.

The boiling-over detection method will be described next. As below, regarding the boiling-over detection method, there are three methods; however, in Embodiment 1, method (3) is mainly employed. Methods (1) and (2) may be used at the same time in combination; however, the determination result of (3) is prioritized.

(1) Static capacitances of each of the first electrodes 40 and the second electrodes 41 are captured. As an example of this, the static capacitance value of each of the first electrodes 40 and the second electrodes 41 at the starting point of the convection acceleration control or the starting point of the boiling-over detection is set as a reference value, and the change from the reference value is captured. Accordingly, each of the static capacitances is stored in the boiling-over detection unit 50 at a predetermined time interval, each of the previous value is compared with the corresponding current value, and if the current value has increased, for example, by five percent compared to the previous value, it is determined that boiling over has been detected.
   Alternatively, a range of change of each of the static capacitances of the first electrodes 40 and the second electrodes 41 at the starting point of the convection acceleration control or the starting point of the boiling-over detection is set. For example, as the initial value as a reference, occurrence of boiling over is determined when there is an increase or decrease exceeding a range of 10% (from the previous value), compared to the previous value.
(2) The change of difference in the static capacitances between each of the first electrodes 40 and the corresponding one of the second electrodes 41 is captured. For example, when intercomparison between the static capacitance values is performed and when the ratio is 1:1 to 1:1.1, then it is determined that there is no boiling over. When it is 1:1.11 or over, then it is determined that there is boiling over.
(3) Static capacitance value of each of the first electrodes 40 and the second electrodes 41 at the starting point of the convection acceleration control or the starting point of the boiling-over detection is set as a reference value, and the change in the static capacitance value of each of the first electrodes 40 and the second electrodes 41 near the outer circumference side of the heat driven (single or group of) sub heating coil(s) is captured. For example, when a group of sub heating coils SC1 and SC3 and a group of sub heating coils SC2 and SC4 are alternately heat driven at a 15 second interval each at 1 kW, during the period in which the sub heating coils SC1 and SC3 are driven, the static capacitance change of the first electrode 40 is preferentially captured to determine whether boiling over has occurred. Here "preferentially" refers to "even if there is no change in static capacitance on the second electrode 41 side, when change in the static capacitance on the first electrode 40 side exceeds a predetermined value". The operation detecting each of the static capacitance value of the first electrode 40 and the second electrode 41 may be switched so as to be synchronized with the heat driving operation of the group of sub heating coils SC1 and SC3 and the group of sub heating coils SC2 and SC4, respectively. With the above, boiling-over detection operation is performed only by the first electrode 40 when only the group of sub heating coils SC1 and SC3 is heat driven.

In a case in which the group of sub heating coils SC1 and SC3 and the group of sub heating coils SC2 and SC4 are alternately heat driven at predetermined time intervals, for example, at a 15 second interval, when watching the movement of the cooked liquid, one can observe a tendency of the surface of the cooked liquid on the group of heat driven sub heating coils SC1 and SC3 side being lifted up due to the convection. This can be observed especially when heat driving with high heating power. That is, since assumption of the object to be cooked flowing over the rim of the pan and the like due to this lifting up phenomenon can be made, when boiling-over detection is carried out with the electrode that is near the sub heating coil(s) that is on the heat driven side, it will be possible to detect the boiling over in a short time in case there is one. As such, reliability of boiling-over detection can be improved.

Note that a boiling-over detection in a case in which heat cooking is carried out with the right IH heat source 6R has been described above. As illustrated in Fig. 10, a case in which simultaneous induction heating is carried out with the left IH heat source 6L will be described below.

As above, in the right IH heat source 6R, while the sub heating coils SC1 and SC3 of the first group are heat driven, the first electrode 40 that is close to the first group performs boiling-over detection; however, in a case in which heat cooking is simultaneously performed with the left IH heat source 6L, the boiling-over detection method of the right IH heat source 6R changes.

Specifically, during the period in which the sub heating coils SC1 and SC3 of the first group are heat driven, not only the first electrode 40 that is near the first group, the second electrode 41 positioned farther away also performs boiling-over detection.

In this case, regarding the left IH heat source 6L, when boiling over is detected by the electrode that is near the sub heating coil(s) that is on the heat driven side, naturally, it will be possible to detect the boiling over in a short time when there is one, and reliability of the boiling-over detection can be improved. During the period in which the sub heating coils SC1 and SC3 of the first group is heat driven, boiling-over detection is also performed in the left IH heating source 6L with the first electrode 40, and during the period in which the sub heating coils SC2 and SC4 of the second group are heat driven, boiling-over detection is performed in the left IH heating source 6L with the second electrode 41. Note that supplementarily detecting whether there is any boiling over in the neighboring heat source as above is carried out when, in view of the cooking content and cooking progress of the neighboring heat source, the cooking that is close to a boiling state is carried out or cooking immediately before the boiling state is carried out. In other words, it is carried out when cooking is in a process in which boiling over is apt to occur. Accordingly, the relationship in which the boiling-over electrode of the right IH heat source 6R detects the boiling over of the left IH heat source 6L, and vice versa, is not established at all times. Basically, the left and right IH heat source 6R and 6L carries out boiling-over detection with the two electrodes that are disposed therein. It is because the boiling-over detection unit 50 is shared by the left and right IH heat source 6R and 6L and the energization control circuit 200 integrally controls the operation of all the induction heating source that enables boiling-over detection information to be mutually used and a further precise boiling-over detection to be carried out.

Note that the first and second electrodes 40 and 41 are positioned far from the main heating coil MC and have a curved shape extending along the shape of the peripheral line of the sub heating coils SC1 to SC4, and, thus, are less likely to be affected by the electric field generated during the driving of the sub heating coils and, it goes without saying, the main heating coil MC.

Further, if the first and second electrodes 40 and 41 are disposed longitudinally in the diameter direction of the main heating coil MC and in the width WA direction of the sub heating coils such that they are close to the main heating coil MC and the sub heating coils, then they will be affected by the magnetic field generated by the strong high-frequency current flowing in the coils, and there arises a concern of reduction in static capacitance during the induction heating operation avoiding accurate capturing of the change in static capacitance; however, there is no such concern in Embodiment 1. Further, since each of the terminals 42, 43, 44, and 45 of the electrodes 40 and 41 is disposed in the corresponding space formed between the end portions of the neighboring sub heating coils, there is an advantage in that the terminals are less affected by not only the magnetic field of the main heating coil MC but also the magnetic field generated when each of the sub heating coils SC1 to SC4 are driven.

### Embodiment 2

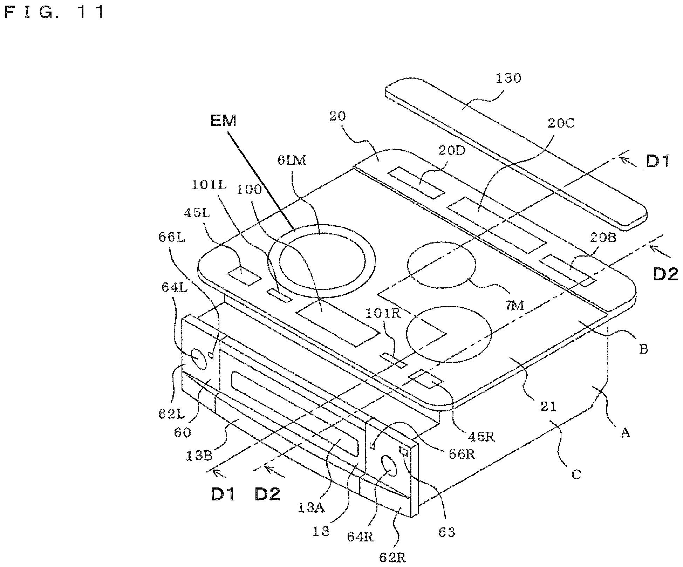

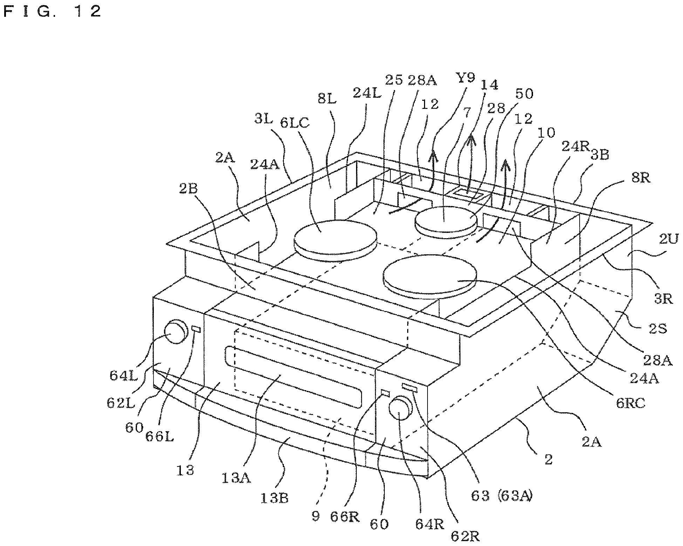

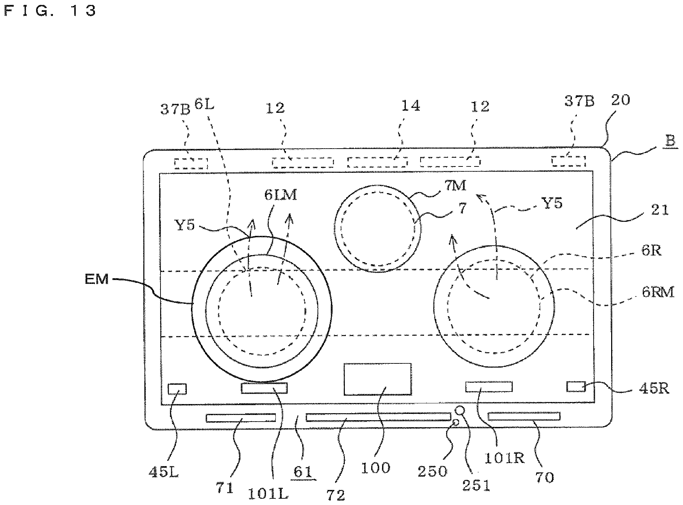

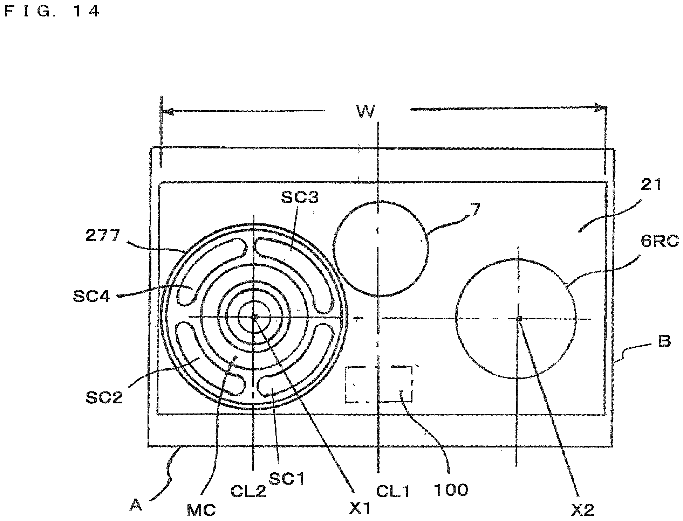

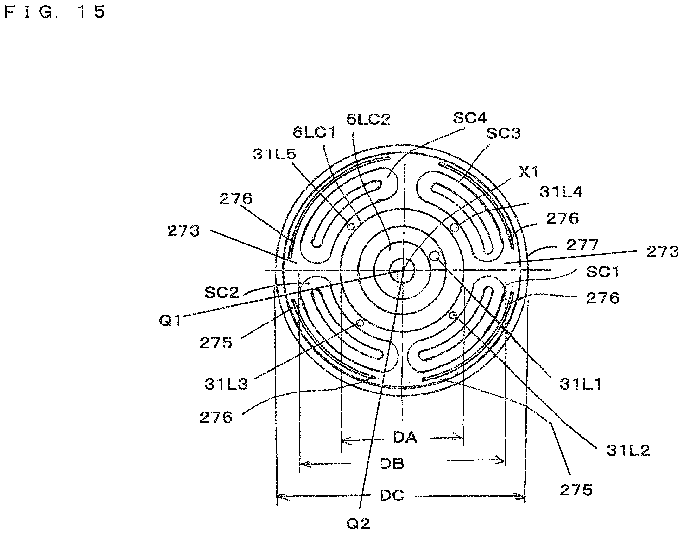

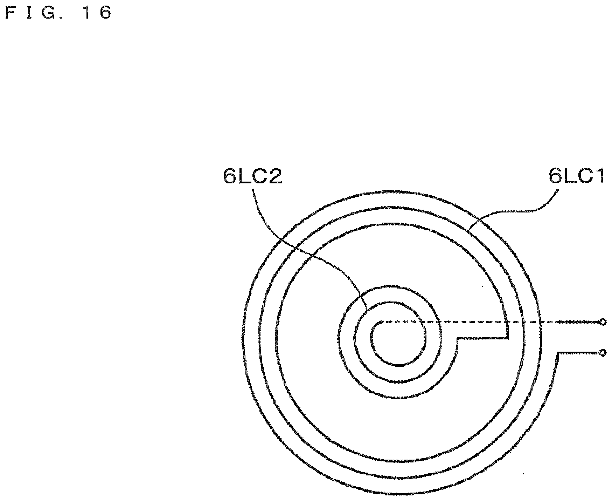

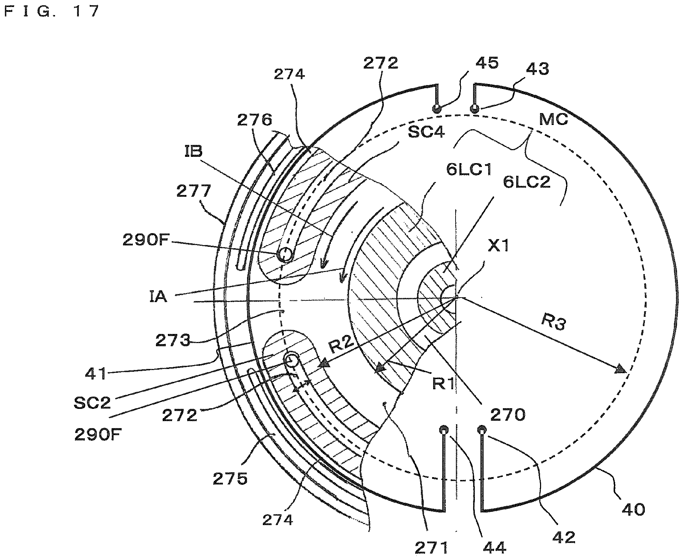

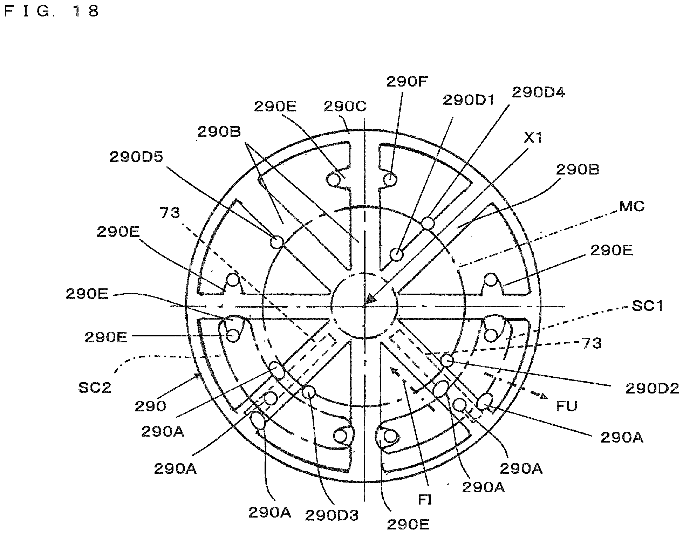

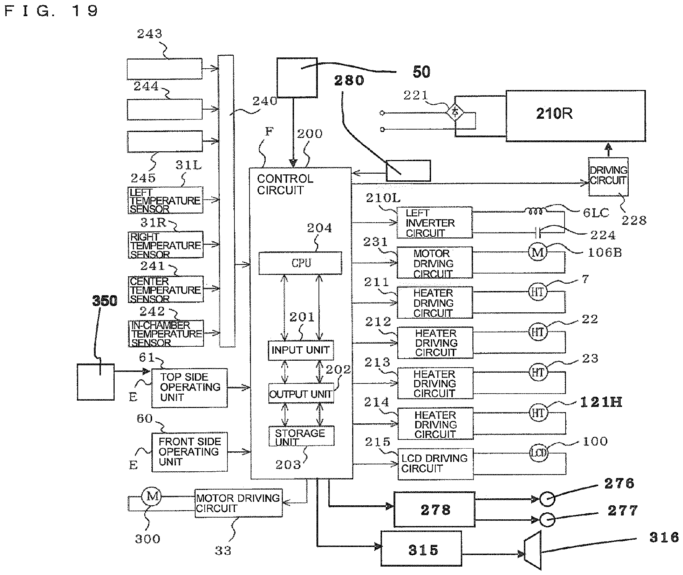

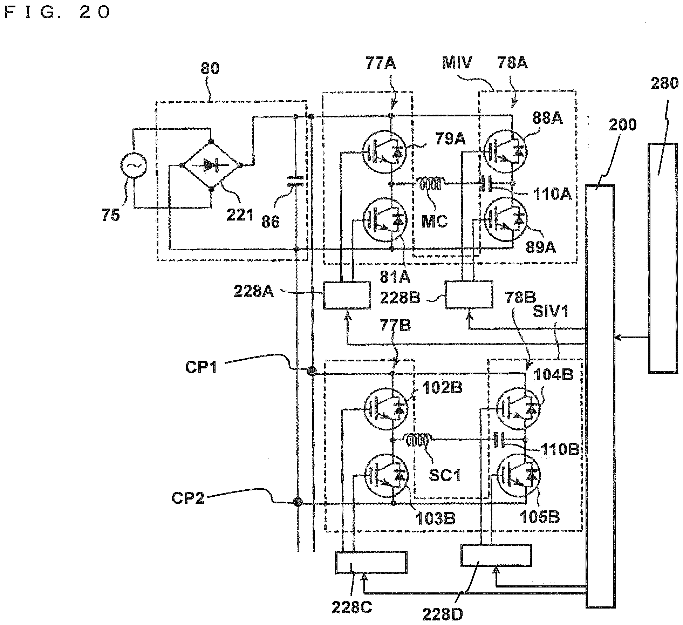

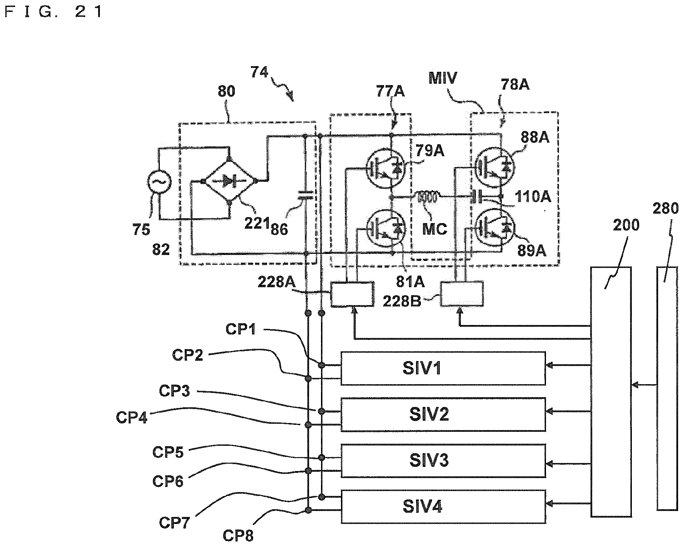

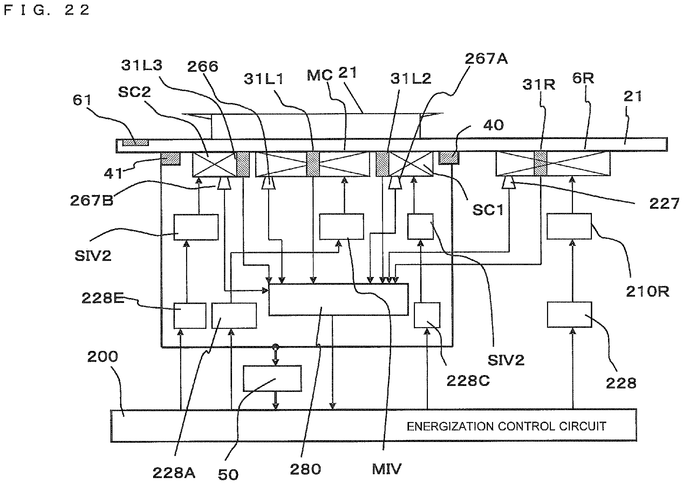

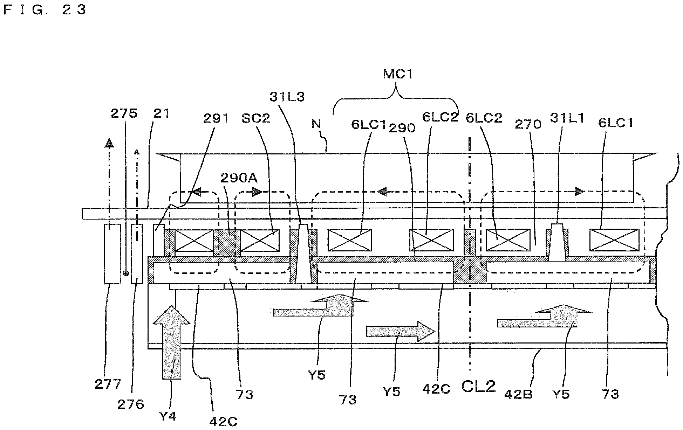

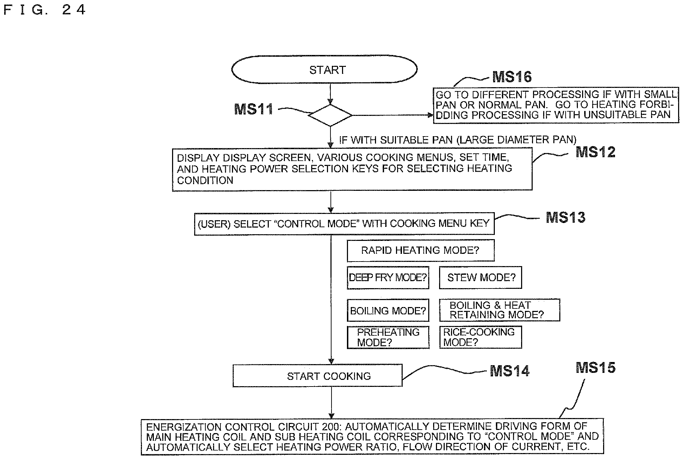

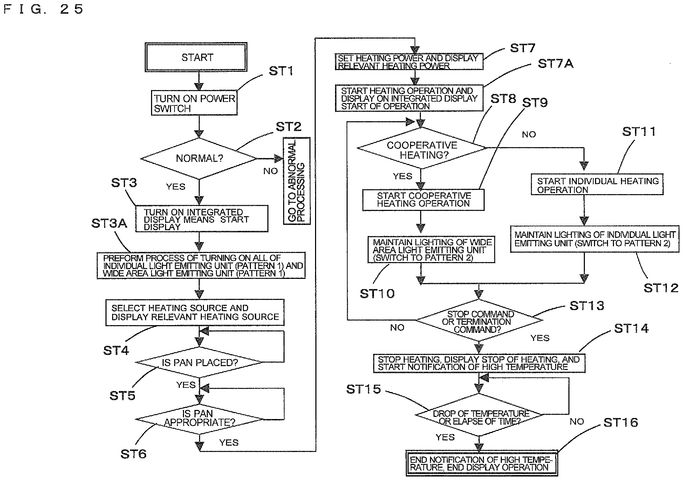

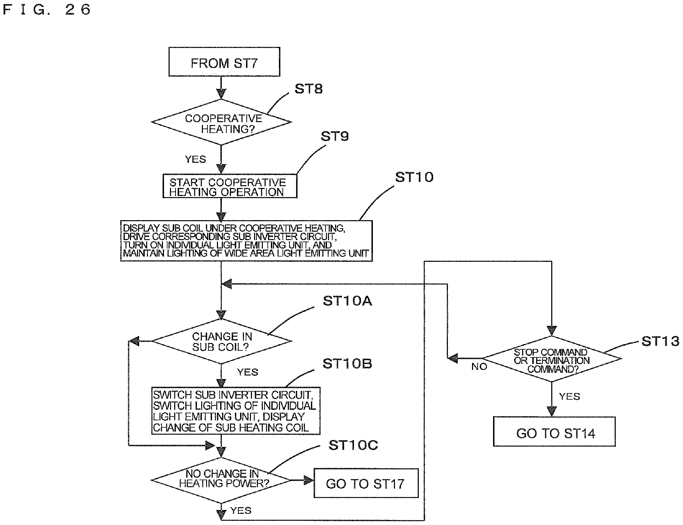

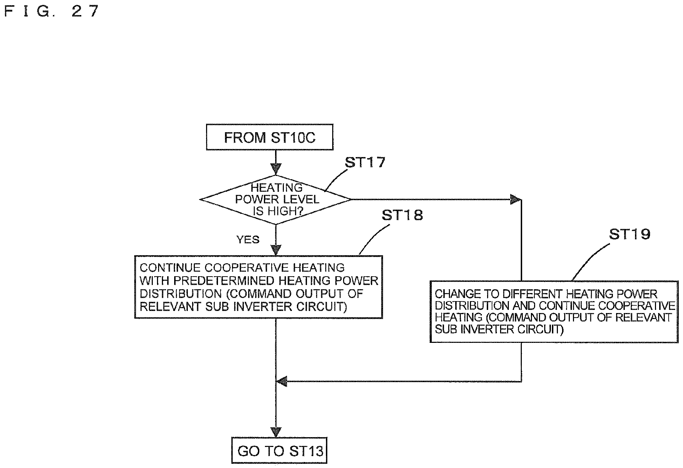

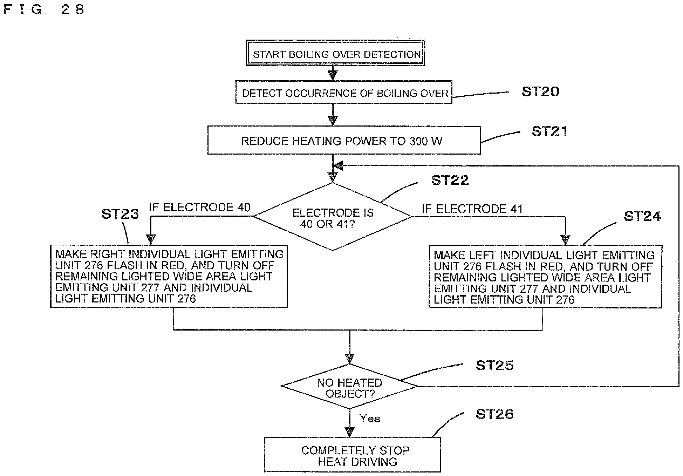

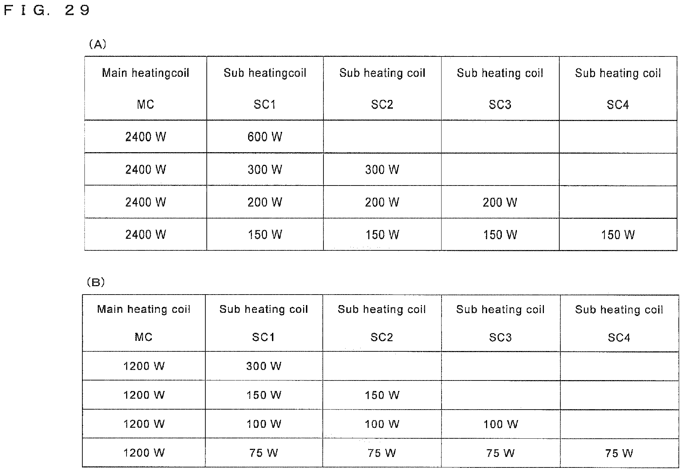

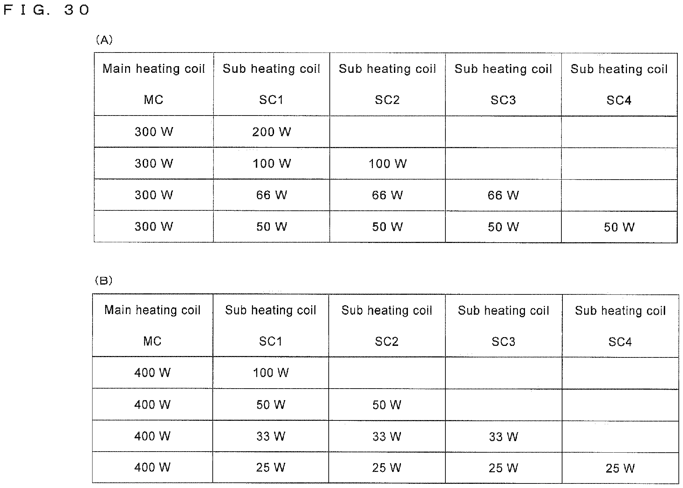

Figs. 11 to 30 illustrates an induction cooking system according to Embodiment 2 of the invention and Fig. 11 is a perspective view illustrating an entirety of the built-in induction cooking system according to Embodiment 2 of the invention with a partially exploded portion. Fig. 12 is a perspective view illustrating an entirety of the main body of the built-in induction cooking system according to Embodiment 2 of the invention in a state in which the top panel has been removed. Fig. 13 is a plan view illustrating the entirety of the main body of the built-in induction cooking system according to Embodiment 2 of the invention. Fig. 14 is a plan view illustrating an overall arrangement of the heating coils of the built-in induction cooking system according to Embodiment 2 of the invention. Fig. 15 is a plan view illustrating an induction heating source on the left side of the built-in induction cooking system according to Embodiment 2 of the invention. Fig. 16 is a wiring description of the main heating coil of the induction heating source on the left side of the built-in induction cooking system according to Embodiment 2 of the invention. Fig. 17 is an enlarged plan view of the main heating coil of the induction heating source on the left side and its peripheral area of the built-in induction cooking system according to Embodiment 2 of the invention. Fig. 18 is a plan view of a coil support of the main heating coil of the induction heating source on the left side of the built-in induction cooking system according to Embodiment 2 of the invention. Fig. 19 is a general drawing of a control circuit of the built-in induction cooking system according to Embodiment 2 of the invention. Fig. 20 is a diagram of a full bridge circuit that is the main portion of the control circuit of the built-in induction cooking system according to Embodiment 2 of the invention. Fig. 21 is a schematic diagram of the full bridge circuit that is the main portion of the control circuit of the built-in induction cooking system according to Embodiment 2 of the invention. Fig. 22 is a general block diagram of the built-in induction cooking system according to Embodiment 2 of the invention. Fig. 23 is a longitudinal sectional view illustrating a portion of the left IH heat source of the built-in induction cooking system according to Embodiment 2 of the invention. Fig. 24 is an explanatory diagram of control steps illustrating a basic heating operation of the entire built-in induction cooking system according to Embodiment 2 of the invention. Fig. 25 is a first flowchart of the control operation of the built-in induction cooking system according to Embodiment 2 of the invention. Fig. 26 is a second flowchart of the control operation of the built-in induction cooking system according to Embodiment 2 of the invention. Fig. 27 is a third flowchart illustrating a control operation of the built-in induction cooking system according to Embodiment 2 of the invention when the heating power is changed. Fig. 28 is a fourth flowchart illustrating a control operation of a boiling-over detection unit and the individual light emitting unit of the built-in induction cooking system according to Embodiment 2 of the invention. Fig. 29 are charts illustrating heating levels (electric power for heating) of the main heating coil MC and the sub heating coils SC1 to SC4 of the built-in induction cooking system according to Embodiment 2 of the invention when the heating power is 3 kW of 1.5kW. Fig. 30 are charts illustrating heating levels (electric power for heating) of the main heating coil MC and the sub heating coils SC1 to SC4 of the built-in induction cooking system according to Embodiment 2 of the invention when the heating power is 500 W. Note that similar or corresponding elements to Embodiment 1 are designated with like reference numerals. Further, unless specified otherwise, the terms used in Embodiment 1 are used with the same meaning in Embodiment 2.

### (Main Body of Cooking System)

The cooking system of Embodiment 2 also includes the single rectangular main body A, the top panel B that constitutes the top side of the main body A, the housing C constituting the periphery (outer wall) of the main body A other than the top side, the heating means D that heats a pan, foodstuff, and the like with electric energy and the like, the operation means E that is operated by the user, the control means F that controls the heating means upon reception of the signal from the operation means, and the display means G that displays the operating condition of the heating means. Further, as a part of the heating means D, electric heating means referred to as a grill chamber (grill heating chamber) or a roaster is included, as is described below.

The characteristics of the induction cooking system of Embodiment 2 is that, when with a normal sized pan and the like, heating is carried out in a conventional manner with the main heating coil MC, and when an circular pan or a large-sized oblong pan (also referred to as a "large-diameter pan") that has a diameter that is by far larger than that of a normal pan is placed over the induction heating portion, cooperative heating is carried out with the sub heating coil(s) SC1 to SC4 (provided on the circumference of the main heating coil MC in plural number) that is close to the placed position and the main heating coil, and in that only the individual light emitting unit that is disposed under the top plate 21 in a position corresponding to the outside of the relevant sub heating coil(s) SC is emitted or lighted so that the sub heating coil(s) SC performing cooperative heating operation can be specified.

Further, Embodiment 2 differs with Embodiment 1 above in that a wide area light emitting unit 277 that indicates the border of the wide area heating area, which is a wide area heating portion enabling cooperative heating with the main heating coil MC and all of the sub heating coils SC1 to SC4, is disposed under the top plate 21.

### (Main Body A)

As shown in Fig. 11, the entire top portion of the main body A is covered with the top panel B described later. The external shape of this main body A is formed with a size that will cover the installation opening K1 formed in the kitchen furniture (not shown) such as a sink cabinet and with a predetermined size that matches the space, and is formed into an approximate square or a rectangle.

A main body case 2 shown in Fig. 12 forms the outer walls of the housing C and includes a body 2A that is formed by folding a sheet of flat-shaped metal sheet a plurality of times with a press machine and a front flange plate 2B made of a metal sheet that is connected to the edge portion of this body by welding or by fixing means such as a rivet, screw or the like. In a state in which the front flange plate 2B is connected to the body 2A by the fixing means, the main-body case 2 is boxed shaped with an opened top side. The bottom portion on the rear side of this boxed shaped body 2A is an inclined portion 2S and above this is a vertical rear side wall 2U.

Three portions, that is, a rear edge, a right edge, and a left edge of the top side opening of the main body case 2 shown in Fig. 12 are each integrally bent outwards into an L-shape so as to form a flange. A flange 3B at the rear edge, a flange 3L on the left side, a flange 3R on the right side, and a front flange plate 2B are placed on the top side of the installation portion of the kitchen furniture and support the load of the cooking system.

Further, when the cooking system is in a state completely housed in the installation opening of the kitchen furniture, the front side of the cooking system is exposed from the opening that is formed in the front of the kitchen furniture, enabling the front side (left and right) operating units 60 (see Fig. 12) of the cooking system to be operable from the front side of the kitchen furniture.

An inclined portion 2S connects the rear side and the bottom side of the body 2A (see Fig. 12), and is cut so that it will not clash into and interfere with the rear edge portion of the installation opening of the kitchen furniture when the cooking system is fitted and installed into the kitchen furniture. That is, when fitting and installing this type of cooking system into the kitchen furniture, the front side of the main body A of the cooking system is inclined downwards and, in this state, the front side is first lowered into the installation opening of the kitchen furniture. Then, afterwards, the rear side is lowered into the installation opening in an arc (such an installation method is disclosed in detail in Japanese Unexamined Patent Application Publication No. 11-121155, for example). Due to such an installation method, the front flange plate 2B is sized so that a sufficient space is secured between an installation-opening front edge of the kitchen furniture when the cooking system is installed in the kitchen furniture.

The main body case 2 includes therein heat sources 6L and 6R for induction heating an heated object N such as a pan that is made of metal, for example, that has a magnetic property, in which the pan is placed on a top plate 21 described later; a central electric radiant heat source 7, such as one referred to as a radiant heater, which is an electric heater heating with radiant heat; the control means F described later that controls a cooking condition of the heating means; the operation means E described later that inputs the cooking condition to the control means; and the display means G that displays the operation condition of the heating means that has been input by the operation means. Each will be described in detail below.

Note that in Embodiment 2, it is assumed that, as a pan serving as the heated object N, a pan with a diameter of 12 cm or more is used. Variety of pans can be used, such as a pan (single-handled pan, double-handled pan, or the like) with a diameter of 16 cm, 18 cm, 20 cm, and 24 cm, and a frying pan with a diameter of 20 cm, a deep-frying pan with a diameter of 22 cm, a Chinese frying pan with a diameter of 29 cm, and the like.

As shown in Fig. 12, the housing C is partitionally formed therein with, in a broadly divided manner, a right side cooling chamber 8R that longitudinally extends in the front-rear direction, a left side cooling chamber 8L that longitudinally extends in the front-rear direction in the same manner, a box-shaped grill (or a roaster) heating chamber 9, an upper portion component chamber 10, and a rear portion exhaust hood 12. Note that each chamber is not completely isolated from each other. For example, the right cooling chamber 8R and the left side cooling chamber 8L are each in communication with the rear exhaust hoods 12 through the upper portion component chamber 10.

The grill heating chamber 9 is a substantially independent enclosed space when its front opening 9A is closed with the door 13 described later. The grill heating chamber is in communication with the external space of the housing C, that is, indoor space such as a kitchen, through the exhaust duct 14 (see Fig. 12).

### (Top Panel B)

As described below, the top panel B includes two large parts, namely, an upper frame (also known as frame body) 20 and the top plate (also known as upper plate, top glass, top) 21. The entire upper frame 20 is formed into a picture frame shape with a metal sheet such as a nonmagnetic stainless steel sheet or aluminum plate and has a size that covers the top side opening of the main body case 2 (see Fig. 13).

The top plate 21 has a breadth W (see Fig. 14) that completely covers a large opening provided in the center of the picture frame shaped upper frame 20 without any gap and is superimposed and installed above the main body case 2. This entire top plate 21 is formed of a transparent or a semitransparent material, such as a heat-resistant tempered glass, glass ceramics, and the like, in which visible ray of infrared light and LED penetrates therethrough and is formed in a rectangular or square shape so as to match the shape of the opening portion of the upper frame 20. Note that when transparent, the user can see all of the internal components from above the top plate 21 and this may degrade the look. Accordingly, there are cases in which paint for shielding is applied or printing of small dots or a grid that does not penetrate visible rays is performed on the surface or the back of the top plate 21.

Further, the front, rear, left, and right rims of the top plate 21 are fixed to the opening portion of the upper frame 20 in a water tight state with a rubber packing or a seal material (not shown) therebetween. Accordingly, water droplets penetrating from the top side of the top plate 21 through the gap formed between the facing upper frame 20 and top plate 21 into the interior of the main body A is prevented.

Referring to Fig. 11, a right vent hole 20B is formed by stamping, at the same time as the forming of the upper frame 20 with the press machine, and is an intake passage of a fan 30 (not shown). A center vent hole 20C is similarly formed by stamping when forming of the upper frame 20 is performed and a left vent hole 20D is similarly formed by stamping when forming of the upper frame 20 is performed. Note that in Fig. 11, although only the rear portion of the upper frame 20 is illustrated, as seen from above as in Fig. 13, the upper frame covers the entire top side of the main body case 2 in a picture frame manner.

During the actual cooking stage, there are cases in which the top plate 21 becomes 300 degrees C or higher by receiving heat from the heated object N such as a pan that has been heated to a high temperature by induction heating with the right side induction heating source 6R or the left side induction heating source which will be described in detail later. Further, if a central electric radiant heat source 7 that is an electric radiant heater described later is provided on the rear side of the top plate 21, there are cases in which the top plate 21 is directly heated to a high temperature by the heat from the central electric radiant heat source 7 to a temperature of 350 degrees C or higher.

On the top side of the top plate 21, as shown in Figs. 11 and 13, circular guide marks 6RM, 6LM, and 7M each indicating rough positions of the corresponding later described right IH heat source 6R, left IH heat source 6L, and the central electric radiant heat source 7 are displayed by means of printing and the like. The diameter of each of the left and right guide marks 6RM and 6LM is 220 mm.

### (Heating Means D)

The heating means D of Embodiment 2 of the invention includes the right IH heat source 6R that is arranged in the front portion on the right side position of the main body A; the left IH heat source 6L that is on the other side, that is, on the left side; the central electric radiant heat source 7 that is arranged on the rear portion side along a line that is a center of the left and right of the main body A; and a pair of upper and lower electric radiant heat sources 22 and 23 for the roster in the grill heating chamber 9. These heat sources are configured such that each energization is controlled independently by the control means F. Details will be described subsequently with reference to the drawings.

### (Right IH Heat Source)

The right IH heat source 6R is disposed in the upper portion component chamber 10 that is partitionally formed in the main body case 2. Additionally, a right IH heating coil 6RC is disposed on the bottom side of the top plate 21 on the right side. The top edge portion of this coil 6RC adjoins the bottom side of the top plate 21 with a minute gap therebetween, thus serving as an IH (induction) heat source. In Embodiment 1, one with a capacity in which the maximum electric power consumption (maximum heating power) is 3 kW is used, for example. The right IH heating coil 6RC is ultimately formed into a disc shape by bundling about 30 fine wires with a size of approximately 0.1 mm to 0.3 mm, twisting one or a plurality of this bundle (hereinafter, referred to as an "assembled wire"), and spirally winding this so that a circular outer shape is formed with a center point X2, shown in Fig. 14, as its cardinal point. The diameter (the maximum outer diameter) of the right IH heating coil 6RC is approximately 180 mm to 200 mm.

The position of a guide mark 6RM that is a circle (depicted by a solid line in Fig. 13) displayed on the top plate 21 may be matched completely with the outermost circumference of the right IH heating coil 6RC of the right IH heat source 6R; however, a complete match is not an essential requisite when carrying out the invention. Since the diameter of each of the above-described left and right guide marks 6RM and 6LM is 220 mm, if the diameter (the maximum outer diameter) of the right IH heating coil 6RC is 200 mm, then the position of the right guide mark 6RM will be immediately above the portion 10 mm outside the outermost peripheral line of the right IH heating coil 6RC. This guide mark 6RM merely indicates a proper induction heating region. The broken line circle on the right side in Fig. 11 shows an approximate position of the outermost circumference of the right IH heating coil 6RC.

### (Left IH Heat Source)

The left IH heat source 6L is disposed at a position that is line symmetric to the right IH heat source 6R relative to a left-right center line CL1 (see Fig. 14) of the main body A (with the left-right center line at the center). In Embodiment 1, one with a capacity in which the maximum electric power consumption (maximum heating power) is 3 kW is used, for example. Further, as shown in Fig. 15, the left IH heating coil 6LC has a circular outer shape, formed of two concentric portions, with a radius R1 with respect to a center point X1 as its cardinal point and its diameter (maximum outer diameter) is approximately 180 mm. However, this dimension is one that does not include sub heating coils SC described later. Further, the diameter 180 mm is the maximum outer diameter of an outer coil 6LC1 (corresponding to DA of Fig. 18) among the outer coil 6LC1 and inner 6LC2 described later that constitute the left IH heating coil. In order to distinguish between the sub coils SC described later, the outer coil 6LC1 and the inner coil 6LC2 that constitute the left IH heating coil 6LC are subsequently referred to as a "main heating coil MC" (see Fig. 17).

The position of a circular guide mark 6LM displayed on the top plate 21 may be matched completely with the outermost circumference of the left IH heating coil 6LC; however, a complete match is not an essential requisite when carrying out the invention. The guide mark indicates a proper induction heating region. The broken line on the left side in Fig. 13 shows an approximate position of the outermost circumference of the left IH heating coil 6LC.

A circular guide mark EM displayed on the top plate 21 indicates a large circular area (hereinafter, referred to as a "cooperative heating area mark") that covers the below-described main heating coil MC and all of the sub heating coils SC (four in total) arranged with substantially equal gaps in the front, rear, left, and right positions of the main heating coil MC. Further the position of this cooperative heating area mark EM almost conforms to the "wide area light emitting unit 277" described later that radiates light from below the top plate 21 to indicate the outer limit of the preferable placing position of the heated object when cooperatively heating with the main heating coil MC and the sub heating coils SC.

In a similar manner to the right IH heating coil 6RC, an infrared temperature detecting element (hereinafter, referred to as an "infrared sensor") 31L is disposed in a space in the left IH heating coil 6LC (see Figs. 15, 22, and 23). Details will be described later.

The IH heating coil 6LC of the left IH heat source 6 includes an outer coil 6LC1 and an inner coil 6LC2 divided in the radius direction. These two coils are, as shown in Fig. 16, a sequential unit connected in series. Note that the coil may be one in which the entirety is fixed into a single coil rather than one divided into two portions positioned with a space therebetween.

On the undersides (back side) of the left and right IH heating coils 6LC and 6RC, as shown in Figs.18 and 23, bars are disposed having a rectangular cross section formed of a high magnetic induction material, such as ferrite, as a magnetic flux leakage prevention material 73 of each heating coil. For example, the left IH heating coil 6LC is radially disposed from the center point X1 with 4, 6, or 8 of the above materials (the number does not have to be an even number).

That is, the magnetic flux leakage prevention material 73 does not have to cover the entire bottom side of each of the left and right IH heating coils 6LC and 6RC. The magnetic flux leakage prevention materials 73 each formed in a rod shape having a square or a rectangular cross section may be disposed with a predetermined interval so as to cross the coil wire of the right IH heating coil 6RC. Accordingly, in Embodiment 2, the material is radially provided in plural numbers from the center portion X1 of the left IH heating coil. With the magnetic flux leakage prevention material 73 as above, it will be possible to concentrate the magnetic line of force generated from the IH heating coil to the heated object N on the top plate 21.

The main heating coil MC of each of the right IH heating coil 6RC and the left IH heating coil 6LC may be divided into multiple parts that are separately energized. For example, an IH heating coil may be spirally wound with a small diameter on the innermost side and a separate IH heating coil that is concentric and flush with the coil and that is spirally wound having a large diameter may be disposed on the outside, and the heated object N may be heated by three energization patterns, that is, energizing the inside IH heating coil, energizing the outside IH heating coil, and energizing both the inside and outside IH heating coils.

As described above, the heated object N (pan) from small ones to large ones (large diameter) may be efficiently heated by at least one of or a combination of the output level, duty ratio, and output interval of the high-frequency power that is made to flow to the two IH heating coils (as in a representative technical literature employing a plurality of heating coils that is allowed to be energized separately, Japanese Patent No. 2978069 is known).

An infrared temperature detecting element 31R is an infrared temperature detecting element that is disposed in a space provided in the center portion of the right IH heating coil 6RC and has, on its top end portion, an infrared light receiving unit facing the bottom side of the top plate 5 (see Fig. 22).

In a similar manner, the left IH heating coil 6LC is disposed with an infrared temperature detecting element 31L in a space provided in its center portion (see Fig. 22). Details will be described later.

The infrared temperature detecting elements 31R and 31L (hereinafter, each referred to as an "infrared sensor") each includes a photodiode or the like that can measure temperature by detecting the dose of infrared radiation from the heated object such as a pan. Note that the temperature detecting element 31R (since the temperature detecting element 31L is the same, hereinafter, description will be representatively given of the temperature detecting element 31R only, when common to both element) may be a detector element of a heat transfer type such as a thermister temperature senor.

As above, prompt detection of infrared radiated in accordance with the temperature of the heated object by means of an infrared sensor from below the top plate 5 is known from Japanese Unexamined Patent Application Publication No. 2004-953144 (Japanese Patent No. 3975865), Japanese Unexamined Patent Application Publication No. 2006-310115, and Japanese Unexamined Patent Application Publication No. 2007-18787, for example.

When the temperature detecting element 31R is an infrared sensor, infrared radiated from the heated object N can be integrated and can be received at real time (with almost no time lag) allowing the temperature be detected from the dose of infrared. Accordingly, the infrared sensor is superior (more than the thermister type). Even when the temperature of the top plate 21, such as one made of a heat-resisting glass or ceramics, that is positioned in front of the heated object N is not the same as the temperature of the heated object N, and irrespective of the temperature of the top plate 21, this temperature sensor is capable of detecting the temperature of the heated object N. This is because the top plate 21 is devised so that infrared radiated from the heated object is not absorbed or blocked by the top plate.

For example, the top plate 21 has been selected with a material in which infrared in the wavelength region of 4.0 µm or of 2.5 µm or under penetrates therethrough. The temperature sensor 31R is selected from ones that detect infrared in the wavelength region of 4.0 µm or of 2.5 µm or under.

On the other hand, when the temperature detecting element 31R is a heat transfer type such as a thermister, compared to the above-described infrared temperature sensor, although it is inferior in detecting a sudden temperature change in real time, it can surely detect the temperature of the bottom portion of the heated object N or the temperature of the top plate 21 under the heated object N by receiving radiant heat from the top plate 21 or the heated object N. Further, even if there is no heated object, it can detect the temperature of the top plate 21.

Note that when the temperature detecting element is a heat transfer type such as a thermister, the temperature sensing unit may be in contact with the bottom side of the top plate 21 or may have a thermally conductive resin therebetween such that the temperature of the top plate 21 itself is accurately understood. This is because if there is space between the temperature sensing unit and the bottom side of the top plate 21, there will be a delay in temperature propagation.

In the subsequent description, there are cases in which the "left, right" in the names and the "L, R" in the reference signs are omitted in parts that are disposed commonly to the left and right and that share the same details.

### [Radiant Type Central Electric Heat Source]

A central electric radiant heat source 7 (see Fig. 12) is arranged in a position that is inside the main body A, on the left-right center line CL1 of the top plate 21 (see Fig. 14), and on the rear portion side of the top plate 21. The central electric radiant heat source 7 employs an electric heater (for example, a nichrome wire heater, a halogen heater, or a radiant heater) that heats by radiation and heats the heated object N such as a pan through the top plate 21 from under. Further, one with a capacity in which the maximum electric power consumption (maximum heating power) is 1.2 kW is used, for example.

The central electric radiant heat source 7 has a round vessel shape with the entire top side opened and a vessel-shaped cover made of a heat insulating material constituting the outermost circumference thereof that has a maximum outer diameter of approximately 180 mm and a height (thickness) of 15 mm.

The position of the guide mark 7M that is a circle (depicted by a solid line in Fig. 13) displayed on the top plate 21 does not completely match the position of the outermost circumference of the central electric radiant heat source 7. The guide mark 7M merely indicates a proper heating region. The guide mark 7M depicted by a solid line circle in Fig. 13 indicates an approximate outermost circumference of the vessel-shaped cover of the central electric radiant heat source 7.

### [Electric Radiant Heat Source]

A vertical partition plate 24R on the right side is vertically disposed (see Fig. 12) and serves as a partition wall isolating the right side cooling chamber 8R and the grill heating chamber 9 that are in the housing C. A vertical partition plate 24L on the left side is, similarly, vertically disposed (see Fig. 12) and serves as a partition wall isolating the left side cooling chamber 8L and the grill heating chamber 9 that are in the housing C. Note that the vertical partition plates 24R and 24L are disposed such that spaces of a few millimeters are kept with the outside walls of the grill heating chamber 9.

A horizontal partition plate 25 (see Fig. 12) has a size that divides the whole space between the left and right vertical partition plates 24L and 24R into two spaces, that is, upper and lower spaces. The upper portion of this partition plate 25 is the upper portion component chamber 10. Further, this horizontal partition plate 25 is disposed with a preset space of a few millimeters to 10 millimeters with the ceiling wall of the grill heating chamber 9.

A notch 24A is formed in each of the left and right vertical partition plates 24L and 24R and is provided so that the vertical partition plates 24L and 24R do not clash into a cooling duct, described later, that is being horizontally installed.

The grill heating chamber 9, which is formed in a rectangular box shape, is formed on the left and right sides, the top and bottom sides, and the rear side with a metal sheet such as a stainless steel sheet or steel sheet and is disposed with electric radiant heaters on the upper ceiling and the bottom, such as a sheath heater which is a set of upper and lower electric radiant heat sources 22 and 23 (see Fig. 19) that extend substantially horizontally. Here, "extended" refers to a state in which the sheath heater is bent midway plural times in a horizontal plane so as to planarly meander an area as wide as possible. A typical example is one with a planer and W-shape.

These two upper and lower electric radiant heat sources 22 and 23 are energized at the same time or individually so that roasting (roast fish, for example), grilling (pizza and gratin, for example), and oven cooking (cake and roasted vegetables, for example), in which cooking is performed by setting the ambient temperature in the grill heating chamber 9, can be performed. As the electric radiant heat source 22 that is disposed on the upper ceiling, one with a maximum electric power consumption (maximum heating power) of 1200 W is used and as the electric radiant heat source 23 that is disposed on the bottom, one with a maximum electric power consumption (maximum heating power) of 800 W is used.

A gap formed between the horizontal partition plate 25 and an outer frame 9D of the grill heating chamber 9 is ultimately in communication with the rear exhaust hoods 12. Air in the space 26 is discharged by being induced outside the main body A through the rear exhaust hoods 12.

Referring to Fig. 12, a rear partition plate 28 partitions the upper portion component chamber 10 and the rear exhaust hoods 12 and has a height such that the lower end of the rear partition plate 28 reaches the horizontal partition plate 25 and the upper end thereof reaches the upper frame 20. An outlet 28A is formed at two places in the rear partition plate 28. The outlets 28A are for discharging the cooling air that has entered the upper portion component chamber 10.

### (Cooling Fan)

In Embodiment 2, as the fan 30 (not shown) cooling the inside of the main body A, a multi-blade centrifugal fan (sirocco fan is typically known) is used in which a drive motor 300 (see Fig. 19) is driven by a driving circuit 33. Further, the fan is disposed in each of the right side cooling chamber 8R and the left side cooling chamber 8L and cools the circuit board for the left and right left IH heating coils 6LC and 6RC and the heating coils themselves. Details will be described later.

A boxed-shape cooling unit (not shown) equipped with the fan 30 that cools the inside of the main body A is inserted into each of the cooling chambers 8R and 8L from above and is fixed therein. The cooling unit accommodates a circuit board including the inverter circuits MIV and SIV.

It has been described above that the boxed-shape cooling unit inserted from above each of the cooling chambers 8R and 8L and disposed therein is equipped with a circuit board. Various electronic and electrical components that constitute the inverter circuits MIV and SIV are mounted on the circuit board.

As shown in Figs. 18 and 23, "46" are cooling ducts that each place thereon a coil support 290 for the heating coil of the left and right IH heat source 6R and 6L. Each cooling duct is integrally formed of heat-resistant resin and has an opening in the entirety of its bottom side. Since the size of each heating coils of the right IH heat source 6R and the left IH heat source 6L are different, the shapes and sizes of the cooling duct 46 for the right IH heat source 6R and the cooling duct 46 for the left IH heat source 6L are different; however, the two are the same in that multiple blow out holes 46C that blow out the cooling air are formed.

"47" is a flat plate that covers the entire bottom side of the cooling ducts 46 and that allows an air flow Y5 for cooling to be formed between the bottom side and the flat plate (see Fig. 23). This air flow Y5 is an airflow from the fan 30 that cools the inside of the main body A.

### (Operation Means E)

The operation means E of the cooking system according to Embodiment 2 includes front side operating units 60 and a top side operating unit 61 (see Figs. 11 and 13).

### (Front Side Operating Units)

Plastic front side operating frames 62R and 62L are mounted on the front left and front right sides of the main body case 2, and the front sides of the operating frames are front side operating units 60. The front side operating unit 60 is provided with an operation button 63A (see Fig. 12) of the main power switch 63 that simultaneously provides or shuts off the power to all of the left IH heat source 6L, the right IH heat source 6R, the central electric radiant heat source 7 and the electric radiant heat sources 22 and 23 of the grill heating chamber 9. Each of a right operation dial 64R that opens and closes an electric contact of a right power switch (not shown) that controls the energization of the right IH heat source 6R and amount of energization (heating power) thereof and, similarly, a left operation dial 64L of a left control switch (not shown) that controls the energization of the left IH heat source 6L and amount of energization (heating power) thereof are provided in the corresponding front side operating unit 60. Power is supplied to all of the electric circuit components shown in Fig. 19 via the main power switch 63.

In the corresponding front side operating unit 60, a left indicating lamp 66L that turns on only when under a state in which energization is performed to the left IH heat source 6L by a left operation dial 64L is provided and a right indicating lamp 66R that turns on only when under a state in which energization is performed to the right IH heat source 6R by a right operation dial 64R is provided.

Note that the left operation dial 64L and the right operation dial 64R are, as shown in Fig 11, pushed inside so as not to protrude from the front surface of the front side operating unit 60 when not in use. When using the dial, the user pushes the dial once with a finger and releases the finger therefrom. With this, the dial protrudes out (see Fig. 12) by force of a spring (not shown) embedded in the front side operating frame 62, turning the dial into a rotatable state by pinching the circumference of the dial. Further, at this stage, when turned to the left or right a notch, energization (at a minimum set heating power of 120W) is started in each of the left IH heat source 6L and the right IH heat source 6R.

Additionally, when either of the protruded left operation dial 64L and right operation dial 64R is further turned to the same direction, a predetermined electric pulse is generated by an embedded rotary encoder (not shown) in accordance with the amount of rotation. The electric pulse is read by the control means F and, thus, the amount of energization of the corresponding heat source is determined enabling the heating power to be set. Note that when either of the left operation dial 64L and the right operation dial 64R is, with the finger of the user, pushed (pushed back) once into a predetermined position where the dial does not protrude out from the front surface of the front side operating unit 10, irrespective of whether in the initial state or in a state in which the dial has been turned to the right or left, the dial is kept at this position and the energization of the left IH heat source 6L or the right IH heat source 6R is instantaneously stopped (for example, even during cooking, when the right operation dial 64R is pushed in, energization of the right IH heat source 6R is instantaneously stopped.)

Note that when opening operation is performed by the operation button 63A of the main power switch 63 (see Fig. 11), the operation of the right operation dial 64R and the left operation dial 64L will be made invalid simultaneously thereafter. Similarly, all energization of the central electric radiant heat source 7 and the electric radiant heat sources 22 and 23 disposed in the grill heating chamber 9 will be also shut off.

Further, although not shown, there are three independent timer dials provided at the bottom portion on the front side of the front side operating frame 62. These timer dials are for controlling timer switches (also known as a timer counter, not shown) that energizes either one of the corresponding left IH heat source 6L, right IH heat source 6R, and central electric radiant heat source 7 for a desired time (set timer time) from the start of energization and automatically shuts off power after the set time has elapsed.

### (Top Side Operating Unit)

As shown in Fig. 13, the top side operating unit 61 includes a right heating power setting operating unit 70, a left heating power setting operating unit 71, and a center operating unit 72. That is, on the top side of the top plate 21 in the front portion, relative to a left-right center line of the main body A, the right heating power setting operating unit 70 of the right IH heat source 6R is disposed on the right side, the center operating unit 72 of the central electric radiant heat source 7 and the electric radiant heat sources 22 and 23 are disposed in the center portion, and the left heating power setting operating unit 71 of the left IH heat source 6L is disposed on the left side.

On this top side operating unit, various keys are provided for a case in which a stainless steel or metal cookware (not shown) is used. Among the keys, there is a key 250 exclusive for bread. Note that rather than a dedicated key for cooking specific food (for example, bread), a general key for a cookware may be exclusively provided, in which the pressing of the key will enable display of operable keys (not shown) displaying the name of the desired cooked food (for example, bread) on an integrated display device 100 described later, and in which the user can input a desired cooking start command by touching with the finger the area of the corresponding key. Note that the cookware can be used by inserting the cookware into the grill heating chamber 9 from the front opening.

A compound cooking key 251 is further provided on the top side operating unit 61 that is used when cooking is performed with the cookware using both the IH heat source and the electric radiant heat sources 22 and 23 (hereinafter, referred to as "compound heat cooking" or "compound cooking"). This Embodiment 1 allows compound cooking with the right IH heat source 6R and the electric radiant heat sources 22 and 23 of the grill heating chamber 9. The compound cooking key 251 is provided on the right heating power setting operating unit 70 side (see Fig. 13).

Note that rather than a fixed key, a button, a knob, or the like, the compound cooking key 251 may be integrated display means 100 (such as a liquid crystal screen) displaying the desired key allowing the user to touch an area of the key to input the compound cooking. That is, a method may be adopted in which an inputtable key shape is displayed at a suitable time on the integrated display means 100 by software in which an input operation is carried out by touching of the key.

### (Right Heating Power Setting Operating Unit)

One-touch setting keys (not shown) each for a heating power are provided on the right heating power setting operating unit 70 that enables the user to easily set the heating power of the right IH heat source 6R with a single push. Specifically, a plurality of keys each capable of setting a heating power with one touch are provided for the heating powers.

### (Left Heating Power Setting Operating Unit)

Similarly, a group of one-touch keys that are similar to the ones of the right heating power setting operating unit 70 are disposed also in the left heating power setting operating unit 71 for setting the heating power of the left IH heat source 6L.

### (Center Operating Unit)

In the center operating unit 72 as well, an operation button of the operating switch that starts energization of the electric radiant heat sources 22 and 23 of the grill heating chamber 9 used for grilling (roasting) and oven cooking and an operation button of the operating switch that stops energization thereof are provided next to each other. Further, the power on/off switching button for the central electric radiant heat source 7 and the configuration switches that each sets the level of the heating power incrementally or decrementally are also provided here.

Upon operation of the start switch that operates and starts the timer counter (not shown), the elapsed time from the starting point is measured and is numerically displayed on the liquid crystal display screens 45R and 45L that are disposed on the left and right of the top plate 21. The indication light of the liquid crystal display screen 45R and 45L penetrates through the top plate 21 and the elapsed time is clearly displayed to the user in units of "minutes" and "seconds".

The liquid crystal display screen 45R is for the right IH heat source 6R and the liquid crystal display screen 45L on the left is for the left IH heat source 6L.

### (Heating Power Indicating Lamp)

On the right front side of the top plate 21 between the right IH heat source 6R and the right heating power setting operating unit 70, a right heating power indicating lamp 101R that indicates the level of heating power of the right IH heat source 6R is provided. The right heating power indicating lamp 101R is provided in the vicinity of the bottom side of the top plate 21 so as to emit an indication light to the top side through (penetrating through) the top plate 21.

Similarly, a left heating power indicating lamp 101L that indicates the level of heating power of the left IH heat source 6L is provided on the left front side of the top plate 21 between the left IH heat source 6L and the left heating power setting operating unit 71. The left heating power indicating lamp 101L is provided in the vicinity of the bottom side of the top plate 21 so as to emit an indication light to the top side through (penetrating through) the top plate 21. Note that the illustration of these indicating lamp 101R and 101L are omitted in the circuit configuration diagram of Fig. 19.

### (Display Means G)

The display means G of the cooking system according to Embodiment 2 includes the integrated display means 100.

The integrated display means 100 is provided in the center portion in the left and right direction of the top plate 21 and on the front side in the front and rear direction. This integrated display means 100 is constituted mainly by a liquid crystal display and is provided in the vicinity of the bottom side of the top plate 21 so as to emit an indication light to the top side through (penetrating through) the top plate 21.

The integrated display means 100 can be used to input the energization status (heating power, time period, and the like) and to confirm the operating state of the left IH heat source 6L, the right IH heat source 6R, the central electric radiant heat source 7 and the electric radiant heat sources 22 and 23 of the grill heating chamber 9.

The liquid crystal screen used in the integrated display means 100 is a known dot matrix LCD screen. The display area of the liquid crystal screen is rectangular shaped with a height (front-rear direction) of approximately 4 cm and width of 10 cm.

Further, the display area that displays information is divided into a plurality of areas each corresponding to a heat source. For example, the display is allocated into six areas in total that are defined as below.
(1) An area that corresponds to the left IH heat source 6L.
(2) An area that corresponds to the radiant type central electric heat source 7.
(3) An area that corresponds to the right IH heat source 6R.
(4) An area that corresponds to the grill heating chamber 9.
(5) An guiding area that displays reference information related to various cooking as required or by operation of the user, as well as for notifying the user when an abnormal operation is detected or when an improper operation is carried out.
(6) A key display area that displays plural input keys that are mutually independent having a function of allowing each various cooking conditions and the like to be directly input.

When the placement-of-heated-object determination unit 280 described below determines that the bottom diameter of the heated object N is smaller than a predetermined value, the seven keys E1A, E1 B, E1C, E2A, E2B, E3A, and E3B for selecting the cooking menu are not displayed on the liquid crystal screen of the integrated display means. That is, it will be possible to select the seven keys E1A, E1B, E1C, E2A, E2B, E3A, and E3B for selecting the cooking menu on the liquid crystal screen of the integrated display means 100 only in a case with an heated object N with a size that covers every one of the sub heating coils SC1 to SC4.

Although each of the above six areas (display areas) are provided on the liquid crystal screen of the integrated display means 100, they are not each formed or partitioned on individual physical displays. That is, they are established by software (program for a microcomputer) for screen display and their areas, shapes, and positions can be changed by the software as appropriate; however, in consideration of the user usability, the order of alignment of the left IH heat source 6L, the central electric radiant heat source 7, the right IH heat source 6R, and the like is set at all times in the same order so as to match the left-right order of each heat source.

Specifically, on the display, information is displayed such that the left IH heat source 6L is on the left side, the central electric radiant heat source 7 is in the center, and the right IH heat source 6R is on the right side. Further, the cooking display area of the grill heating chamber 9 is at all times displayed on the near side relative to the corresponding area of the above left IH heat source 6L, the corresponding area of the above central electric radiant heat source 7, and the corresponding area of the right IH heat source 6R. Furthermore, the display area of the input keys is displayed on the forefront at all times in any case whatsoever.

### (Grill Heating Chamber)

As shown in Fig. 12, the front opening 9A of the grill heating chamber 9 is openably covered with the door 13, and the door 13 is supported by a support mechanism (not shown) such as rails or rollers in the grill heating chamber 9 such that the door 13 is movable in the front-rear direction by a user operation. Further, a window plate made of heat-resisting glass is disposed in a center opening 13A of the door 13 so as to allow visual recognition of the inside of the grill heating chamber 9 from the outside. "13B" is a handle protruded forward to perform an opening/closing operation of the door. Note that the exhaust duct 14 is disposed in the rear portion of the grill heating chamber 9, from which the internal high-temperature air is discharged.

This grill heating chamber 9 is provided with an in-chamber temperature sensor 242 (see Fig. 19) that detects the temperature inside the chamber; accordingly, it is possible to cook while the temperature inside the chamber is maintained at a desired temperature.

The opening at the distal end portion of the metal exhaust duct 14 that is connected to the rear portion of the grill heating chamber 9 is in communication with the vicinity of the center vent hole 20C formed in the upper frame 20. Further, in this exhaust duct 14, a deodorizing catalyst is provided that is activated by being heated with the electric heater 121H (see Fig. 19) for the catalyst and functions to remove the odorous component from the hot exhaust in the grill heating chamber 9 passing through the exhaust duct 14.

### (Exhaust Structure, Intake Structure)

As described above, a right vent hole (serves as an inlet) 20B, a center vent hole (serves as an outlet) 20C, and a left vent hole 20D that are long sideways are formed on the rear portion of the upper frame 20. A metal flat-plate shaped cover 130 (see Fig. 11), which is formed with numerous and small communication holes throughout, is detachably placed above these three rear vent holes so as to cover the entire upper side of the vent holes. The cover 130 may be one with tiny holes serving as communication holes that is formed by press work on a metal sheet (also known as perforated metal), or other than that, may be a wire netting or one with a small gridded shape. In any case, the cover may be any that does not let the user's finger or foreign matter enter from above into each of the vent holes 20B, 20C, and 20D.

The upper end of the exhaust duct 14 is positioned in the rear exhaust hoods 12. In other words, in both the left and right side of the exhaust duct 14, the rear exhaust hoods 12, which are in communication with the space that is formed around the grill heating chamber 9, are secured. The grill heating chamber 9 is disposed with a predetermined space with the horizontal partition plate 25, in which this space 116 is ultimately in communication with the rear exhaust hoods 12. As mentioned above, since the inside of the upper portion component chamber 10 is in communication with the rear exhaust hoods 12 through the pair of outlets 28A that is formed in the rear partition plate 28, when the cooling air (arrows Y5 in Fig. 23) that cools the heating coil is discharged to the outside of the main body 1 as arrows Y9 in Fig. 12, the air inside the space between the horizontal partition plate 25 and the ceiling surface of the grill heating chamber 9 below is induced and discharged along with this.

### (Control Means F)

The control means (control unit) F of the cooking system according to Embodiment 2 includes the energization control circuit 200 (see Fig. 19).

Fig. 19 is a component diagram that illustrates the entirety of the control circuit of the cooking system, in which the control circuit is formed with the energization control circuit 200 that is formed by embedding a single or a plurality of microcomputer therein. The energization control circuit 200 includes four parts, namely, an input unit 201, an output unit 202, a storage unit 203, and an arithmetic control unit (CPU) 204, is supplied with DC power through a voltage stabilizer (not shown), and serves a central role as control means controlling all of the heat sources and the display means G. In fig. 19, the inverter circuit 210R for the right IH heat source 6R is connected to a commercial power supply 76 with a voltage of 100V or 200V through the rectifier circuit (also known as a rectifier bridge circuit) 221.

Similarly, in parallel with this inverter circuit 210R for the right IH heat source 6R, the inverter circuit 210L for the left IH heat source 6L, which has a similar basic configuration as that of the right IH heating coil 6RC (induction heating coil) shown in Fig. 19, is connected to the commercial power supply through the rectifier bridge circuit 221. This inverter circuit 210L includes the main inverter circuit MIV and the four sub inverter circuits SIV1 to SIV4.

The major difference between the inverter circuit 210L for the left IH heat source 6L and the inverter circuit 210R for the right IH heat source 6R is that the inverter circuit 210L has the main heating coil MC and the sub heating coils SC. Accordingly, as shown in Fig. 21, the inverter circuit 210L for the left IH heat source 6L includes the inverter circuit MIV for the main heating coil, which supplies electric power to both of the inner coil LC2 and the outer coil LC1, that is, to the main heating coil MC, and the inverter circuits SIV1 to SIV 4 for the sub heating coils, which individually supplies electric power to each of the four independent sub heating coils SC1 to SC4 described later. Further, the timing of energization and the amount of energization of the four sub heating coils SC1 to SC4 are all determined by the energization control circuit 200.

The inverter circuit MIV for the main heating coil employs a variable output frequency method, thus, by changing the frequency, it will be possible to vary the inverted power, that is, the obtained heating power. As the drive frequency of the inverter circuit MIV is set higher, the inverted power reduces and damage to the electrical and electronic elements constituting the circuit such as the switching means (IGBT) 77A, 81A, and 88A described later and the resonant capacitor 110A increases, as well as increase in the amount of heat therefrom. Since this is not preferable, a predetermined upper limit frequency is determined and control is carried out such that the frequency is changed at of under the determined frequency. Electric power allowing continuous control at the upper limit frequency is the minimum electric power. When electric power lower than this is to be input, duty factor control, which performs intermittent energization, may be used in combination, thus obtaining an ultimate low heating power. The heating power of the inverter circuits SIV1 to SIV4 for the sub heating coils may be controlled in the same manner.

Further, the drive frequency for driving the inverter circuit MIV is basically set to be the same as the drive frequency for the inverter circuits SIV1 to SIV4 for the sub heating coils. If it is to be changed, the energization control circuit 200 controls the drive frequency difference between the two frequencies to be out of the range of 15 to 20 kHz such that the difference between the two does not enter the audio frequency range. This is because, when two or more induction heating coils are driven at the same time, depending on the frequency difference, the frequency difference becomes a cause of unpleasant sound such as the ones called beat noise or interference noise.

Note that the main inverter circuit MIV and the sub inverter circuits SIV1 to SIV4 for the sub heating coils do not have to be driven at the same time. For example, depending on the heating power instructed by the energization control circuit 200, the heating operation may be switched alternately at short intervals. Herein, "at the same time" refers to a case in which the energization start timing and the energization stop timing is completely simultaneous.

A heater driving circuit 211 is a heater driving circuit of the central electric radiant heat source 7; "212" is a heater driving circuit that drives the electric radiant heat source 22 for in-chamber heating of the grill heating chamber 9; similarly, "213" is a heater driving circuit that drives the electric radiant heat source 23 for in-chamber heating of the grill heating chamber 9; "214" is a heater driving circuit that drives a catalytic heater 121H provided midway of the exhaust duct 14; and "215" is a driving circuit that drives the liquid crystal screen of the integrated display means 100.

There is a current detection sensor (not shown) in each inverter circuit of the left and right IH heat source 6R and 6L. Regarding the main heating coil MC of the left IH heat source 6L, there is a current sensor 266 (see Fig. 22) that detects the current flowing in the resonance circuit including a series circuit of the main heating coil MC and the resonant capacitor 110A. The detection output of the current detection sensors is input to a placement-of-heated-object determination unit 280 described later; through this, determination information on whether there is a heated object is supplied to the input unit of the energization control circuit 200, and determination of the presence of the heated object N is performed. Further, if an inappropriate pan (heated object N) is used in the induction heating or if by some kind of accident, an undercurrent or an overcurrent having a value difference equivalent to or above a predetermined value when compared to a normal current value is detected, the energization control circuit 200 controls the switching elements 79A, 81A, 88A, and 89A, such as the IGBT, through the driving circuits 228A and 228B to instantaneously stop the energization of the main heating coil MC. Note that the current detection sensors may include a shunt, which measures current using a resistor, or a current transformer.

Similarly, since the inverter circuits SIV1 to SIV 4 for the sub heating coils, which individually supplies electric power to each of the four independent sub heating coils SC1 to SC4, have the same circuit configuration equivalent to that of the inverter circuit MIV for the main heating coil MC, as will be described later, these common circuit configuration is denoted collectively in Fig. 22 as the inverter circuit 210L for the left IH heat source 6L. Note that "224" in Fig. 19 is a reference numeral used to collectively denote a resonant capacitor 100A, a resonant capacitor 100B, and the like described below when the main heating coil MC and the four sub heating coils SC1 to SC4 are collectively referred to as the left IH heating coil.

Referring to Fig. 22, a driving circuit 228A drives the inverter circuit MIV for the main heating coil and corresponds to the driving circuits 228A and 228B in Figs. 20 and 21. These serves the same role as that of the driving circuit 228 (for the right IH heat source 6R).

Similarly, a driving circuit 228C drives the inverter circuit SIV1 for the sub heating coil and corresponds to the driving circuits 228C and 228D in Figs. 20 and 21.

Similarly, a driving circuit 228E drives the inverter circuit SIV2 for the sub heating coil. There are driving circuits as well that each drives the corresponding one of the inverter circuits SIV3 and SIV4 for the sub heating coils. That is, as it will be described later, as driving circuits that drive the inverter circuits SIV1 to SIV4 for the sub heating coils, there are driving circuits 228C, 228D, 228E, 228F, 228G, 228H, 228I, and 228J (all not shown).

Referring to Fig. 22, 267A, 267B, 267C (not shown), 267D (not shown) are current detection sensors that exert the same function as that of the current detection sensor 266 of the main inverter circuit MIV.

As in the invention, in a cooking system that heats an heated object N with an induction heating method, the power control circuit for distributing high-frequency power to the left and right IH heating coils 6LC and 6RC is called a resonant inverter. Configuration is such that a high-frequency current is supplied to a circuit connected with the inductance of the left and right IH heating coils 6LC and 6RC including the heated object N (metal object) and with the resonant capacitors by performing on/off control of the switching circuit elements at a drive frequency of approximately 20 to 40 kHz.

As regards the resonant inverter, there is a current resonance type suitable for a 200-V power supply and voltage resonance type suitable for a 100-V power supply. The resonant inverter circuit is separated into a so-called half bridge circuit and a full bridge circuit depending on to where the connection targets of the left and right IH heating coils 6LC and 6RC and the resonant capacitors 224 are switched.

When a heated object is induction heated by using a resonant inverter circuit, and when the heated object N is made of a magnetic material such as iron, magnetic stainless steel, or the like, the amount of resistance (equivalent resistance) contributing to heating is large and it is easier to charge electric power, and, thus, heating is easier. However, when the heated object N is made of a non-magnetic material such aluminum or the like, since its equivalent resistance is small, the eddy current induced in the heated object N is not easily turned into Joule heat. Accordingly, there is a known control in which a configuration of an inverter circuit is automatically switched into one with a half bridge method when the material of the heated object N is a magnetic material, and is switched into one with a full bridge method when the heated object N uses a magnetic body (Japanese Unexamined Patent Application Publication No. 5-251172, Japanese Unexamined Patent Application Publication No. 9-185986, Japanese Unexamined Patent Application Publication No. 2007-80751, for example). Unless specified otherwise, in the present invention, the inverter circuits 210R and 210L may be configured with a half bridge circuit or with a full bridge circuit.

In Fig. 19, although the internal configuration of each of the inverter circuit 210R of the right IH heat source and the inverter circuit 210L of the left IH heat source has not been described in order to facilitate description, a full bridge circuit such as the ones in Figs. 20 and 21 is desirable when the invention is actually carried out.

Referring to Figs. 20 and 21 and giving a description below in detail, the cooking system includes a commercial power unit (power circuit) 74. The power unit 74 includes a DC power unit 80, the main inverter circuit MIV, and four sub inverter circuits SIV1 to SIV4. Note that in Fig. 20, only two circuits, that is, the main inverter circuit MIV and the sub inverter circuit SIV1, are depicted; however, as shown in Fig. 21, three sub inverter circuits SIV2 to SIV4 having a similar configuration as that of the inverter circuit SIV, which has connecting points CP1 and CP2, are connected in parallel to the energization control circuit 200. That is, similar to the sub inverter circuit SIV1, connecting points CP3, CP4, CP5, CP6, and CP7 that are the two ends of each of the respective other three sub inverter circuits SIV2, SIV3, and SIV4 are connected to the circuit of the connecting points CP1 and CP2. Note that the three sub inverter circuits SIV2 to SIV4 are each connected with driving circuits that has a similar function as that of the driving circuits 228A and 228B shown in Fig. 20. The driving circuits 228A and 228B will be described in detail later.

As it is apparent from the above description, the four sub inverter circuits SIV1 to SIV4 are each connected in parallel to the DC power unit 80 and the energization control circuit 200.

The DC power unit 80 is connected to the AC power supply 75. The AC power supply 75 is a commercial single phase or three phase AC power supply. The AC power supply 75 is connected to the rectifier circuit 76 that rectifies all the AC current output from this AC power supply 75. The rectifier circuit 76 is connected to a smoothing capacitor 86 that performs smoothing of the direct-current voltage that has been rectified in its entirety by the rectifier circuit. The main inverter circuit MIV and the four sub inverter circuits SIV1 to SIV4 are full bridge inverters that, after conversion of AC to DC, further converts this direct current into an alternating current with high frequency. Each of the inverter circuits MIV and SIV1 to SIV4 is connected to the DC power unit 80 of the power unit 74.

The main inverter circuit MIV and the sub inverter circuit SIV1 each have a couple (also referred to as a "pair" or a "group") of two pairs of switching elements 77A and 78A, and 77B and 78B, respectively. As shown in the drawing, the switching elements 77A and the switching elements 78A, constituting the couple, of the main inverter circuit MC each include two respective switching elements 79A and 81A, and 88A and 89A that are connected in series. The switching elements 77B and the switching elements 78B, constituting the couple, of the sub inverter circuit SIV1 each include two respective switching elements 102B and 103B, and 104B and 105B that are connected in series. Although not shown, the sub inverter circuits SIV2, SIV3, and SIV4 shown in Fig. 24 each include two pairs of switching elements such as the ones described above.

A series resonance circuit including the main heating coil MC and the resonant capacitor 110A is connected between the output points of the switching elements 79A and 81A and between the output points of the switching elements 88A and 89A. Further, a series resonance circuit including the sub heating coil SC1 and the resonant capacitor 110B is connected between the output points of the switching elements 102B and 103B and between the output points of the switching elements 104B and 105B. Although not shown, the other three sub inverter circuits SIV2, SIV3, and SIV4 are each similarly connected to the respective series resonance circuit including the respective one of the sub heating coils SC2 to SC4 and the resonant capacitor (not shown) 110A.

The two pairs of switching elements 77A and 78A, constituting the couple, of the main inverter circuit MIV are respectively connected to the driving circuits 228A and 228B. The two pairs of switching elements 77B and 78B, constituting the couple, of the sub inverter circuit 1 are respectively connected to the driving circuits 228C and 228D. Each of the remaining three sub inverter circuits SIV2 to SIV4 also is connected to the respective one of the driving circuits 228E, 228F, 228G, 228H, 228I, and 228J (all not shown). Further, these driving circuits 228A to 228J are all connected to the placement-of-heated-object determination unit 280 through the energization control circuit 200.

The energization control circuit 200 has a function of uniformizing the frequency of the switch driving signal output to the main inverter circuit MIV and all of the sub inverter circuits SIV1 to SIV4.

With the above configuration, after the user has activated the main power through the front side operating unit 60 and when the user instructs the start of heat driving to the energization control circuit 200 through the top side operating unit 61 of the front side operating unit 60, the output of the AC power supply 75 is converted into a direct current with the DC power unit 80 and then a driving signal is output from each of the driving circuits 228A, 228B, 228C, 228C (description of the operation of the other driving circuits are omitted) on the basis of command signals (switch driving signals) issued from the energization control circuit 200. Then the switching elements 79A and 89A and the switching elements 81A and 88A, the switching elements 102B and 105B and the switching elements 103B and 104B are alternately turned ON and OFF such that the direct current is converted into a high-frequency current once more, and the main heating coil MC and the sub heating coil SC1 is each applied with a high-frequency current. With the above, an induction heating operation is started. Note that the frequencies of the switch driving signals output to the main inverter circuit MIV and the sub inverter circuit SIV1 from the energization control circuit 200 are automatically set to be the same.

With the above configuration, the energization control circuit 200 has a function of controlling the main inverter circuit MIV and the sub inverter circuits SIV1 to SIV4 such that the direction of the high-frequency currents IB applied to the four sub heating coils SC1 to SC4 and the direction of the high-frequency current IA applied to the main heating coil MC are the same (in the counterclockwise direction) in the areas where the coils are adjacent to each other (the outer circumference of the main heating coil) when a high-frequency current is distributed to the main heating coil MC in the clockwise direction.

On the other hand, when a high-frequency current IA is distributed to the main heating coil MC in the counterclockwise direction, the main inverter circuit MIV and the sub inverter circuits SIV1 to SIV4 are controlled such that the high-frequency currents IB applied to the sub heating coils SC1 to SC4 flows in the same direction (in the clockwise direction) in the areas where the coils are adjacent to each other. As described above, with this, it will be possible to suppress generation of abnormal noise due to frequency difference.

As described above, in a case where a heated object N is induction heated by energization of the left and right IH heating coils 6LC and 6RC, when the heated object N is of a magnetic material such as iron, current with a frequency of approximately 20 to 40 kHz may be distributed to the resonance circuit connected to resonant capacitors (224 in Fig.19 and 110A and 110B in Fig. 21) by controlling the ON/OFF of the switching circuit element (in Fig. 21, the switching elements 77A, 81A, 88A, 89A, 102B, 103B, 104B, and 105B) at a drive frequency of approximately 20 to 40 kHz.

On the other hand, in a case in which the heated object N is made of a material with high electrical conductivity such as aluminum or copper, in order to obtain the desired heating output, a large current needs to be induced on the bottom side of the heated object N by distributing a large current to the left and right IH heating coils 6LC and 6RC. Accordingly, in a case in which the heated object N is made of a material with high electrical conductivity, on/off control is performed at a drive frequency of 60 to 70 kHz.

Referring to Fig. 19, a motor driving circuit 33 is a driving circuit of the drive motor 300 of the fan 30 that maintains the internal space of the main body A of Fig. 11 within a constant temperature range.

### (Temperature Detecting Circuit)

Referring to Fig. 19, a temperature detecting circuit 240 is input with temperature detection information from each of the following temperature detecting elements.
(1) The temperature detecting element 31R provided in the substantially middle portion of the right IH heating coil 6RC.
(2) The temperature detecting element 31L provided in the substantially middle portion of the left IH heating coil 6LC.
(3) A temperature detecting element 241 provided in the vicinity of the electric heater of the central electric radiant heat source 7.
(4) A temperature detecting element 242 for detecting the in-chamber temperature of the grill heating chamber 9.
(5) A temperature detecting element 243 disposed in the vicinity of the integrated display means 100.
(6) Temperature detecting elements 244 and 245 that are adhered to and mounted on the corresponding one of the two radiation fins (for the main and sub inverter circuits), which are equipped in the cooling units in the left and right cooling chambers 8R and 8L, and that individually detects the temperature of the corresponding one of the two radiation fins.

Note that two or more temperature detecting elements may be provided on the subject of the temperature detection. For example, further accurate temperature control may be achieved by providing each of the temperature sensors 31R of the right IH heat source 6R to the middle portion and the circumference of the right IH heating coil 6RC. Further, the temperature detecting elements may be ones employing different principles. For example, the temperature detecting element in the middle portion of the right IH heating coil 6RC may be one using an infrared system and the temperature detecting element on the outer circumference may be a thermister type.

On the basis of the temperature measurement state from the temperature detecting circuit 240, the control circuit 200 controls the motor driving circuit 33 of the drive motor 300 of the fan 30 continuously so that the fan 30 is operated to perform cooling with air in order that each of the temperature measured portion does not become heated to a predetermined temperature or higher.

The temperature detecting element 31L provided in the middle portion of the left IH heating coil 6LC includes five temperature detecting elements 31L1 to 31 L5, which will be described in detail later.

### (Sub Heating Coils)

Referring to Figs. 16, and 17, an outer coil 6LC1 of the left IH heating coil 6LC is a circular outer coil with a center point X1 and a maximum outer diameter DA (= twice the radius R1) and an inner coil 6LC2 is a coil circularly winded in the outer coil with a space 270 therebetween and has the same center point X1. The main heating coil MC is configured with two circular coils that are concentric circles.

The four sub heating coils SC1 to SC4 are each disposed with a predetermined space 271 with the outer circumference of the main heating coil MC. As shown in Fig. 17, the sub heating coils are curved along the same circumference, around the center point X1 having a radius R2, and is disposed so as to be interspersed with substantially same distances between each other. Each outer shape is of a curved ellipse or oval. These sub heating coils are also formed so as to have an ellipse or oval outer shape by twisting one or a plurality of assembled wires and spirally winding this, and then by partially binding it with a binding tool or by hardening it with heat-resistant resin.

As shown in Fig. 17, these four sub heating coils SC1 to SC4 are disposed on a circle with a radius R3 from the center point X1 while maintaining a space 273 with a set dimension between each other. The line of circumference having a radius R3 coincides with the center line of each of the sub heating coils SC1 to SC4 in its longitudinal direction. In other words, around the circular main heating coil MC that constitutes a closed circuit, four sub heating coils SC1 to SC4 are disposed each forming an arc on the inside (on the side that is facing the outer circumference of the main heating coil MC) having a radius R2 from the center point X1 of the main heating coil MC, in which each of the assembled wires are curved and extended with a radius of curvature in accordance with the corresponding arc, thus constituting an electrically closed circuit.

The height (thickness) of the main heating coil MC and the height (thickness) of each of the sub heating coils SC1 to SC4 are the same. The main heating coil MC and each of the sub heating coils SC1 to SC4 are horizontally provided and fixed on coil supports (coil bases) 290 described above such that the facing distances between their upper sides and the bottom side of the top side 21 are the same.

The straight line Q1 illustrated in Fig. 15 is a straight line that connects an edge of the bend on the inside, in other words, one end RA of the bent arc (specifically, the starting point), of each of the four sub heating coils SC1 to SC4 to the center point X1. In the same manner, the straight line Q2 is a straight line that connects the other end RB of the arc (specifically, the end point) of each of the four sub heating coils SC1 to SC4 to the center point X1. When heating efficiency is considered, it is preferable that the length between the two ends RA and RB (between the starting point and the end point), that is, the length of the arc (of the sub heating coil SC) with a radius R2 that is bent along the circumference of the main heating coil MC, is long. This is because, as will be described later, the peripheral line of the main heating coil MC and the sub heating coils SC1 to SC4 are devised to reduce magnetic interference between each other by distributing high-frequency currents in the same direction.

However, in actuality, the direction of current between two adjacent sub heating coils SC1 to SC4 will be opposite to each other. This will have some influence, thus will cause a problem. In order to suppress this influence, the coils are separated with a constant distance (space 273 described later) therebetween. Accordingly, there is a certain limitation to the length of the arc. Specifically, referring to Figs. 15 and 17, assuming that space 271, which is an electric insulation distance between the main heating coil MC and each of the sub heating coils SC1 to SC4, is 5mm, since the outer diameter of the main heating coil MC is twice the length of R1, that is, 180 mm, R2 is 180 mm + 5 mm + 5 mm = 190 mm, and the circumferential length is approximately 596.6 mm ( = diameter R2, 190 mm x circular constant, 3.14). When the four sub heating coils SC1 to SC4 are arranged uniformly (every 90 degrees), one fourth of the length will be 149.15 mm. An angle defined by Q1 and Q2 is not 90 degrees but is, for example, 60 to 75 degrees. Here, if the angle is 70 degrees, then the above 149.15 mm will be 116 mm obtained from the expression:
ratio of 70 degrees ÷ 90 degrees (approximately 0.778) x 149.15 mm. That is, the length of the innermost arc of each of the sub heating coils SC1 to SC4 is approximately 116 mm.

Further, as in Embodiment 2, when the number of sub heating coils SC is four, out of the 360 degrees circumference of the main heating coil MC, since a range of 280 degrees (the above mentioned four times of 70 degrees) is formed with arcs (of the sub heating coils SC) that are bent (with a radius of curvature R2) along the outer circumference of the main heating coil MC, it can be said that in approximately 77.8 % (= 280 degrees ÷ 360 degrees, hereinafter this rate is referred to as a "concordance rate" in the subsequent description) of the range, the direction of the peripheral line of the main heating coil MC and the sub heating coils SC1 to SC4 are in concordance with each other (parallel). This means that there is a large margin for allowing the high-frequency currents IA and IB to be distributed in the same direction between the main heating coil MC and the sub heating coils SC1 to SC4 and, thus, contributes to increase in the heating efficiency of the heated object N by reduction of magnetic interference and increasing the magnetic flux density.

In order to facilitate understanding of the description of Figs. 15 and 18, the sizes of each of the main heating coil MC and the sub heating coils SC1 to SC4 is not drawn to proportional scale. The larger the concordance rate, the length in which the high-frequency current flows in the same direction becomes larger and the length of the area in which the magnetic flux density of two adjacent heating coils is increased increases. This is desirable when considering heating efficiency; however, in actuality, there is a limitation due to the need to secure the above spaces 273, and it is not possible to achieve a concordance rate of 100%.

Note that referring to Fig. 17, since the diameter R3 is R2 + (2 x average width W1 of the assembled wires of the sub heating coils SC on the side that is adjacent to the main heating coil MC) + (2 x average width W2 of the assembled wires of the sub heating coils SC on the outside), when W1 = 15 mm and W2 = 15 mm, then R3 is 250 mm (= 190 mm + 30 mm + 30 mm). The space 271 may not be the minimum dimension of 5 mm but may be, for example, 10 mm. The space is an insulation space that is needed to maintain the insulation between the two objects, namely, the main heating coil MC and each of the sub heating coils SC1 to SC2 that are each supplied with power from different power sources. The dimension of each space 271 can be further shortened by interposing an electrical insulator, such as porcelain or thermally stable plastic, that is formed into a thin plate between the main heating coil MC and each of the sub heating coils SC1 to SC4 so as to block between the two and improve the electric insulation of each space 271.

As shown in Fig. 18, these four sub heating coils SC1 to SC4 are arranged such that their maximum outer diameters are DB. As described in Fig. 19, the outer coil 6LC1 and the inner coil 6LC2 are connected in series. Accordingly, the outer coil 6LC1 and the inner coil 6LC2 are energized at the same time.

Each of the sub heating coils SC1 to SC4 is not a perfect circle and may be divided into two upper and lower layers to facilitate manufacturing. That is, it may be manufactured by bundling about 30 fine wires (element wire) of approximately 0.1 mm to 0.3 mm, twisting one or a plurality of this assembled wire, and spirally winding this into two coils having a completely identical planar shape that is of an ellipse or oval outer shape, and then connecting the two in series, thus forming an electrically single coil. Note that an element wire that is more fine than the element wire of the main heating coil MC may be used in order to improve the magnetic drive force per unit plane area compared to that of the main heating coil MC and in order to perform higher output with smaller plane area.

A space (cavity) 272 is spontaneously created when forming each of the sub heating coils SC1 to SC4. That is, it is inevitably formed when winding the assembled wire in one direction. This space 272 is used to air-cool each of the sub heating coils SC1 to SC4 itself, and the air for cooling supplied from the fan 30 ascends through this space 272. "290" is a coil support in which its entirety is integrally formed of heat-resistant resin. The coil support has eight arms 290B radially extending from the center point X1 and has an outermost circumferential edge 290C with an annual shape connected to the arms.

When the infrared sensors 31L1 to 31 L5 are to be supported, five support portions 290D1 to 290D5 are arranged on the upper side or the lateral side of the arms 290b integrally or as a separate component (see Figs. 18 and 21). Support protrusions 290A are integrally formed on the four arms 290B, among the eight radially extending arms 290B, that face the center portion of the sub heating coils SC1 to SC4. Three support protrusions are interspersed to four locations such that one is provided in the space 272 of the corresponding one of the sub heating coils SC1 to SC4, one of the remaining two is provided nearer to the center point X1 relative to the corresponding one of the sub heating coils SC1 to SC4, whilst the other one is provided on the outside.

Two supporting tongues 290E are integrally formed to each of the four arms 290B that faces the two ends of the sub heating coils SC1 to SC4, on which the two ends of the sub heating coils SC1 and SC4 are placed. The middle portion of the sub heating coils SC1 to SC4 is placed on the top side of the other two arms 290B.

A cylindrical fixing portion 290F is integrally and protrudingly formed on each top side of the supporting tongue 290E. These fixing portions are located in positions corresponding to the two ends of the spaces 272 when the sub heating coils SC1 to SC4 are disposed. With the fixing portions 290F and the support protrusions 290A, three points of the sub heating coils SC1 to SC4, that is, the center portion of the spaces 272 and the inside and outside positions, are positionally controlled. Accordingly, there will be no deformation caused by careless side shifting or by expansion force (typical ones are indicated in Fig. 18 by dot and dash line arrows FU and FI) due to heating.

Note that the reason why the support protrusions 290A and the fixing portions 290F control the positions by partially abutting to the inside and the circumference of each of the sub heating coils SC1 to SC4 without forming a wall (also called a rib) surrounding the whole circumference of each coil is to free the inside and the circumference of the sub heating coils SC1 to SC4 as much as possible so that it becomes a passage for the air for cooling.

As shown in Figs. 18 and 23, the coil support 290 is placed on the top side of the cooling duct 46. The coil support 290 is cooled by the cooling air that is blown up from the blow out hole 46C of the cooling duct 46, and the main heating coil MC and the sub heating coils SC1 to SC4 above are cooled so that they do not reach an abnormal temperature due to the heat generation. Accordingly, substantially whole of the coil support 290 is a gridded shape (see Fig. 18) so as to ensure ventilation of air. The magnetic flux leakage prevention materials 73 that are radially disposed relative to the center point X1 partially traverses the passage of the air. Further, the bottom side of the sub heating coils SC1 to SC4 are in an exposed state except for portions that are facing the arms 290B and the supporting tongues 290E, and thus heat radiation effect is improved by the exposed portion.

The magnetic flux leakage prevention materials 73 are mounted on the bottom side of the coil supports 290 in a radial state relative to the center point X1. As shown in Fig. 17, the spaces 273 are provided so that the adjacent ends of the sub heating coils SC1 to SC4 do not magnetically interfere with each other when the adjacent sub heating coils SC1 to SC4 are energized simultaneously and the flow direction of the high-frequency currents IB flowing therethrough are the same. That is, when driving current is distributed to the circular main heating coil MC in an anticlockwise direction when seen from above and when driving current is distributed to the sub heating coils SC1 to SC4 in a clockwise direction, the direction of the high-frequency current IA flowing in the main heating coil MC and the directions of the currents IB flowing in the sub heating coils SC1 to SC4 on the side near to the main heating coil MC, that is, on the side adjacent to the main heating coil MC, are the same as shown in Fig. 17. However, the direction of the high-frequency currents IB between the adjacent ends of the sub heating coils SC1 to SC4 will be opposite to each other, and, hence, it has been devised to reduce these magnetic interference.

Note that during a predetermined time interval in which the driving current in the main heating coil MC is distributed in a clockwise direction when seen from above, the direction of the currents of the sub heating coils SC1 to SC4 may be alternately changed to opposite directions in a predetermined time interval such that the driving currents to the sub heating coils SC1 to SC4 are distributed in a counterclockwise direction, and, then, are distributed in a clockwise direction.

It is desirable that the amount of space 273 between the end portions of the sub heating coils SC1 to SC4 is larger than the space 271.

Further, Fig. 17 is not a diagram that illustrates the precise dimensions of the actual product and although it cannot be understood directly from the drawing, it is preferable that the transverse dimension, that is, the traverse dimension along the straight line passing through the center point X1, of the spaces (cavities) 272 of the sub heating coils SC1 to SC4, that is, the width indicated by the arrow in Fig. 17, is larger than the space 271. The above is for reducing the magnetic interference that is generated in each of the sub heating coils SC1 to SC4 itself, since the current that flow through the sub heating coils SC1 to SC4 flow in counter directions to each other. Compared to the above, the space 271 may be narrow since cooperative heating is conducted by magnetic coupling.

### (Individual Light Emitting Unit)

Referring to Figs. 15, 17, 18, and 19, individual light emitting units 276 are illuminants that are disposed in four locations interspersed along a concentric circle of the main heating coil MC. Each individual light emitting unit 276 is provided with a light source (not shown) using an electric lamp, organic EL, or light emitting diode (LED) and a light guide that guides light entering from the light source and is driven by a driving circuit 278 shown in Fig. 19.

The light guide may be of synthetic resin including acrylic resin, polycarbonate, polyamide, or polyimide, or a transparent material such as glass. As shown in Fig. 23, the top end side of the light guide is directed towards the bottom side of the top side 21 and the light from the light source is radiated from the top end side of the light guide as indicated by the dot and dash line in Fig. 23. Note that, as above, an illuminant that emits light in a liner manner in the upwards direction is proposed in Japanese Patent No. 3941812, for example. Emitting or lighting of this illuminant will enable the user to know whether each of the sub coils SC1 to SC4 is in an induction heating operation.

### (Wide Area Light Emitting Unit)

Referring again to Figs. 15, 17, 18, and 19, wide area light emitting unit 277 is an annular illuminant that has a maximum outer diameter of DC on a circle that is concentric to that of the individual light emitting units 276, in which the annular illuminant surrounds the outside of the individual light emitting units 276 with a predetermined space 275 in between. This wide area light emitting unit 277 is provided with a light source (not shown) similar to that of the individual light emitting units 276 and a light guide that guides light entering from the light source and is driven by the driving circuit 278 as shown in Fig. 19.

As shown in Fig. 23, the top end side of the light guide of this wide area light emitting unit 277 faces the bottom side of the top plate 21. As indicated by the dot and dash line in Fig. 23, light from the light source is radiated from the top end side of the light guide. With the emitting or lighting of this illuminant, the outer edge portion of the group of sub heating coils SC1 and SC4 and the main heating coil MC can be distinguished.

The position of the guide mark 6LM that is a circle displayed on the top plate 21 does not match the position of the individual light emitting units 276.

This is because while the position of the guide mark 6LM substantially corresponds to the outer diameter DA of the main heating coil MC, the individual light emitting units 276 have sizes that surround the sub heating coils SC1 to SC4.

Further, while the position of the circular cooperative heating area mark EM that is displayed on the top plate 21 substantially coincides with the position of the wide area light emitting unit 277, since the cooperative heating area mark EM is formed on the top plate 21 typically by means of print or the like, the top end portion of the wide area light emitting unit 277 is set so as to adjoinedly face a position a few millimeters outside of the cooperative heating area mark EM in consideration of the print or coating of the paint (using a material that does not penetrate most of the visible light). Note that if transparency of the cooperative heating area mark EM is ensured, they may be completely matched.

"40" is a first electrode for boiling-over detection that is formed of a thin metal conductor and that is formed in a substantially semicircular shape with the center point X1 as its center. Two end portions at the front and rear side includes terminals 42A and 42B. The first electrode 40 is provided on the underside of the top plate 21 near each of the outer circumferences of the right IH heat source 6R and the left IH heat source 6L. Each first electrode 40 is bent along the shape of the outer circumference of the respective sub heating coil C1 and the adjacent sub heating coil SC3.

"41" is a second electrode for boiling-over detection that is formed of a thin metal conductor and that is formed in a substantially semicircular shape with the center point X1 as its center. Two end portions at the front and rear side includes terminals 43A and 43B. The second electrode 41 is provided on the underside of the top plate 21 near each of the outer circumferences of the right IH heat source 6R and the left IH heat source 6L. Each second electrode 41 is bent along the shape of the outer circumference of the respective sub heating coil C2 and the adjacent sub heating coil SC4.

As shown in Fig. 23, the first electrode 40 and the second electrode 41 are provided on the underside of the top plate 21 and in a narrow annular area between the shielding ring 291 and the portion of the individual light emitting unit 276 where light penetrates. Accordingly, in both cases when the object to be cooked boils over from the heated object N onto the portion immediately above the individual light emitting unit 276 or when the object to be cooked further spreads to the outer side of this portion and flows to a position immediately above the wide area light emitting unit 277, occurrence of boiling over is determined. Note that when seen from above the top plate 21, the distance from the wide area light emitting unit 277 to the first electrode 40 and the second electrode 41 is about 10 to 20 mm. Accordingly, when the wide area light emitting unit 277 is lighted, the first electrode 40 and the second electrode 41 are positioned in the inside position of the light belt.

Each of the connecting terminals 42A, 42B, 43A, and 43B extend to the respective space 271 through the respective space 273 and are electrically connected to the boiling-over detection unit 50. The wiring is passed from the space 271 to the other side through a hole of the coil support 290 described later so as to reduce the magnetic influence; however, by contrast, the wire may be extended horizontally in the radial direction from the center point X1. Note that since the space 271 between the main heating coil MC and the group of sub heating coils SC is not larger than the space 273 when comparing the two, in view of reducing the influence of the magnetic field when the main heating coil and the group of sub heating coils SC are driven, a method in which wiring is carried out in the radial direction is devised. However, if it is straightly extended to the outside, because there is the wide area light emitting unit 277 in the whole circumference, the wiring from the connecting terminal traverses over the wide area light emitting unit 277; hence, there are cases in which the shadow of the wire becomes visible of the top side of the top plate 21 when the wide area light emitting unit 277 is lighted.

### (Arrangement of Infrared Sensor)

The infrared sensors 31L include, as shown in Fig. 15, five sensors 31L1 to 31 L5. Among them, infrared sensor 31L1 is disposed in the space 270. This temperature sensor 31L1 detects the temperature of the heated object N such as a pan and the like that is placed on the main heating coil MC. On the outside of the main heating coil MC, infrared sensors 31 L2 to 31 L5 for the sub heating coils SC1 to SC4 are arranged. Each of the infrared sensors is disposed in the corresponding projection-shaped support protrusion 290A formed in the coil support 290.

Note that the infrared sensors 31 L2 to 31 L5 may not be used in order to exert the function of the placement-of-heated-object determination unit 280, that is, the function determining whether there is a heated object N placed or not, and, alternatively, a light detecting unit (photosensor) may be used. This is because reaching of light from the indoor lighting and light of the natural world such as sunlight from above the top plate 21 can be determined. When there is no heated object N placed, the light detecting portion below the heated object N detects ambient light such as that of an indoor lighting, and accordingly can use this as determination information indicating that no pan or the like is placed.

Temperature data from each of the temperature sensors 31R, 31L, 241, 242, 244, and 245 is sent to the energization control circuit 200 through the temperature detecting circuit 240. However, the temperature detection data from the infrared sensors (that is, all of the five sensors 31L1 to 31 L5) related to the heating coils 6RC and 6LC is input to the placement-of-heated-object determination unit 280.

A ring-shaped metal shielding ring 291 (see Fig. 23) is disposed on the outermost side of the coil support 290. A speaker 316 shown in Fig. 19 is driven by signals from a voice synthesizer 315. The voice synthesizer 315 notifies various information that is displayed on the integrated display means 100 by means of phonetic sound. The heating level and the name of the heat source (for example, the left IH heat source 6L) that is performing the heating operation, elapsed time from the start of cooking, remaining heating time set in the timer, various detection temperature, and information that will be of reference for the operation are notified. Information that will be of reference includes information such as detection of abnormal operation, and carrying out of improper operation during use. Further, information that will be of reference includes information enabling various cooking to be performed under a preferable state and a heating position (including the position of the heated object N) to the extent possible. Information such as which of the main heating coil MC and the sub heating coils SC are performing heating operation, which will be described later, is included.

### (Operation of Cooking System)

Next, an outline of an operation of the cooking system configured as above will be described.

A basic operation program from activation of power to the start of preparation of cooking is stored in the storage unit 203 (see Fig. 19) in the energization control circuit 200.

The user first connects the power plug to a commercial power supply of 200 V and pushes the operation button 63A (see Fig. 11) of the main power switch 63 to power-up.

Then a predetermined low supply voltage is supplied to the energization control circuit 200 through the power unit 74 and the voltage stabilizer (not shown) and the energization control circuit 200 is started up. The energization control circuit 200 carries out self-diagnosis with its control program and if there is no abnormality, the motor driving circuit 33 that drives the drive motor 300 of the fan 30 is pre-driven. Further, the left IH heat source 6L, the right IH heat source 6R, and the driving circuit 215 of the liquid crystal display of the integrated display means 100 are each pre-activated.

The temperature detecting circuit 240 in Fig. 19 reads the temperature data detected by each of the temperature detecting elements (temperature sensors) 31R, 31L (unless otherwise specified, in the description hereinafter, including all of the five 31L1 to 31 L5), temperature detecting elements 241, 242, 244, and 245 and sends the data to the energization control circuit 200.

As above, since data such as circuit current, voltage, and temperature of the main components are collected to the energization control circuit 200, the energization control circuit 200 carries out determination of aberrant heating as an abnormality monitoring control before cooking. For example, when the surrounding area of the liquid crystal display substrate of the integrated display means 100 is higher than the heat resistant temperature of the liquid crystal screen substrate (for example, 70°C), then it is determined as abnormally high temperature by the energization control circuit 200.

Further the current detection sensor 227 in Fig. 19 detects the current flowing through each inverter circuit of the right IH heat source 6R and the left IH heat source 6L. This detection output is supplied to the input unit 201 of the energization control circuit 200. The energization control circuit 200 compares the obtained detection current of the current detection sensor with the regular current value in the determination reference data that is stored in the storage unit 203, and if an undercurrent or an overcurrent is detected, the energization control unit 200 determines that there is abnormality due to some kind of trouble or defective conduction.

When no abnormality is determined during the above self-diagnosis, "preparation to start cooking is completed". However, if abnormality is detected, a predetermined abnormal processing is carried out and, start of cooking is disabled.

If no abnormality is determined, displays indicating that heating operation is allowed are displayed in the corresponding areas 100L1, 100L2, 100M1, 100M2, 100R1, 100R2, and 100G of each heat source in the integrated display means 100. Then, a display displaying the user to select a desired heat source and, when induction heating, place the heated object N such as a pan on the desired guide mark 6LM, 6RM, or 7M of the heat source displayed on the top plate 21 (if a voice synthesizer 315 is added so as to work in association with the integrated display means 100, the above operation is encouraged to the user by phonetic sound at the same time.) Further, at the same time, the energization control circuit 200 commands all of the individual light emitting units 276 and the wide area light emitting unit 277 to emit or light in a predetermined color (such as yellow, hereinafter referred to as "pattern 1 ").

Referring to Fig. 24, the overall control operation from completion of the above abnormality determination to the completion of preparation of cooking will be described next.

When the user instructs an operation of preparing heating with the operating unit (not shown) after activating the main power, estimations of whether there is a heated object N placed above the main heating coil MC and the sub heating coils SC1 to SC4 and whether the bottom area of the heated object N is larger than a predetermined value are performed with the placement-of-heated-object determination unit 280, the estimation results are transmitted to the energization control circuit 200 that is a control unit, and determination is performed of whether heating processing that is suitable for a large-diameter pan or heating processing that is suitable for a normal pan is to be performed (step MS11). Processing different to the processing for a large-diameter pan is carried out when with a normal-sized or small-sized suitable pan or when with a pan unsuitable for heating or the like.

The energization control circuit 200 makes the liquid crystal display screen of the integrated display means 100, disposed near the control unit E, to display a display that encourages selection of the desired cooking menu (MS12).

When the user selects and inputs, with the operating unit, the cooking menu, heating power, and the cooking time (MS13), full-fledged induction heating operation is started (MS14).
As the cooking menu displayed on the display means G, there are seven modes, namely "rapid heating", "deep fry", "water-boiling", "preheating", "rice-cooking", "boiling", and "water-boiling and heat-retaining", similar to the ones described in Embodiment 1.

When the user selects one from the seven cooking menus, the program embedded in the energization control circuit 200 automatically selects a control mode corresponding to the menu, and settings such as whether to energize each of the main heating coil MC and the sub heating coils SC1 to SC4, the amount of energization (heating power), and the energization time are set. Depending on the cooking menu, the display unit displays a display encouraging the user to set an arbitrary heating power, energizing time, and the like(MS15).

With the above, the preparation of shifting to a cooking step targeting a large-diameter pan is completed, and after selection of the cooking menu, induction heating operation is promptly started. Note that the case with a "normal-sized pan" or a "small-sized pan" is basically similar to the above steps MS12 to MS 15. In the case with the "normal-sized pan" or the "small-sized pan", the seven cooking menus are also displayed on the integrated display means 100 as its cooking menus; however, in the case with the "normal-sized pan" or the "small-sized pan", since only the main heating coil MC in the center is heated in Embodiment 2, the control contents (heating power, the energization pattern, and the like) are greatly different. Naturally, it is not possible to individually control all or part of the sub heating coils SC1 to SC4, and there is no heating pattern in which the sub heating coils SC1 to SC4 are used. That is, the convection acceleration control using the sub heating coils SC1 to SC4 is not performed.

### (Cooking Step)

Next, a case in which the procedure has been shifted to the cooking step will be described with an exemplary case in which the right IH heat source 6R is used with "a normal-sized pan or a small-sized pan". Note that, in Embodiment 2, a small-sized pan refers to one with a diameter under 10 cm.

There are two ways to use the right IH heat source 6R, that is, to use the front side operating unit 60 and to use the top side operating unit 61. However, description of starting cooking with the front side operating unit will be omitted and a case in which the top side operating unit 61 is used will be described.

### (Starting Cooking with Top Side Operating Unit)

Next, a case in which the top side operating unit 61 (see Fig. 13) is used will be described.

Since the energization control circuit 200 is already activated and the driving circuit 215 (see Fig. 19) of the liquid crystal display of the integrated display means 100 is pre-activated, input keys for selecting the heat sources are displayed on the liquid crystal display of the integrated display means 100. Here, when an input key that selects the right IH heat source 6R among the above heat sources is pressed, an area of the area corresponding to the right IH heat source 6R in the liquid crystal display is automatically enlarged, and further, in this state, the input keys are displayed with input functions switched so as to correspond to the situation, and by successively operating the displayed input keys, cooking conditions such as the type of cooking, the level of heating power, and the heating time are set.

Further, when at a stage in which the desired cooking conditions are set, the input key displays characters "SET". The inputting of the cooking conditions is set by touching this.

Furthermore, as described above, the energization control circuit 200 performs determination processing of the propriety of the pan. When it is determined that the pan (heated object N) is adaptable, the energization control circuit 200 carries out energization control processing that automatically accommodates power so that the right IH heat source 6R exerts a predetermined heating power that the user has set. With this, the pan, which is the heated object N, becomes high in temperature by the high-frequency magnetic flux from the right IH heating coil 6RC, and thus an electromagnetic induction cooking operation (cooking step) is started.

### (Starting Cooking with Grill Heating Chamber)

Next, a case in which the electric radiant heat sources 22 and 23 (see Fig. 19) of the grill heating chamber 9 are energized will be described. Cooking with this can be carried out while the right IH heat source 6R and the left IH heat source 6L are heat cooking; however, a limiting program with an interlock function is embedded in the energization control circuit 200 so that cooking cannot be carried out with the central electric radiant heat source 7 at the same time. This is because the above will exceed the limit of the rated power of the whole cooking system.

There are two ways to start various cooking in the grill heating chamber 9, which are using the input key displayed on the liquid crystal display of the integrated display means 100 in the top side operating unit 61, and pushing the press key type operation button for the electric radiant heat sources 22 and 23 that are displayed on the top side operating unit 61 at all times.

In either way, various cooking can be carried out in the grill heating chamber 9 by energizing the electric radiant heat sources 22 and 23 at the same time or separately. By receiving information from a temperature sensor 242 and a temperature control circuit 240, the energization control circuit 200 controls the energization of the electric radiant heat sources 22 and 23 so that the ambient temperature inside the grill heating chamber 9 becomes a target temperature, which is set in the energization control circuit 200 in advance, and after elapse of a predetermined time from the start of the cooking, notifies it (display by the integrated display means 100 or a notification by the voice synthesizer 315), and ends the cooking.

Due to heat cooking with the electric radiant heat sources 22 and 23, hot air with high temperature is generated inside the grill heating chamber 9. Accordingly, the internal pressure of the grill heating chamber 9 naturally increases and air naturally ascends in the exhaust duct 14 from the outlet 9E at the back.
The air is exhausted, as indicated by arrow Y8, from the end opening 14A.

### (Starting Cooking with Left IH Heat Source)

Next, operation in a case in which the left IH heat source 6L is used in heat cooking will be described. Note that, similar to the right IH heat source 6R, there are two ways to shift to cooking mode after the abnormality monitoring processing before cooking has been completed and to use the left IH heat source 6L, that is, to use the front side operating unit 60 (see Fig. 11) and to use the top side operating unit 61 (see Fig. 13). In the below description, description will be given of a case in which the top side operating unit 61 (see Fig. 13) is used and in which a large-diameter pan is used as the heated object N from the stage in which energization to the left IH heating coil 6LC (see Fig. 11) is started and cooking is started.

In the cooking system of Embodiment 2, when an elliptical or a rectangular pan (heated object N) that has a pan bottom diameter greatly larger than the maximum outer diameter DA (see Fig. 15) of the main heating coil MC is used, there is an advantage in that as well as heating the elliptical heated object N with the main heating coil MC, cooperative heating can be performed with the sub heating coils SC1 to SC4.

For example, it is assumed that there is an elliptical pan (heated object N) that extends over both the main heating coil MC and a single sub heating coil SC1 that is on the right of the main heating coil MC.

When such an elliptical pan (heated object N) is placed and heat cooking is started, the temperature of the elliptical pan (heated object N) increases. Both the infrared sensor 31 L1 (Fig. 15) of the main heating coil MC and the infrared sensor 31 L2 of the sub heating coil SC1 detect a phenomenon indicating that the input of the ambient light (light of the indoor light and sunlight) is smaller compared to those of the other infrared sensors 31 L3, 31 L4, and 31 L5 and that the temperature is on the rise. Based on these information, the placement-of-heated-object determination unit 280 determines that an elliptical pan (heated object N) exists.

Further, basic information to determine whether the same single heated object N is placed above is input to the placement-of-heated-object determination unit 280 (see Figs. 19 and 22) from the current sensor 227 of the main heating coil MC and the current sensors 267A to 267D (see Fig. 19) of each of the sub heating coils SC1 to SC4. By detecting the current change, the placement-of-heated-object determination unit 280 detects the impedance change of the main heating coil MC and the sub heating coils SC. The energization control circuit 200 issues a command signal to drive the inverter circuit MIV of the main heating coil MC on which the elliptical pan (heated object N) is placed and each inverter circuit SIV1 to SIV4 of the sub heating coils SC1 to SC4, distribute high-frequency current to at least one of the sub heating coils among the four sub heating coils SC1 to SC4 that is placed with the elliptical pan (heated object N), and suppress or stop distributing high-frequency current to one or some of the remaining sub heating coils that is not placed with the elliptical pan (heated object N).

For example, when the placement-of-heated-object determination unit 280 determines that the same singular elliptical pan (heated object N) is placed above the main heating coil MC and a single sub heating coil SC1, the energization control circuit 200 operates only the main heating coil MC and the specific sub heating coil SC1 to work in association with each other and provides high-frequency power to the two heating coils in a heating power rate set in advance from respective inverter circuits MIV and SIV1 (the heating power distribution will be described later in detail).

Here, when the user starts cooking with the left IH heat source 6L with a heating power of 3 kW, for example, in which 2.4 kW is distributed to the main heating coil MC and 600 W to the sub heating coil SC1 by the energization control circuit 200, the "heating power rate" refers to the above ratio of 2.4 kW and 600 W. In this example, the heating power rate is 4:1. Further, only the individual light emitting unit 276 (see Figs. 15 and 17) that is positioned outside the sub heating coil SC1 is changed from a yellow light emitting state (pattern 1) to a red light emitting state (hereinafter, referred to as "pattern 2"). The driving circuit 278 (see Fig. 19) drives the individual light emitting unit 276, and a predetermined light source (red lamp, LED, etc.) in the individual light emitting unit 276 is emitted or lighted and the yellow light source that had been emitted or lighted until then is turned off. Accordingly, only the activated sub heating coil SC1 is displayed with a red light belt so as to be visible from above the top plate 21. The emitting of the individual light emitting units 276 corresponding to the other sub heating coils are stopped.

This sub heating coil SC1 cannot be driven alone to perform induction cooking and the other three sub heating coils SC2, SC3, and SC4 cannot perform induction cooking by itself or by combination. In other words, the feature is such that one or some of the four sub heating coils SC1, SC2, SC3, and SC4 that are disposed around the main heating coil MC are only heated and driven when the main heating coil MC is driven. Note that there is a control program for the energization control circuit 200 in which the four sub heating coils are driven with the following control pattern when the mode for convection acceleration is to be performed in a case in which a heated object N with a large diameter that covers over all of the four sub heating coils SC1, SC2, SC3, and SC4 is placed.
(1) In a case in which the main heating coil MC is heat driven, all or part of the sub heating coils SC1, SC2, SC3, and SC4 are heat driven with a predetermined order and heating powers at the same time as the main heating coil MC.
(2) During the period in which the main heating coil MC is heat driven, all or part of the sub heating coils SC1, SC2, SC3, and SC4 are heat driven with a predetermined order and heating powers.
(3) In a predetermined time period before the end of heat driving of the main heating coil MC (for example, at the final stage of cooking), all or part of the sub heating coils SC1, SC2, SC3, and SC4 are heat driven with a predetermined order and heating powers.

Further, when such cooperative heating is carried out, the energization control circuit 200 supplies high-frequency power from the dedicated inverter circuits MIV and SIV1 to the main heating coil MC and the specified sub heating coil SC1 in proportion with the heating power rate set in advance to carry out the heating operation. Based on this information, the energization control circuit 200 issues a driving command to the driving circuit 278 (see Fig. 19) and the individual light emitting unit 276 is, as mentioned above, from when the cooperative heating has been started, made to emit light so that the sub heating coil SC1 that is carrying out the cooperative heating can be identified.

Further, in Embodiment 2, the individual light emitting unit 276 is emitted or lighted as a means of displaying the cooperative heating. That is, the user can recognize that a state of cooperative heating has been entered when the individual light emitting unit 276 is changed from the initial yellow light emitting state (pattern 1) to the red light emitting state ("pattern 2").

Note that rather than this displaying pattern, the integrated display means 100 may directly display characters on the liquid crystal display screen.

Note that the wide area light emitting unit 277 (see Fig. 15, 17, and 23) is driven by the driving circuit 278 (see Fig. 19) from the stage in which the abnormality determination is completed after the activation of power by the user pushing the operation button 63A (see Fig. 11) of the main power switch 63. Since it is first emitted or lighted in yellow, it will be possible to guide the user the placing position from the stage in which the elliptical pan (heated object N) is placed above the left IH heat source 6L. At the stage in which the heating operation is started by supply of high-frequency power for heating to the main heating coil MC, the energization control circuit 200 changes the luminescent color of the wide area light emitting unit 277 (for example, changing the ones that were yellow to red). For example, the emitting or lighting of the yellow light source (lamp, LED, etc.) in the wide area light emitting unit 277 is stopped and, alternatively, the emitting or lighting of the red light source (lamp, LED, etc.) that is disposed next to the yellow light source may be started or a polychromatic light source (three color LED and the like) may be used to change the luminescent color.

Further, even when the elliptical pan (heated object N) is temporarily lifted up or shifted to the left or right for a predetermined time t (a few seconds to about 10 seconds), the energization control circuit 200 maintains the heating operation and does not change the emitting or lighting status of the wide area light emitting unit 227 and keeps on displaying the preferable position to place the elliptical pan (heated object N) to the user.

At this point, when the elliptical pan (heated object N) is lifted up for more than the predetermined time t, the placement-of-heated-object determination unit 280 determines that there is no elliptical pan (heated object N) and outputs this to the energization control circuit 200. On the basis of the discrimination information from the placement-of-heated-object determination unit 280, the energization control circuit 200 issues a command temporarily reducing or stopping the heating power of the induction heating until the elliptical pan (heated object N) is placed once more.

In this case, while the preferred place to place the elliptical pan (heated object N) is kept displayed to the user, the emitting or lighting state (lighting color) of the wide area light emitting unit 277 may be changed in accordance with the state of the heating power. For example, when in a state in which the heating power is lowered, it may be emitted or lighted in orange, and when stopped, emitted or lighted in yellow. Accordingly, it will be possible to display the preferable place of placement, as well as notifying the state of the heating power to the user.

Further, when the elliptical pan (heated object N) is shifted to the left, for example, the placement-of-heated-object determination unit 280 determines that the same singular elliptical pan (heated object N) is placed above the main heating coil MC and the sub heating coil SC2 on the left side, and, based on the discrimination information from the placement-of-heated-object determination unit 280, the energization control circuit 200 operates only the two, that is, the main heating coil MC and the specific sub heating coil SC2, to work in association with each other and provides the high-frequency power to the two heating coils in a heating power rate set in advance from respective inverter circuits MIV and SIV2. Further, the energization to the sub heating coil SC2 on the left side is stopped. The "heating power" (for example 3 kW) and the heating power distribution (for example, when cooking with a heating power of 3 kW with the left IH heat source 6L, the main heating coil MC will have a heating power of 2.4 kW and the sub heating coil SC1 will have a heating power of 600 W, so it will be 4:1) that are already performed are maintained and cooking is continued. The integrated display device 100 maintains the display of the heating power of 3 kW by means of numbers and letters.

Further, since the sub heating coil SC1 is not contributing to the cooperative heating any more, and alternatively, since a different sub heating coil SC2 has been added to the cooperative heating operation, high-frequency power is supplied to the dedicated inverter SIV2. That is, when the energization control circuit 200 detects that the sub heating coil SC1 has been switched to the sub heating coil SC2 on the basis of discrimination information from the placement-of-heated-object determination unit 280, the energization control circuit 200 issues a driving command to the driving circuit 278. It is commanded so that the sub heating coil SC2 performing cooperative heating can be identified with the individual light emitting unit 276. That is, the energization control circuit 200 makes the driving circuit 278 drive the individual light emitting unit 276 such that the individual light emitting unit 276 on the outside position (left side in Fig. 18) of the relevant sub heating coil SC2 alone is emitted or lighted. Accordingly, the specified light source (red lamp, LED, etc.) in the individual light emitting unit 276 is emitted or lighted (with pattern 2) and the red light source that has been emitted or lighted until then at a position adjoining the sub heating coil SC2 is turned off.

The drive frequency for driving the inverter circuit MIV is basically set to be the same as the drive frequency for the inverter circuits SIV1 to SIV4 for the sub heating coils. This has been set in view of preventing abnormal sound (beat noise) from being generated described as above. The direction of the high-frequency current IA flowing in the main heating coil MC and the high-frequency current IB flowing in each of the sub heating coils SC1 to SC4 are preferably the same on their adjacent sides, as shown by the solid arrows in Fig. 17, from the view point of heating efficiency (Fig. 17 illustrates a case in which they are in agreement while the main heating coil MC has a flow in the counterclockwise direction and each of the four sub heating coils has a flow in the clockwise direction).

This is because, in an area where two independent coils are adjacent to each other, when the currents of the coils flow in the same direction at the same time, the magnetic fluxes generated by the currents intensifies each other, the density of the magnetic flux that interlink with the heated object N is increased, and more eddy current is generated on the bottom side of the heated object; hence, efficient induction heating is enabled. The loops illustrated by broken lines in Fig. 23 shows magnetic flux loops when high-frequency currents with opposite flow directions with that of the high-frequency currents IA and IB shown in Fig. 20 are made to flow.

With this magnetic flux loop, eddy current that flows in the opposite direction to the high-frequency current is generated on the bottom side of the heated object N, and Joule heat is generated. When the main heating coil MC and the sub heating coils SC1 to SC4 are disposed close to each other and when the currents are made to flow in opposite directions, the alternating magnetic fields generated by the coils interfere with each other in a certain adjoining area and as a result restricts the amount of pan current (the current flowing in the heated object N) generated by the main heating coil MC and the sub heating coils SC1 to SC4 from becoming large and the calorific value that becomes large proportional to the square of this pan current is curbed. However, conversely, this creates a different advantage. That is, in the adjacent area described above where the magnetic flux density becomes high, since the magnetic flux density can be suppressed to a low density, in a wide area planarly covering the main heating coil MC and one or more sub heating coils SC1 to SC4 performing cooperative heating, the distribution of the magnetic flux that interlink with the heated object N can be equalized, that is, can be uniformized, thus providing an advantage that the temperature distribution can be uniformized when cooking in a wide heating region.

Accordingly, Embodiment 2 adopts a method in which currents are distributed in the same direction in areas in which the heating coil MC and each of the sub heating coils SC1 to SC4 are adjacent to each other in specific cooking menus, and employs a switching operation in which the directions of the currents are made to counter each other in opposite directions in other cooking menus. Note that the direction of each magnetic loop shown in Fig. 23 is determined by the directions of the high-frequency currents IA and IB flowing in the heating coils.

Figs. 24 to 27 illustrates a flowchart of a cooking operation according to Embodiment 2 of the invention.

The control program in this flowchart is stored in the storage unit 203 (see Fig. 19) that is inside the energization control circuit 200.

Since Fig. 24 has already been described, Fig. 25 will be described. First, when starting cooking, initially, the operation button of the main power switch 63 provided in the front side operating unit 60 of the main body A of the cooking system, illustrated in Fig. 11, is pushed and turned on (step 1, hereinafter, "step" will be abbreviated as "ST"). Accordingly, electric power of a predetermined voltage is supplied to the energization control circuit 200, and the energization control circuit 200 itself checks whether there is any abnormality in the entire cooking system (ST2). The energization control circuit 200 carries out self-diagnosis with its control program and if there is no abnormality, the motor driving circuit 33 (see Fig. 22) that drives the drive motor 300 of the fan 30 is pre-driven. Further, the driving circuit 215 of the liquid crystal display of the left IH heat source 6L and the integrated display means 100 are each pre-activated (ST3).

Then, as a result of the abnormality determination processing (ST2) if no abnormality is detected, the process proceeds to ST3. On the other hand, if abnormality is detected, the process proceeds to predetermined abnormal processing and, ultimately, the energization circuit 200 itself turns the electric power off and stops.

When the process proceeds to ST3, the energization circuit 200 controls the driving circuit 278 so that all of the individual light emitting units 276 and the wide area light emitting unit 277 are emitted or lighted at the same time (yellow color, pattern 1). Note that either one of the individual light emitting units 276 and the wide area light emitting unit 277 may be first emitted or lighted, then, a different light emitting unit may be emitted or lighted, and thus, by gradually increasing the number of light emitting units, all of the individual light emitting units 276 and the wide area light emitting unit 277 may be emitted or lighted. Then, in the above state in which all of the individual light emitting units 276 and the wide area light emitting unit 277 are emitted or lighted (with pattern 1), command from the user is awaited. Note that all of the individual light emitting units 276 and the wide area light emitting unit 277 are in a state in which yellow light is continuously emitted (ST3A).

Then, as mentioned above, since there are IH heating sources 6L and 6R on the left and right side, respectively (see Fig. 12), the user selects either one with the front side operating unit 60 or the top side operating unit 61 (ST4). Here, when the left IH heat source 6L is selected, the result of the selection is displayed in the corresponding area for the left IH heat source 6L in the integrated display means 100. The area of the corresponding area is automatically enlarged, and this area is maintained for a certain time period (when other heat sources, such as the right IH heat source 6R, are not in operation, then, this enlarged area is kept as it is until cooking is completed). Subsequently, it is detected whether there is a pan (heated object N) above the selected heating coil 6LC. This detection is carried out by the placement-of-heated-object determination unit 280.

When the energization control circuit 200 determines that a pan (heated object N) is placed on the basis of the detection information of the placement-of-heated-object determination unit 280 (ST5), the energization control circuit 200 determines if the pan (heated object N) is appropriate for induction heating (ST6). This determination is carried out on the basis of discrimination information from the placement-of-heated-object determination unit 280. The placement-of-heated-object determination unit 280 discriminates the heated object N, such as a pan (heated object N) that has a markedly small diameter of a few centimeters and a pan (heated object N) in which its bottom is greatly deformed or bent, on the basis of the difference in their electrical characteristics, and outputs the discrimination result as discrimination information.

Further, on the basis of the discrimination information from the placement-of-heated-object determination unit 280, the energization control circuit 200 performs determination processing of whether the pan (heated object N) is appropriate at ST6, and when it is determined to be appropriate, the procedure proceeds to step ST7. The set heating power (for example, one of the nine levels, such as 120 W for the minimum heating power "heating power 1" to 2.5 kW for the "heating power 8" and 3 kW for the "maximum heating power") is displayed in the corresponding area 100L1 of the left IH heat source 6L of the integrated display means 100. For example. 1 kW. Note that the heating power may initially be set to a predetermined heating power, such as a middle heating power (for example a heating power 5 of 1 kW) as the default setting, allowing cooking to be started with this initially set heating power without the user having to set the heating power.

Further, if inappropriate, since the display means such as the integrated display means 100 is already operating at this stage, the energization control circuit 200 makes the integrated display means 100 display that the pan (heated object N) is inappropriate, and at the same time, makes the voice synthesizer 315 output this as message information and the speaker 316 to notify this by output of phonetic sound.

As above, when either one of the left or right IH heat sources 6L and 6R is selected, since cooking is started automatically based on the preset heating power (1 kW mentioned above, for example), there is no need to issue a new cooking start command with the input key, the dial, or the operation button. Naturally, the user can arbitrarily change the heating power at all times after the start of the induction heating.

When the heating operation is started in ST7A with the left IH heat source, induction heating is carried out with the main heating coil MC and the sub heating coils SC1 to SC4 that constitute the left IH heat source 6L. In ST5, detection has been carried out whether the pan (heated object N) is only on the main heating coil MC or, further, in addition to that, on which sub heating coils SC1 to SC4 the pan is placed. If the pan (heated object N) is placed only on the main heating coil MC, it will be induction heating with the main heating coil MC alone, and if the same pan (heated object N) is also on at least one of the sub heating coils SC1 to SC4, it will be cooperative heating with the main heating coil MC and the at least one of the sub heating coils SC. The above determination processing is carried out in ST8.

In the case of cooperative heating, under the control of the energization control circuit 200, cooperative heating is started by supplying high-frequency current to the sub heating coils SC1 to SC4 involved in the heating and the main heating coil MC from the corresponding inverter circuits MIV and SIV1 to SIV4 (ST9). Further, with the control command from the energization control circuit 200, the illumination pattern of the wide area light emitting unit 277 is changed from the emitting or lighting state of yellow (pattern 1) to the emitting or lighting state of red (pattern 2) (ST10). Note that the change may be such that while the same color as ST3A is emitted or lighted, the emitting or lighting is performed in an intermittent manner so that it looks as if it is flashing to the user or may be such that the brightness of the emitting or lighting is increased. Either corresponds to changing the pattern and switching of the invention.

Further, the energization control circuit 200 outputs to the integrated display means 100, for example, information indicating that the main heating coil MC and the sub heating coil SC1 are in the midst of cooperative heating along with information on the heating power. Accordingly, the corresponding areas of the integrated display means 100 displays that SC1 is the sub heating coil that has started the heating operation by means of characters and graphics. Further, the energization control circuit 200 creates phonetic sound information such as "sub heating coil on the right is also carrying out heating" and outputs this from the speaker 316. As such the above message is displayed and is notified from the speaker 316 by phonetic sound at the same time.

Note that other than keeping the emitting or lighting state of the wide area light emitting unit 277, as shown in Fig. 15, the individual light emitting unit 276 provided in each of the sub heating coils SC1 to SC4 may be simultaneously emitted or lighted, for example, so that the user can visually identify the sub heating coils SC1 to SC4 that are involved in the cooperative heating.

Further, the processes ST8 to ST 10 are repeated in a short cycle of a few seconds until there is a heat-cooking stop command from the user. Even if the sub heating coil SC1 on the right side is temporarily involved in the cooperative heating, there are cases in which the placed position of the pan (heated object N) is changed by unintentional or intentional slight shifting of the pan (heated object N) in all directions by the user during cooking. Thus, in the cooperative heating determination step ST8, information of the placement-of-heated-object determination unit 280 is always output from the voice synthesizer 315 as well. Accordingly, when the energization control circuit 200 carries out processing of specifying the sub heating coils SC1 to SC4 that are to be heat driven based on information from the placement-of-heated-object determination unit 280 and the temperature sensors 31 L1 to 31 L5, the voice synthesizer 315 notifies the result in real time.

On the other hand, if it is determined that cooperative heating is not to be performed in ST8 (corresponding to step MS11 in Fig. 24), the energization control circuit 200 controls the main inverter circuit MIV such that the main heating coil MC alone is driven. Accordingly, high-frequency current is supplied from the inverter circuit MIV to the main heating coil MC and independent heating is started (ST11). Then, the individual light emitting unit 276, which radiates light to the outer circumferential edge of the heating area corresponding to the main heating coil MC that is involved in the independent heating, is changed from the state in which yellow light is emitted or lighted (pattern 1) to the state in which red light is emitted or lighted (pattern 2) (ST12).

Note that the change may be such that while the same color as ST3 is emitted or lighted, the emitting or lighting is performed in an intermittent manner so that it looks as if it is flashing to the user or may be such that the brightness of the emitting is increased. Both are change and switching of patterns. Note that other than keeping the emitting or lighting state of the individual light emitting units 276, the emitting or lighting of the wide area light emitting unit 277 may be continued but also may be turned off. Then the process proceeds to step 13.

Subsequently, when a heat-cooking stop command is sent from the user or when it is determined by the energization control circuit 200 that a certain set time has elapsed (time is up) during cooking with the timer, the energization control circuit 200 controls the main inverter circuit MIV and the sub inverter circuits SIV1 to SIV4 and stops the energization of the main heating coil MC and all of the sub heating coils SC1 to SC4 that has been heat driven at that time. Further, in order to alert that the temperature of the top plate 21 is high, the energization control circuit 200 allows a high-temperature notifying operation to be started which is done by flashing all of the wide area light emitting unit 277 and the individual light emitting units 276 in red (ST14).

The high-temperature notifying operation is continued after the energization of the main heating coil MC and the sub heating coils SC1 to SC4 are stopped until a certain time that has been set in advance (for example, 20 minutes) elapses or until the detection temperature data from the temperature detecting circuit 240 indicates that the temperature of the top plate 21 has dropped to, for example, 50°C (due to natural heat radiation, it normally takes 20 minutes or more). The above determination of the temperature drop or elapse of time is performed in ST15 and if the high-temperature notifying condition is satisfied, the energization control circuit 200 ends the high-temperature notification and the operation of the cooking system is ended (subsequently, the electric power switch is automatically tuned off. That is, when the power switch had been turned ON, power has been supplied to a relay (not shown) for maintaining the power switch ON. This power supply is shut off, and the relay is turned OFF; hence, the power switch is also turned OFF automatically).

Note that the energization control circuit 200 synchronizes with the start of the high-temperature notifying operation ST14, and displays a warning text "Do not touch the top plate, the top plate is still high in temperature" or a graphic indicating this on the liquid crystal screen of the integrated display means 100. Note that in the vicinity and neighbor of the integrated display means 100, a separate display may be provided that displays with LEDs characters "Caution High Temperature" that stand out on the top plate 21, and this may further notify the high temperature.

As configured as above, in Embodiment 2, it is possible to perform induction heating to large-diameter pans that had not been possible conventionally. Further, after the start of energization of the heating coil and before the induction heating operation substantially starts, it is possible to inform the user all of the heating region by means of emitting or lighting of the individual light emitting units 276 and the wide area light emitting unit 277. Then, since the emitting or lighting state of the individual light emitting units 276 and the wide area light emitting unit 277 can be visually confirmed by the user, after the selection of the heat source by the user and the start of the heating operation, even in the preparation state before placing the pan (heated object N), the optimum position to place the pan (heated object N) can be understood, and thus provides the user with high usability.

Further, since the high-temperature notification is performed by using the individual light emitting units 276 and the wide area light emitting unit 277, a cooker with high safety can be provided without increasing the parts count.

An operation in a case where the sub heating coil performing the cooperative heating operation is switched from SC1 to SC2 after the illumination pattern of the wide area light emitting unit 277 has been changed from the emitting or lighting state of yellow (pattern 1) to the emitting or lighting state of red (pattern 2) (ST10) will be described subsequently with reference to Fig. 26.

As mentioned above, when the user moves the elliptical pan (heated object N) on the top plate 21 to the left, for example, the placement-of-heated-object determination unit 280 determines that a same single elliptical pan (heated object N) is placed on the main heating coil MC and the sub heating coil SC2 on the left side and outputs this discrimination information to the energization control circuit 200.

Referring to Fig. 26, when the energization control circuit 200 detects this on the basis of the discrimination information from the placement-of-heated-object determination unit 280 (ST10A), the sub inverter circuit SIV1 corresponding to the sub heating coil SC1 is stopped, and the main inverter circuit MIV and the sub inverter circuit SIV2 are controlled such that only the main heating coil MC and the specific sub heating coil SC2 on the left side work in association with each other. As such, high-frequency power is supplied to the two heating coils MC and SC2 in a heating power rate set in advance from respective inverter circuits MIV and SIV2. Further, the energization to the sub heating coil SC1 on the right side is stopped. The "heating power" (for example 3 kW) and the heating power distribution (for example, when attempting to cook with a heating power of 3 kW with the left IH heat source 6L, the main heating coil MC will have a heating power of 2.4 kW and the sub heating coil SC1 will have a heating power of 600 W, so it will be 4:1) that are already performed are maintained and cooking is continued. The integrated display device 100 maintains the display of the heating power of 3 kW by means of numbers and letters (ST10B).

Further, the corresponding area of the integrated display means 100 displays that the sub heating coil that is performing the heating operation has been switched from SC1 to SC2 by means of characters and graphics.

Subsequently, in step ST10C, unless the user changes the heating power settings, the processes ST8 to ST10 is repeated until there is a heat-cooking stop command from the user. When a heat-cooking stop command is sent from the user or when it is determined by the energization control circuit 200 that a certain set time has elapsed (time is up) during cooking with the timer, the process jumps to ST14 in Fig. 25, and the energization control circuit 200 stops the energization of the main heating coil MC and all of the sub heating coils SC1 to SC4 that has been heat driven at that time and ends the process (ST14 to ST16).

The end of the heating operation is displayed in the corresponding area of the integrated display means 100. Further, unless the user has turned off the switch (not shown) of the voice synthesizer 315, similar to ST10, the end of the operation is notified by phonetic sound at the same time. Note that although the control program has been described with a sequential flowchart in Figs. 24 to 27, the determination processing of abnormality (ST2), determination processing of whether a pan is placed or not (ST5), determination processing of appropriateness of the pan (ST6), and the like are provided as subroutines. Further, interrupt handling is performed such that the main routine that determines the heating control operation is interrupted by the subroutine at appropriate timings. In actuality, abnormality detection and detection of placement of a pan is executed a number of times during induction cooking. The boiling-over detection is one of the above.

As described above, the induction cooking system according to Embodiment 2 of the invention includes a main heating coil MC heating a heated object N placed on a top plate 21; a group of sub heating coils SC including a plurality of sub heating coils SC1 to SC4 each disposed adjacent to an outside of the main heating coil; a main inverter circuit MIV supplying a high-frequency current to the main heating coil MC; a group of sub inverter circuits SIV1 to SIV4 independently supplying the high-frequency current to each of the plurality of sub heating coils of the group of sub heating coils; a placement-of-heated-object determination unit 280 determining whether a same heated object N is placed above the main heating coil and the first or sub heating coils; input units 64R, 64L, 70, 71, and 72 that are operated by the user setting a heating power during induction heating; integrated display means 100 on which the setting information of the input unit is displayed; and an energization control circuit 200 controlling, on the basis of the setting information of the input unit, output of each of the main inverter circuit MIV and the group of sub inverter circuits SIV1 to SIV4, in which, on the basis of information from the placement-of-heated-object determination unit 280, when a cooperative heating operation is started with the main heating coil MC and the group of sub heating coils SC, the energization control circuit 200 controls the output of the main inverter circuit MIV and the output of the group of sub inverter circuits SIV1 to SIV4 to become a predetermined distribution such that a cooperative heating operation with a heating power set by a user is obtained, when in a state in which one or some of the sub heating coils SC that is performing the cooperative heating operation is increased or reduced in number, or is switched to a different one of the sub heating coils, the energization control circuit 200 maintains the distribution of the output before the change and the display means 100 displays the predetermined heating information so as to be visually seen regardless of the increase or reduction in the number of sub heating coils that is performing the cooperative heating operation or the switching to the different sub heating coil.

Further, the induction cooking system according to Embodiment 2 includes a top plate 21 for placing a heated object N including a pan for holding an object to be cooked; an annular main heating coil MC disposed below the top plate; first sub heating coils SC1 and SC3 and second sub heating coils SC2 and SC4 that are adjoinedly disposed on both sides of the main heating coil, and that have a flatten shape with a width smaller than a radius of the main heating coil; inverter circuits MIV and SIV1 to SIV4 supplying induction heating power to the main heating coil and the sub heating coils, respectively; a static capacitance detection means 50 disposing a plurality of electrodes 40 and 41 at outside positions of the respective sub heating coils under the top plate; individual light emitting units 276 displaying that the sub heating coil(s) that is heat driven during cooperative heating by means of light from below the top plate; an energization control circuit 200 controlling outputs of the inverter circuits; and an operating unit 61 commanding a heating stop operation or the heating condition to the energization control circuit, in which the energization control circuit 200 supplies induction heating power from the inverter circuit to the first sub heating coils SC1 and SC3 and the second sub heating coils SC2 and SC4 alternately or with a predetermined interval and stops driving of or reduces outputs of the inverter circuits when the static capacitance detection means 50 detects a change in static capacitance, the electrodes 40 and 41 include a first electrode 40 that is disposed on the outer periphery of the first sub heating coil SC1 and below and include a second electrode 41 that is disposed on the outer periphery of the second sub heating coils SC2 and SC4 and below, each of the electrodes is provided near an area of the top plate through which light of the individual light emitting unit penetrates, and when a boiling over is detected, the energization control circuit 200 illuminates (including flashing) the individual light emitting unit 276 that is near the electrode that has detected the boiling over.

A case in which the user changes the heating power settings in step ST10C during heating of the "large-diameter pan" will be described. In ST10C in Fig. 26, when it is determined that a heating-power change command has been issued, the process proceeds to ST17 in Fig. 27. In ST17, it is determined whether the changed heating power is higher or lower than a predetermined heating power level (for example, 501W); if it is changed to a higher heating power than the predetermined heating power, then the process proceeds to ST18, while the predetermined heating power distribution is maintained by control of the energization control circuit 200. That is, in the above-mentioned example of 3 kW, when the executed heating power is 3 kW, then the heating power of the main heating coil MC is 2.4 kW and the heating power of the sub heating coil SC2 is 600 W, and the ratio is 4:1. This distribution is maintained. Further, the set heating power after the change is displayed in the corresponding area of the integrated display means 100 as "heating power 'middle' 1 kW" by the energization control circuit 200.

On the other hand, when the heating power is changed to a heating power that is smaller (there are three: 120 W, 300 W, and 500W) than the predetermined heating power level (501 W), the process of step 17 is followed by step 19, and the energization control circuit 200 outputs a control command signal with a different heating power distribution to the main inverter circuit MIV and the group of sub inverter circuits SIV1 to SIV4. Accordingly, even if the number of sub heating coils SC that is to perform cooperative heating is one or more than two, the heating power difference between the main heating coil MC and the sub heating coil(s) SC is maintained at a constant rate. Further, the heating power after the change is displayed in the corresponding area of the integrated display means 100 as "heating power 'low' 500 W".

A representative example of the heating power and the main-sub heating power ratio will be specifically illustrated in the following Figs 29 and 30.

Fig. 29(A) illustrates the heating level (W) of the main heating coil MC and the sub heating coils SC1 to SC4 when the maximum heating power is 3 kW and when the heating power ratio between the main heating coil and all of the sub heating coils is fixed to 4:1.

Fig. 29(B) illustrates the heating level (W) of the main heating coil MC and the sub heating coils SC1 to SC4 when the heating power is 6 (1.5 kW) and when the heating power ratio between the main heating coil and all of the sub heating coils is fixed to 4:1.

Fig. 30(A) illustrates the heating level (W) of the main heating coil MC and the sub heating coils SC1 to SC4 when the heating power is 3 (500 W) and when the heating power ratio between the main heating coil and all of the sub heating coils is changed to 3:2.

On the other hand, when the heating power is changed to a heating power that is smaller (there are three: 120 W, 300 W, and 500W) than the predetermined heating power level (501 W), and when the minimum driven heat power of the sub heating coil SC is 50 W, then, with the heating power ratio of 4:1, the sub heating coil SC will be driven at a low heating power of 25 W and 33 W as shown in Fig. 30(B), which is a problem.

In the actual product, since the impedance between each individual metal pan that serves as the heated object N is different, even when a high-frequency power equivalent to or higher than a predetermined value is applied to the pan, the heat conversion ratio is not constant. As described in Embodiment 2, the current detection sensor 266 for the main heating coil MC, for example, detects the current flowing through the resonance circuit that includes the series circuit of the main heating coil MC and the resonant capacitor 110A and the determination is performed determining whether there is a heated object N, whether the pan (heated object N) is appropriate for induction heating, and, further, whether an undercurrent or an overcurrent having a value difference equivalent to or above a predetermined value when compared to a normal current value is detected. The above is used in performing these determinations. Accordingly, the current applied to the induction heating coil is minutely controlled such that the designated heating power is exerted. Accordingly, when the heating power settings is set low, since the flow of current is small, a problem that detection of the current cannot be accurately performed arises. In other words, when heating power is high, it is relatively easy to detect the current component flowing in the resonance circuit; however, when heating power is low, without taking measures such as increasing the sensitivity of the current sensor, it will not be possible to accurately deal with the change in heating power, hence, it will not be possible to carry out the object of performing an accurate heating power control operation.

Note that although not shown, the input current value of the power to the inverter circuits MIV and SIV1 to SIV4 may be detected in actuality, and the above-mentioned current value on the output side of the coil detected by the current sensor may be used in combination to achieve appropriate control.

Note that similar to the main heating coil of the left IH heating coil 6LC, the sub heating coil SC is formed of a twisted, assembled wire constituted of fine wires with a size of approximately 0.1 mm to 0.3 mm. Since the cross-sectional area in which the current that causes induction heating is small, compared with the main heating coil MC, a large driving current cannot be applied and the maximum heating capacity is accordingly small. However, as described above, by further reducing the wire diameter of the fine wires of each coil and with more winding, thus increasing the surface area of the coil conductor, even if the drive frequency of each inverter circuits SIV1 to SIV4 is increased, the surface resistance can be reduced; hence, it will be possible to control further low heating power continuously while suppressing loss and temperature rise.

Fig. 30(B) illustrates the heating level (W) of the main heating coil MC and the sub heating coils SC1 to SC4 when the heating power is 3 (500 W) and when the heating power ratio between the main heating coil and all of the sub heating coils is fixed to 4:1.

In Embodiment 2, control is performed such that the heating power distribution is changed to 3:2.

Note that in a case in which the heating power is 120 W or 300 W, even with the heating power distribution is 3:2, the minimum driven heat power 50 W may not be maintained. In such a case, control is performed such that a display encouraging change of the heating power such as "Set heating power is too small and heat cooking cannot be performed. Please set the heating power to 500 W or higher" is displayed on the corresponding area 100L1 of the integrated display means 100 or the heating is limited to the main heating coil MC alone. In actuality, it is not practical to assume that a large pan that covers both the main heating coil MC and the sub heating coil SC will be heated with a heating power of 120 W or 300 W, and there is no concern of degrading the actual usability even if the above control is performed.

During the cooperative heating operation, the energization control circuit 200 controls the amount of electric power supplied to each of the main heating coil MC and the group of sub heating coils SC1 to SC4 such that the heating power ratio, that is, the main-sub heating power ratio, between the main heating coil MC and the group of sub heating coils SC1 to SC4 is within a substantially constant range. Since it is difficult to suppress the amount of electric power applied when the heating power setting is small as mentioned above, the actual power supply time may be limited so that the amount of electric power is reduced per unit time. For example, if the power applying time to each of the sub heating coils SC1 to SC4 from the corresponding sub inverter circuits SIV1 to SIV4 is reduced to 50% by duty factor control, the amount of electric power per unit time that is actually contributing to heating can be 50%. That is, if it is difficult to reduce the heating power by limiting the frequency of the applied electric power alone, duty factor control may be adopted in which the rate of time supplying electric power to time not supplying electric power can be reduced such that the actual acting electric power can be reduced to a smaller value.

Note that in Embodiment 2 of the invention, although it is described that the heating power ratio between the main heating coil MC and the group of sub heating coils SC1 to SC4 is maintained substantially constant during cooperative heating, it does not assure that the heating power ratio during various cases of the cooperative heating is always maintained to a "predetermined ratio". For example, since control detecting the differences between the currents flowing on the input side of the inverter circuits and those flowing on the output side thereof is carried out and the results are fed back to the energization control circuit 200 at all times while heat driving, there are cases in which control is transitionally unstable immediately after the user has changed the heating power setting and in which the heating power ratio deviates temporarily from the target heating power ratio.

Further, during cooperative heating, when the pan is moved laterally or is lifted up for a short time, the movement is detected by the current sensors 227 and 267A to 267D, and it will be needed to be identified whether the movement is due to improper usage or the like, and thus, time is required to select the appropriate control method.

Until implementation of this identification or adaptive control is determined, the ratio may deviate from the target heating power ratio temporarily. Rather than knowing the instantaneous change in the applied current, as long as the user can confirm that the heating power set by the user has not been changed against the intent of the user, the user will feel no uneasiness in the course of cooking.

Note that even if the user has not changed the heating power settings, upon selection of another cooking menu by the user, there are cases in which the heating power ratio between the main heating coil MC and the group of sub heating coils SC1 to SC4 is changed. For example, in a case in which a large frying pan with a rectangular outer shape is used to fry a few hamburgers and in which the frying pan is placed on the top plate 21 so that it is longitudinal in the front-rear direction at a position slightly to the left relative to the center point X1, the heating will be performed with the main heating coil MC illustrated in Fig. 15 and the second sub heating coil SC2 that is provided in the obliquely left front position and the fourth sub heating coil SC4 that is provided in the obliquely left rear position.

For the entire bottom side of the frying pan to uniformly increase its temperature, a heating power of 1.5 kW or 2 kW is recommended, and, as such, the control target value of the amount of electric power supplied to each of the main heating coil MC and the sub heating coils SC2 and SC4 is set with a predetermined heating power ratio. However, in a case in which the same frying pan is used at the same position with a heating power of 2 kW or 1.5 kW to fry an omelet using a few eggs, since the cooked ingredient (beaten eggs) spreads thinly on the entire bottom surface of the frying pan, the result of cooking is, in some cases, better if the temperature of the peripheral portion of the frying pan is increased earlier than the center portion of the bottom surface and if the heating power is increased a little in the peripheral portion.

Accordingly, in the case of such cooking, the heating powers of the two sub heating coils SC2 and SC4 are set higher than that of the main heating coil MC. As above, it is desirable that the heating power rate between the main heating coil MC and the group of sub heating coils SC1 to SC4 is changed (even with the same level of heating power) depending on the content of the actual cooking.

As described in Embodiment 1, in a case of a cooking menu in which uniformity of temperature is important, the main heating coil MC at the center is driven with its minimum heating power for a predetermined time period from the start of heating, while the sub heating coils SC1 to SC4 that are involved in the cooperative heating are simultaneously driven (are set to an ON state) with a higher heating power, for example; hence, it will be possible to perform cooking in which only the pan surface (side of the pan) of a frying pan and the like is preheated.

Note that in Embodiment 2, although the main heating coil MC is set to exert higher heating power than that of the entire group of sub heating coils SC1 to SC4, the invention is not limited to this in any way. The heating powers may be changed in many ways depending on conditions such as the structure and size of the main heating coil MC and each of the sub heating coils SC1 to SC4 or the number of disposed sub heating coils SC. For example, the heating power of the entire group of sub heating coils SC1 to SC4 may be set higher than the main heating coil MC of the two may be set the same.

However, when the system is used in a common household, typically, a round normal sized pan, for example, one with a diameter of 20 cm to 24 cm, is often used. When such a standard pan is used, induction heating will be performed with the main heating coil MC alone, so it is desirable that consideration is made so that the minimum heating power required for this kind of cooking can be exerted. It is considered that when the system is used in a common household, the frequency of using a normal-sized pan is greater than the frequency of using a large-diameter pan. As this as a premise, it can be considered that the main heating coil is mainly used in a common household. Accordingly, the heating coil at the center is referred to as the main heating coil MC.

Further, during cooperative heating, that is, when two or more independent induction heating coils are driven together at a specific time so as to magnetically cooperate with one another, it is desirable from the viewpoint of stable and reliable control that the operation timing of the main inverter circuit MIV and the sub inverter circuits SIV1 to SIV4 are coordinated. For example, it is desirable that at least one of the below timings are coordinated, that is, the start timing of heating with the main inverter circuit MIV and the first sub inverter circuit SIV1, the stop timing of heating, the changing timing of the heating power. An example of the above can be conceived such that when switching is performed from a state in which the main inverter circuit MIV and the first sub inverter circuit SIVI are in operation at the same time to a state in which the second sub inverter circuit SIV2 is in operation with the main inverter circuit MIV, operations of the main inverter circuit MIV and the first sub inverter circuit SIVI are synchronized and stopped, and then the two, that is, the main inverter circuit MIV and the driving of the second sub inverter circuit SIVI2 are both started at the same time.

Note that the control may be such that the main inverter circuit MIV and each sub inverter circuit SIV are limited to a predetermined low heating power for a predetermined time (for example, 10 seconds) immediately after being driven; during this predetermined time, interrupt handling of some or all of the determination processing of abnormality (ST2), determination processing of whether a pan is placed or not (ST5), determination processing of appropriateness of the pan (ST6), as shown in Fig. 25 in Embodiment 1 may be performed; and when there is no problem, cooking may be continued by automatically increasing the heating power to the heating power that the user has set.

Note that in the above example, exemplary description is given while a resonance circuit, which includes a series circuit of an IH heating coil, and a resonant capacitor are used; however, a parallel circuit of an IH heating coil and a resonant capacitor may also be used.

Further, in the above Embodiment 2, the integrated display means 100 is capable of displaying the operation condition of the four heat sources, namely, the left IH heating coil 6LC, the right IH heating coil 6RC, the central electric radiant heat source (heater) 7, the electric radiant heat sources (heaters) 22 and 23 individually or in multiple numbers at the same time, command the start or stop of the heating operation with the touch operation to the multiple input keys displayed on the liquid crystal screen at appropriate timings, and set the energizing conditions. However, the integrated display means 100 may be one limited to a display function without the above input function to the energization control circuit 200.

Furthermore, the placement-of-heated-object determination unit 280 that determines whether a same single pan (heated object N) is placed above the main heating coil MC and the sub heating coils SC1 to SC4 may use, as described in the above Embodiment, infrared sensors 31 that detect temperatures or current detection sensors 266 that detect the current flowing in the heating coils, as well as means that optically detect whether there is a pan (heated object N) above the sensor. For example, if there is a pan (heated object N) above the top plate 21, light from the lighting equipment on the kitchen ceiling or the sun will not enter the top plate 21, but if there is no pan (heated object N) above the top plate 21, ambient light such as light of the lighting equipment or light of the sun will enter the top plate 21. It may be one that detects the difference.

Additionally, as methods of determining the material properties of the pan (heated object N) other than the method in which the material properties of the pan (heated object N) is determined on the basis of the voltage flowing in the heating coil and the input current flowing in the inverter circuit, for example, ones using other electrical characteristics can be considered such as a method in which the material properties of the pan (heated object N) is determined on the basis of the voltage flowing in the heating coil and the input voltage flowing in the inverter circuit. For example, in Japanese Unexamined Patent Application Publication No. 2007-294439, a technique is introduced in which the material and the size of an heated object is distinguished on the basis of the input current value flowing in the inverter circuit and the current value flowing in the heating coil.

Note that in Embodiment 2, it is described that the placement-of-heated-object determination unit 280 "determines" that a same single pan (heated object N) is on the main heating coil MC and one or more of the sub heating coils SC1 to SC4, in actuality, it is not determined that the number of pans is one. That is, processing of actually counting the number of the placed pans is not adopted. In these types of induction cooking systems, it is difficult to assume that cooking is performed while a plurality of heated object N is placed on one induction heating coil; accordingly, the inventors have deemed that "a same single pan (heated object N) is placed" when there is no large difference between the impedance of the main heating coil MC and one or more of the sub heating coils SC1 to SC4, in which the impedance is detected by the current sensors 227 and 267A to 267D.

In other words, the placement-of-heated-object determination unit 280 can grasp the size of the currents flowing in the main heating coil MC and one or more of the sub heating coils SC1 to SC4 and, accordingly, can grasp each size of the impedance. If the value of the impedance is within a predetermined range, a determination signal is sent to the energization control circuit 200 indicating that a same single pan (heated object N) is placed. Similarly, when temperatures are detected by the infrared sensors 31, the placement-of-heated-object determination unit 380 determines that a same single pan (heated object) is placed on the basis of the comparison result of comparing whether the detection temperatures of each of the infrared sensors 31 corresponding to plural heating coils are the same or not. When using means such as a photosensor that utilizes the fact that the light income changes depending on whether there is a pan or not, it is practical to process that there is a pan placed on the main heating coil MC and one or more of the sub heating coils SC1 to SC4 on the basis of comparison of the size of the light income.

As described above, when the placement-of-heated-object determination unit 280 determines that a heated object N is placed with a size extending over the main heating coil MC and the four sub heating coils SC1 to SC4, which are disposed around the main heating coil MC, in the initial step before starting the induction heating (after the abnormality detection processing is completed), seven cooking menus, namely, "rapid heating", "deep fry", "water-boiling", "preheating", "rice-cooking", "boiling", and "water-boiling and heat-retaining", similar to the ones described in Embodiment 1, are displayed on the integrated display means 100 as the selectable cooking menu.

For example, when the key for rapid heating, among the seven keys E1A, E1B, E1C, E2A, E2B, E3A, and E3B for selecting the cooking menu, is touched, for example, the cooking menu for rapid heating is selected, and that "rapid heating" has been selected is displayed by means of characters.

In Embodiment 2 as well, when rapid heating is selected, the heating power exerted to the heated object N can be manually set. Similar to Embodiment 1, the user can arbitrarily select the total heating power of the main heating coil MC and the sub heating coils in the range of 120 W to 3.0 kW.

The main-sub heating power ratio of the main heating coil MC and the sub heating coils SC1 to SC4 is automatically determined by the energization control circuit 200 so as to not exceed the limit that is the above-mentioned total heating power selected by the user and so as to be within the range of the predetermined heating power ratio; the user cannot arbitrarily set the heating power ratio. Further, directions of the high-frequency currents in the adjacent areas of the main heating coil MC and the sub heating coils SC1 to SC4 are controlled to coincide each other.

Further, among the seven keys for selecting the cooking menu, when the selection key E1 C for "boiling" is touched, cooking menu "boiling" can be carried out. In Embodiment 2, it is possible to boil water rapidly and shift to boiling when using a deep pan referred to as a "pasta pan" that has a large diameter and depth that is mainly used for the purpose of boiling pasta.

For example, although the default value of the heating power is 2.0 kW, the user may start heating with the heating power set to 3.0 kW from the start. In this case, the main-sub heating power ratio is automatically determined by the energization control circuit 200 such that there is no need for the user to arbitrary set the ratio. For example, the heating power of the main heating coil MC is set to 1.0 kW and the total heating power of the four sub heating coils is set to 2.0 kW. When the water starts to boil, the energization control circuit 200 issues a notification signal and displays a display on the predetermined display area of the integrated display means 100 encouraging the user to cast the pasta or noodle into the pan, and simultaneously notifies the user of this with the voice synthesizer 315. At this time, if the heating power is not set once more, notification that the heating power will be automatically reduced is carried out.

If the user does not carry out any operation and when a boiling state is reached, as in Embodiment 1, the energization control circuit 200 outputs a command signal to the main inverter circuit MIV and the sub inverter circuits SIV1 to SIV4 that reduces the heating power. If the user sets the heating power once more or if the user touches the input key "start boiling" that appears in the predetermined display area 100L2 of the integrated display means 100, heating is started once more at 3.0 kW. In this case, the four adjacent sub heating coils are divided into two groups such as a group of two sub heating coils SC1 and SC2, and a group of two sub heating coils SC3 and SC4, and the two groups are alternately heat driven for 15 seconds while each group is set at a total heating power of 1.5 kW.

After start of boiling, control accelerating convection of hot water is automatically carried out. Note that even if the user reduces the heating power to less than 3.0 kW, such as 2.0 kW or 1.0 kW, immediately after start of boiling, a similar heating operation with the convection acceleration control is carried out within the range not exceeding the total amount of heating power.

As above, in Embodiment 2, the keys E1A, E1B, E1C, E2A, E2B, E3A, and E3B for selecting the seven cooking menus described above are displayed on the integrated display means 100 that displays the heating conditions in a state allowing the user to perform selection operation. As such, a suitable heat driving pattern is automatically determined by the control unit with the selection of the intended cooking menu. Accordingly, there is an advantage in that cooking with a heating coil driving form according to the intent and desire of the user such as prioritization of heating time or prioritization of uniformity of temperature is enabled and elimination of improper use by the user and alleviation of mental stress can be enjoyed since the selection key for the cooking menu is made operable in the display unit.

As shown in Fig. 19, "350" is a selection switch for the convection acceleration control that is a characteristic of Embodiment 2, and the control unit thereof is exposed in the top side operating unit 71. This switch issues a command signal of whether or not to operate the convection acceleration control, such as the one described in Embodiment 1, to the energization control circuit 200. When this switch is pushed once during a cooking step, convection acceleration control, such as the one described in Embodiment 1, is automatically carried out such that control such as switching of the energization timing of the groups of sub heating coils, changing of the heating power, or making the direction of the currents in the area adjacent to the main heating coil MC to be the same is carried out after the heated object has started to boil or immediately before boiling (for example, when the temperature of the heated object or the object to be cooked rises to 98°C).

The energization control circuit 200 is programed so that the selection switch 350 is not effectively functioned unless the placement-of-heated-object detection unit 280 determines that a large-diameter pan that extends over the entire four sub heating coils and the main heating coil is placed. Further, unless the temperature detecting circuit 240 determines that the liquid in the heated object N has reached its boiling temperature or that it is immediately before boiling (for example, when the temperature of the heated object or the object to be cooked rises to 98°C) by receiving temperature detection information from the above-described temperature sensors that are measuring the temperature of the heated object N, even if the convection acceleration selection switch 350 is operated, there will be no effective command of any kind input to the energization control circuit 200, or there will be no effective command signal output to the main inverter circuit MIV, sub inverter circuits SIV1 to SIV4, and the like from the energization control circuit 200. Note that this switch may be disposed as a touch key on the surface of the display screen of the integrated display means 100.

Before the start of cooperative heating or during the heating operation, when the user operates the convection-acceleration-control selection switch 350, the energization control circuit 200 outputs control signals to the inverter circuit MIV of the main heating coil MC and the sub inverter circuits SIV1 to SIV4 to change the supply state of the high-frequency power to the main heating coil MC and the groups of sub heating coils SC such that convection acceleration control described in Embodiment 1 is carried out. That is, in Embodiment 2, if the placement-of-heated-object detection unit 280 detects that a large-diameter pan is placed over the entire main heating coil MC and the sub heating coils SC1 to SC4, although cooperative heating can be carried out, it is possible to automatically shift to cooperative heating during the subsequent heating step after the object to be cooked has started to boil or immediately before boiling (for example, when the temperature of the heated object or the object to be cooked rises to 98°C).

As above, the user can arbitrary determine whether convection acceleration control is to be carried out after the cooperative heating with the selection switch 350. That is, irrespective of whether a cooking menu before start of the cooperative heating is being performed, when the user wishes to carry out a convection acceleration heating method in the middle of a cooking step, by operating the convection-acceleration-control selection switch 350, control that automatically switches the driving of the sub heating coils SC1 to SC4 can be carried out from the start of boiling of the object to be cooked or immediately before boiling. Note that when the convection-acceleration-control selection switch 350 is selected, not only the first convection acceleration control described in Embodiment 1 but the second or third convection acceleration control may be carried out.

A "boiling-over detection operation" that is a characteristic of the invention will be described next.

At the start of cooking, when a temperature detection circuit 240 detects that the temperature of the object to be cooked in the heated object N has increased to 98°C or a boiling temperature above this, the energization control circuit 200 issues a command starting the first convection acceleration control to each of the inverter circuits SV1 to SIV4. Note that, as in the exemplary modification of the first convection acceleration control described in Embodiment 1 above, in a case in which control is performed such that the energization of the main heating coil MC at the center portion and the energization of the right sub heating coil SCR and the left sub heating coil SCL are performed alternately, the main inverter circuit MIV as well, naturally, becomes a subject of the control and is made to carry out the convection acceleration control by the energization control circuit 200.

When the convection acceleration control is continued, convection that ascends straight up from the sub heating coils SC1 and SC3 of the first group and the sub heating coils SC2 and SC4 of the second group can be generated. This convection turns into convection that heads towards the other end of the pan that is a position far from the rising convection. With the above, the convection with a long route is created in the heated object N by heating of the bottom of the pan in its outer circumference with the sub heating coils of the first and second groups, that is, with the four sub heating coils. As such, stirring effect and temperature uniformization of the entire object to be cooked in the pan and suppression of boiling over can be anticipated. However, with the proceeding of the cooking process, there are cases in which a small bubble created on the liquid surface of the object to be cooked increases gradually turning into a big rise, and further, there are cases in which the user casts in liquid seasoning, water, and other cooking soup into the heated object in the middle of cooking, raising concern of the liquid of the object to be cooked flowing over and boiling over the rim of the object to be cooked while the convection acceleration control is performed.

In Embodiment 2, as a measure to suppress boiling over, boiling-over detection and heating control operation are performed. When boiling over is detected, the energization control circuit 200 immediately stops driving of all of the inverter circuits or issues a command to reduce the heating power. As an example of reducing the heating power, as described above, when the user has set the heating power to middle heating power out of the nine levels, for example, to 1 kW, then it is lowered three levels to 300 W. If it is used at 2 kW, it is set to 500 W. In all the cases during cooking with a heating power that is higher than this, it is reduced to 500 W. Note that if a heating power reduction command is issued, the heating power of the main heating coil MC is also limited such that even in a case in which the main heating coil MC is energized simultaneously with the sub heating coils SC, the heating power is controlled so as not to exceed 500 W in total. Accordingly, the total heating power of a driven group of sub heating coils or the heating power of a driven single sub heating coil is limited as appropriate so that the heating power does not exceed the reduced heating power. As a method of the above, the heating power may be suppressed by shortening each driving time of the sub heating coil to lower the energizing rate.

Note that the heating level that is forcibly reduced may be changed according to the size of the heated object N such that in a case of a normal-diameter pan, the heating power is reduced to 120 W, and in a case of cooperative heating with a large-diameter pan, the heating power is reduced to 300 W.

The boiling-over detection method will be described next. As below, regarding the boiling-over detection method, there are three methods; however, in this Embodiment 1, method (3) that has been described in Embodiment 1 is modified as a basis such that the method (4) below is employed. Note that the method (4) below is of a case of the left IH heating unit 6L.

(4) Static capacitance value of each of the first electrode 40 and the second electrode 41 at the starting point of the convection acceleration control or the starting point of the boiling-over detection is set as a reference value, and the change in static capacitance values of the first electrode 40 and the second electrode 41 near the outer circumference side of the heat driven two sub heating coils are captured. Specifically, when the sub heating coils SC1 and SC3 constituting the first group and the sub heating coils SC2 and SC4 constituting the second group are alternately heat driven at a 15 second interval each at 1 kW, during the period in which the first group are driven, the static capacitance change of the first electrode 40 is preferentially captured to determine whether boiling over has occurred. Here "preferentially" refers to performing a control of immediately stopping induction heating or reducing the heating power three levels when change in the static capacitance on the first electrode 40 side exceeds a predetermined value and means that while the change in the static capacitance on the second electrode 41 side detects the boiling over in a longer time interval (for example, at a two second interval) than that of the first electrode 40, the first electrode 40 is monitoring whether there is boiling over at a short time interval (for example, in a 0.5 second interval).

The above-described "preferential processing" operation that detects each of the static capacitance value of the first electrode 40 and the second electrode 41 is switched so as to synchronize with the heat driving operation of the inverter circuits SIV1 to SIV4 of the first group and the second group. As such, the first electrode 40 is mainly used to detect boiling over when the sub heating coils SC1 and SC3 of only the first group is heat driven.

Note that when starting the induction cooking, the individual light emitting unit 276 and the wide area light emitting unit 277 described above may be lighted for a predetermined time to display to the user the position of the first electrode 40 and the second electrode 41. In this case, alert may be issued such as "Please place the pan inside the lighted ring portion. There may be cases in which checking of the suitability of the pan and the appropriate heating, and boiling-over detection cannot be performed when the pan is outside the ring" with the voice synthesizer 315. As such, the user can readily understand the approximate placing position of the pan and it will be possible to urge the user to adjust the pan position to one that ensures operation of the boiling-over detection. That is, with the radiation of the individual light emitting unit 276 and the wide area light emitting unit 277, it is possible to improve usability such as making it easier for the user to confirm the boiling-over detection area and enabling the user to approximately understand the propriety of the placing position of the pan.

Further, in Embodiment 2, the seven keys, namely, the selection key E1A for rapid heating, the selection key E1 B for water-boiling, the selection key E1C for boiling, the selection key E2A for preheating, the selection key E2B for cooking rice, the selection key E3A for deep frying, and the selection key E3B for water-boiling and heat-retaining are displayed, at appropriate timings, as capacitance switches that employ transparent electrodes on the display screen of the integrated display means 100; however, switches of a press type that permanently display the function by means of characters may be provided on the upper frame 20 or the top plate 21.

Next, the boiling-over detection and the operation of the individual light emitting unit 276 will be described with reference to Fig. 28. Fig. 28 illustrates a control related to the fifth aspect of the invention.

In both cases in which heating is performed with the main heating coil MC alone and in which cooperative heating is performed with the sub heating coils SC1 to SC4, the individual light emitting unit 276 after the boiling-over detection operates as Fig. 28. This operation is implemented with the control program stored in the energization control circuit 200.

That is, when boiling over is detected during induction cooking (ST20), the heating power is reduced to 300 W (here, it may be 120 W) (ST21).

Next, determination of which of the electrode among the electrode 41 on the left outer side or the electrode 40 on the right outer side of the main heating coil MC has detected the boiling over is performed (ST22).

When the boiling over is detected with the electrode 40 on the right side, as shown in Figs. 16 and 17, the individual light emitting unit 276 near the right side of the sub heating coil SC1 and the individual light emitting unit 276 near the right side of the sub heating coil SC3 each flash in red at the same time. If the wide area light emitting unit 277 and the individual light emitting units 276 are lighted before this flashing in red, they are all turned off. That is, even if the units have been continuously lighted, they are all turned off with the occurrence of the detection of boiling over and only the individual light emitting units 276 are flashed in red (ST23).

Further, when the boiling over is detected with the electrode 41, as shown in Figs. 16 and 17, the individual light emitting unit 276 near the left side of the sub heating coil SC2 and the individual light emitting unit 276 near the right side of the sub heating coil SC4 each flash in red at the same time (ST24).

With the above, the user will pay attention to the top side of the top table 21 that is flashing in red and will be able to confirm that boiling over is occurring. Assuming that noodles are boiled in a deep pan such as a tall large-sized pasta pan, even if the boiling over is occurring at the back side of the pan, the user will notice that boiling over has occurred since the individual light emitting unit on the right side or the left side is made to flash in red. Note that if the electrode 40 and the electrode 41 are each divided into two and each electrode is provided near the corresponding sub heating coils SC1 to SC4, it will be possible to perform specification of the boiling over position more easily and promptly. Note that simultaneously with the boiling over, occurrence of the boiling over is informed to the user with the liquid crystal screen of the integrated display means 100 and the voice synthesizer 315.

As above, since boiling over is notified by means of light during a state in which the heating power is forcibly reduced, the user may temporarily move the heated object N such as a pan. In such a case, when it is detected by a pan detection operation that there is no heated object N in the predetermined heating region (ST24), the heat driving is completely stopped. That is, by the time the user immediately moves the pan upon boiling over and tries to remove the liquid that has boiled over, the heat driving is stopped (ST 25), and, subsequently, even if the pan is returned to its original position, the heating will not be resumed automatically. As such, reheating while the user is unaware of it is prevented.

Note that cooking is continued after boiling over is detected and the heating power is forcibly reduced to the minimum heating power of 120 W or a level higher heating power of 300 W. If the user has set the heating time beforehand with a timer, unless it is extended midway, the heating is stopped at the point when the initial set cooking time has elapsed and notification of this is performed with the phonetic sound notification means 315 and the integrated display means 100.

Further, if the user increases the forcibly reduced heating power even slightly, for example, increasing the heating power of 300 W to 500 W, then the energization control circuit 200 resumes the monitoring of whether there is any boiling over.

Note that when considering user usability, it is preferable that notification such as "The heating power when boiling over had occurred was 1 kW" is performed with the integrated display means 100 and the voice synthesizer 315, since, when increasing the heating power once more after the heating power has been forcibly reduced upon boiling over during heating at 1 kW, for example, there are cases in which the user has forgotten the heating power when the boiling over has occurred. Further, in order to enable setting of a minute heating power when resetting the heating power, the initial number of the levels of heating power that can be set may be increased such that an intermediate value is added, or a key that increases the heating power slightly or decreases the heating power slightly with each push of the key may be displayed or be made to function. For example, the heating powers that were selectable from the levels of heating power of 500 W, 750 W, and 1 kW may be made to be settable from minute heating powers such as 500 W, 600 W, 750 W, and 800 W. As such, it will be even more convenient. The heating level at the point of boiling over may be called by key operation of the user.

As above, the induction cooking system described in Fig. 28 includes a top plate 21 for placing a heated object including a pan for holding an object to be cooked; an annular main heating coil MC disposed below the top plate; first sub heating coils SC1 and SC3 and second sub heating coils SC2 and SC4 adjoinedly disposed on both sides of the main heating coil, and having a flatten shape with a width smaller than a radius of the main heating coil; inverter circuits MIV and SIV1 to SIV4 supplying induction heating power to the main heating coil MC and the sub heating coils SC1 to SC4, respectively; a static capacitance detection means 50 disposing a plurality of electrodes 40 and 41 at outside positions of the sub heating coils under the top plate 21; individual light emitting units displaying that the sub heating coils SC1 to SC4 are heat driven by means of light from below the top plate 21; an energization control circuit 200 controlling output of the inverter circuits; and an operating unit 61 commanding a heating stop operation or the heating power to the energization control circuit 200, in which the energization control circuit 200 supplies induction heating power from the inverter circuit to the first sub heating coils SC1 and SC3 and the second sub heating coils SC2 and SC4 alternately or with a predetermined interval and stops driving of the inverter circuits MIV and SIV1 to SIV4 or reduces those outputs to 300 W or 500 W when the static capacitance detection means 50 detects a change in static capacitance, the electrodes include a first electrode 40 that is disposed on the outer periphery of the first sub heating coils SC1 and SC3 and below and include a second electrode 41 that is disposed on the outer periphery of the second sub heating coils SC2 and SC4 and below, each of the first and second electrodes 40 and 41 being provided near an area of the top plate 21 through which light of the individual light emitting unit 276 penetrates.

### (Embodiment 3)

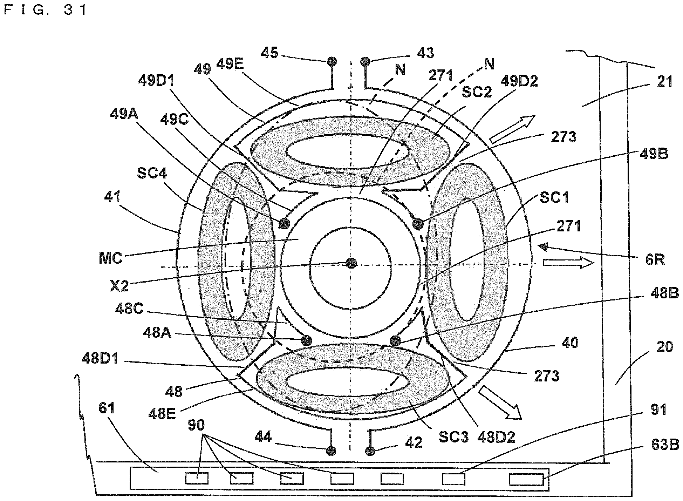

Fig. 31 is a plan view illustrating essential parts on the right side of the built-in induction cooking system according to Embodiment 3 of the invention. Note that in the drawings, like parts or corresponding parts to those of Embodiments 1 and 2 above are designated with like reference numerals.

Referring to Fig. 31, "48" is a first inner side electrode that is disposed on the underside of the top plate 21 in an adhering state so as to surround the sub heating coil SC3. A detection current of a predetermined voltage is distributed from one terminal 48A to the other terminal 48B, and the change in voltage or current accompanying the change in static capacitance between the two terminals are detected by the boiling-over detection unit 50. "48C" is an inner bend that is in succession with the terminal A and is bent along the shape of the peripheral line of the main heating coil MC. That is, the bend is concentrically formed with the main heating coil MC. "48D1" is an arm portion that is in succession with the inner bend 48C, extends in a direction away from the main heating coil MC, that is, extends radially, and traverses through the corresponding space 273. "48E" is an outer bend that extends along the shape of the peripheral line of the sub heating coil SC3. This outer bend is connected again to an arm portion 48D2 that extends inward on the other end portion of the sub heating coil SC3 and is in succession with the terminal 48B through the inner bend 48C.

Referring to Fig. 31, "49" is a second inner side electrode that is disposed on the underside of the top plate 21 in an adhering state so as to surround the sub heating coil SC2. A detection current of a predetermined voltage is distributed from one terminal 49A to the other terminal 49B, and the change in voltage or current accompanying the change in static capacitance between the two terminals are detected by the boiling-over detection unit 50 (not shown). "49C" is an inner bend that is in succession with the terminal A and is bent along the shape of the peripheral line of the main heating coil MC. That is, the bend is concentrically formed with the main heating coil MC. "49D1" is an arm portion that is in succession with the inner bend 49C, extends in a direction away from the main heating coil MC, that is, extends radially, and traverses through the corresponding space 273. "49E" is an outer bend that extends along the shape of the peripheral line of the sub heating coil SC3. This outer bend is connected again to an arm portion 49D2 that extends inward on the other end portion of the sub heating coil SC2 and is in succession with the terminal 49B through the inner bend 49C.

Although the static capacitance values of the first and second inner electrodes 48 and 49 are input to the boiling-over detection unit 50 at a predetermined short time interval (for example, one second or less) at all times, on the basis of information from a temperature sensor of an infrared sensor type that detects the temperature of the heated object N from below the top plate 21, the energization control circuit 200 estimates the temperature of the heated object N and when the temperature has not risen to 100°C or to 98°C, renders the boiling-over detection unit 50 inoperable.

"40" is a first electrode that is formed so as to surround the area near the outer circumference of the main heating coil MC and the three sub heating coils SC3, SC1, and SC2 that constitute the right IH heat source 6R, and, subsequently, will be referred to as "first outer electrode" so as to be in contrast with the first and second inner electrodes 48 and 49. This electrode is provided in an adhered manner to the underside of the top plate 21, and, as shown in Fig. 31, is of a semicircular shape that serially covers the right front half of the sub heating coil SC3, the entire right side of the adjacent right sub heating coil SC1, and the right rear half of the sub heating coil SC2 at the back. That is, the first outer electrode is formed so as to have a curvature that is positioned on a circumference centering around the center point X2.

"41" is a second outer electrode that has a bilaterally symmetrical shape with the first outer electrode 40 with the center point X2 in between and is provided on the underside of the top plate 21 in an adhered state.

In the first and second outer electrodes 40 and 41, a detection current of a predetermined voltage is distributed from each of the terminals 42 and 44 to the other terminals 43 and 45, respectively. The change in voltage or current accompanying the change in static capacitance between each of the two terminals are detected by the boiling-over detection unit 50 (not shown). Although the static capacitance values of the first and second outer electrodes are input to the boiling-over detection unit 50 at a predetermined short time interval (for example, 0.5 seconds or less) at all times, on the basis of information from a temperature sensor of an infrared sensor type that detects the temperature of the heated object N from below the top plate 21, the energization control circuit 200 estimates the temperature of the heated object N and when the temperature has not risen to 100°C or to 98°C, renders the boiling-over detection unit 50 inoperable.

Referring to Fig. 31, "61" is a top side operating unit, and in the right end portion, a push type operation key for the main power switch corresponding to the operation button 63A of the main power switch 63 shown in Fig. 1 is disposed. "90" are one-touch setting keys for setting the heating power of the right IH heat source 6R, and three keys, namely, the heating power "low", "middle", and "high", and two minute adjustment keys (one plus key and one minus key) for the three heating levels are provided. "91" is a stop operation key that stops the induction heating of the right IH heat source 6R. These keys 90 and 91 are touch input keys utilizing static capacitance change.

Further, although not shown, in Embodiment 3 as well, the current sensor 227 of the main heating coil MC and the current sensors 267A to 267D of each of the sub heating coils SC1 to SC4 are provided in which basic information to determine whether the same single heated object N is placed above each heating coils is input to the placement-of-heated-object determination unit 280 (not shown). By detecting the current values from the current sensors at a stage before start of a full-fledged induction heating, the placement-of-heated-object determination unit 280 detects the impedance change of the main heating coil MC and the sub heating coils SC. The energization control circuit 200 issues a command signal to drive the inverter circuit MIV of the main heating coil MC on which the elliptical pan (heated object N) is placed and each inverter circuit SIV1 to SIV4 of the sub heating coils SC1 to SC4, distribute high-frequency current to at least one of the sub heating coils among the four sub heating coils SC1 to SC4 that is placed with the elliptical pan (heated object N), and suppress or stop distributing high-frequency current to one or some of the remaining sub heating coils that is not placed with the elliptical pan (heated object N). Accordingly, it is possible to perform cooperative heating with the main heating coil and a single or a plurality of sub heating coils SC1 to SC4.

For example, even with a heated object N illustrated as a dot-and-dash-lined elliptical shape in Fig. 31, induction cooking can be carried out with the main heating coil MC and the three sub heating coils SC2, SC3, and SC4. In this case, when a portion of the object to be cooked boils over the rim of the elliptical heated object N, the first and second outer electrodes 40 and 41 of the boiling-over detection unit 50 (not shown) detects the boiling over. When boiling over is detected, driving of the inverter circuits MIV and SIV2 to SIV4 are instantaneously stopped through the energization control circuit 200 (not shown).

During this cooperative heating, the energization control circuit 200 that is a control unit receiving input from the placement-of-heated-object determination unit 280 (not shown) issues a command to the boiling-over detection unit 50 (not shown) to stop the operations monitoring the change in static capacitances of the first and second inner electrodes 48 and 49; accordingly, boiling-over detection operation with the first and second inner electrodes 48 and 49 are not performed.

On the other hand, as depicted by broken line circles in Fig. 31, when it is determined by the placement-of-heated-object determination unit 280 (not shown) that a heated object N that has a size and bottom area that are inappropriate for cooperative heating is placed, then, cooking by heating with the main heating coil MC alone can be performed.

In such a case, as shown in Fig. 31, even when the heated object N is not placed immediately above the main heating coil MC and is placed such that it is deviated to the left direction (hereinafter, referred to as "when deviated"), for example, since the heat driving of the main inverter circuit MIV is not hindered at all, it is possible to start induction heating in this situation. Note that when deviated as above, notification of some kind may be performed to the user so that the user replaces the heated object N.

If induction heating is started in a state in which the heated object N is positioned as depicted by the broken line in Fig. 31, the right half of the heated object N will be immediately above the main heating coil MC and will be heated intensively compared to the left half portion.

Accordingly, when a boiling state is reached in this state, in the portion that is close to the rim of the heated object B on the right side, the surface of the cooked liquid may rise most quickly owing to the boiling, raising concern of leading to a boiling over. The arrows depicted in three directions in Fig. 30, namely, the right, the upper right, and the lower right directions, are the main probable directions in which the liquid may spread toward when in case of boiling over. Embodiment 3 can cope with boiling over in either of the directions above as well.

That is, in Embodiment 3, because the first inner electrode 48 and the second inner electrode 49 are disposed so as to surround the sub heating coil SC2 at the rear side and the sub heating coil SC3 at the front side from the outside of the main heating coil MC, when there is a boiling over from the heated object N, the boiling over is detected by the first inner electrode 48 or the second inner electrode 49 first of all. When boiling over is detected, the heating power of the main heating coil MC is instantaneously reduced to 300 W with the main inverter circuit MIV on the basis of a command from the energization control circuit 200.

Further, after the boiling over is detected by at least either one of the first inner electrode 48 and the second inner electrode 49 and the heating power is forcedly reduced, if at least either one of the first or second outer electrodes 40 and 41 detects boiling over once more, then the induction heating of the main heating coil MC is stopped at once.

Further, if boiling over is not detected by the first inner electrode 48 and the second inner electrode 49and if at least either one of the first or second outer electrodes 40 and 41 detects boiling over, then the induction heating of the main heating coil MC is stopped at once.

As above, difference in the detection result between the first inner electrode 48 and the second inner electrode 49, and the first or the second outer electrodes 40 or 41 is set because, while the boiling over of the former is still near the center portion of the right IH heat source 6R, the boiling over of the latter means that the object to be cooked is flowing to the peripheral line of the right IH heat source 6R and, as such, the prevention of the spreading out of the latter boiling over is more urgent.

As pointed out in Embodiments 1 and 2 above, there are various methods of determining the boiling over. Embodiment 3 is characterized in that a static capacitance detection means 50 compares the difference of the static capacitance between the electrodes 48 and 49 on the inside and that of the electrodes 40 and 41 on the outside, and if the difference exceeds a predetermined value, it is determined that boiling over has occurred. Accordingly, if there is no boiling over, the static capacitance difference between the electrodes 48 and 49 on the inside and the electrodes 40 and 41 on the outside is within a predetermined range. When a boiling over occurs creating a sudden decrease or increase in static capacitance in the electrodes 48 and 49 on the inside, the difference in the static capacitance with the electrodes 40 and 41 on the outside increases, and thus, it is determined that boiling over has been detected.

Since the inner bends 48C and 49C are formed on the inner electrode 48 and the second inner electrode 49, respectively, when a normal-sized pan or the like is placed immediately above the main heating coil MC and when boiling over accidentally occurs from this pan, the boiling over is detected by the inner bends 48C and 49C that are each on the nearest side to the center point X2.

Further, in the first inner electrode 48 and the second inner electrode 49, since each arm portions 48D1, 48D2, 49D1, and 49D2 are formed from the corresponding inner bends 48C and 49C toward the outer direction in a straight line, even if the diameter of the heated object N placed on the main heating coil MC is changed to various diameters, the boiling over can be detected in four directions of the main heating coil MC so as to correspond to the change.

Further, each of the arm portions 48D1, 48D2, 49D1, and 49D2 passes through the corresponding space 273 and reaches the corresponding one of the outer bend 48E and 49E that are on the outer periphery of the sub heating coils SC2 and SC3. When the adjacent sub heating coils SC1 to SC4 are energized at the same time and when the high-frequency currents of the coils flow in the same direction, then the direction of the high-frequency currents at the end portion of each adjacent sub heating coils SC1 to SC4 counter each other. Each space is provided such that the end portions do not magnetically interfere with each other. As such, each of the arm portions 48D1, 48D2, 49D1, and 49D2 passing through the corresponding space is scarcely affected magnetically; hence, it is possible to avert the static capacitance from being greatly influenced when the sub heating coils SC1 to SC4 are heat driven. Note that, as described above, when heating with only the main heating coil MC, there will be no need to consider the magnetic influence of the heat driven the sub heating coils SC1 to SC4.

Note that since the inner bends 48C and 49C that are the closest to the main heating coil MC are shaped so as to extend along the shape of the peripheral line of the main heating coil MC, they are not easily affected by the magnetic field generated when the main heating coil MC is driven.

Similarly, since the outer bends 48E and 49E are curved shaped extending along the shape of the peripheral line of the sub heating coils SC2 and SC3, they are not easily affected by the magnetic field generated when the sub heating coils SC2 and SC3 are driven.

Accordingly, since the first inner electrode 48 and the second inner electrode 49 are devised as such, it is possible to reliably pick up the change in the static capacitance when the main heating coil MC and the sub heating coils SC1 to SC4 are driven and to detect the boiling over.

The operating unit 61 uses the static capacitance change and includes a plurality of input keys 90 that are capable of inputting operation information to set the heating power and a stop key 91 that is capable of inputting a heating stop command. When capacity change of at least either one of the outer electrodes 40 and 41 is detected by the static capacitance detection means 50, then the operation from the input key 90 is disabled. Specifically, the energization control circuit 200 executes a process determining that the input command from the input key 90 of the operating unit 61 is invalid. Meanwhile, the heating stop operation of the stop key 91 that is capable of stopping the driving main heating coil MC and sub heating coils SC1 to SC4 simultaneously is kept valid such that when the user sees a state immediately before or immediately after the boiling over and wants to quickly stop heating, the stop operation is available. Accordingly, the liquid that has boiled over is not allowed to reach the operating unit 61 making the input key 90 issue a false operation input. Note that rather than the outer electrodes 40 and 41, when the capacity change of at least either one of the two inner electrodes 48 and 49 is detected by the static capacitance detection means 50, the a portion of the function of the operating unit 61 may be made invalid of may be restricted. It is possible to make the user feel further at ease by displaying that the input operation is partially made invalid after the boiling over due to safety reasons with the display means such as the integrated display means 100 of Embodiment 2 above and by notifying this with the voice synthesizer 315.

As it has been set forth in the above description, the induction cooking system described in Embodiment 3 shown in Fig. 31 includes a top plate 21 for placing a heated object including a pan for holding an object to be cooked; an annular main heating coil MC disposed below the top plate; first sub heating coils SC1 and SC3 and second sub heating coils SC2 and SC4 adjoinedly disposed on both sides of the main heating coil MC, and having a flatten shape with a width smaller than a radius of the main heating coil; inverter circuits MIV and SIV1 to SIV4 supplying induction heating power to the main heating coil MC and the sub heating coils SC1 to SC4, respectively; a static capacitance detection means 50 disposing a plurality of electrodes 40, 41, 48, and 49 at outside positions of the sub heating coils SC1 to SC4 under the top plate 21; a placement-of-heated-object determination unit 280 determining whether a heated object is placed above the main heating coil and the sub heating coils; an energization control circuit (control unit) 200 controlling output of the inverter circuits; an operating unit 61 commanding to the energization control circuit to stop heating or the heating condition; inner electrodes 48 and 49 that are on the outer periphery of the main heating coil MC and below; and outer electrodes 40 and 41 that are on the outer periphery of the first and second sub heating coil and below.

Further, with such configuration, the energization control circuit 200 allows execution of a cooperative heating operation when the placement-of-heated-object determination unit 280 determines that a heated object N is placed on the main heating coil MC and the first and second sub heating coils SC1 to SC4 at the same time, and during this cooperative heating period, the energization control circuit 200 allows control that supplies an induction heating power from the inverter circuit to the first sub heating coils SC1 and SC4 and the second sub heating coils SC2 and SC3 alternately or with a predetermined interval, the energization control circuit 280 performs the induction heating operation with the main heating coil MC alone when the placement-of-heated-object determination unit 280 determines that a size of a heated object N is of a small diameter inappropriate for induction heating, and the energization control circuit 200, during cooperative heating, stops driving of or reduces an output of the inverter circuit when the static capacitance detection means 50 detects a change in the static capacitance of the outer electrodes 40 and 41, and during non-cooperative heating with the main heating coil MC, makes the static capacitance detection means 50 monitor the change in static capacitance of the inner electrodes 48 and 49 and the outer electrodes 40 and 41 and stops driving of or reduces an output of the inverter circuit that is driving the main heating coil when the static capacitance of either one of the inner electrodes 48 and 49 and the outer electrodes 40 and 41 change.

Furthermore, the induction cooking system of Embodiment 3 is configured such that an induction heating operation with the main heating coil alone is carried out when in a state in which the size of the heated object N is deviated to a certain extent to the sub heating coil SC4 on the left side relative to the main heating coil MC. In such a case, the energization control circuit 200 reduces the driving output of the main heating coil MC to 300 W when the static capacitance of the inner electrodes 48 and 49 changes and, further, stops the driving of the main inverter circuit MC that is driving the main heating coil MC when at a stage in which the static capacitance of the outer electrode 40 on the other side of the deviated direction (left side) of the sub heating coil changes. With the above, even if induction heating is carried out with the main heating coil MC at the deviated position and when a boiling over occurs in the direction susceptible to boiling over (on the opposite side of the deviated direction), the induction heating is stopped by the outer electrode 40 and thus, it is possible to prevent spreading of the boiling over.

Note that in any circumstance, if boiling over is detected from the abnormal state in the change in static capacitance of at least either one of the inner electrodes 48 and 49 and the outer electrodes 40 and 41, the driving main heating coil MC and all of the sub heating coils SC1 to SC4 may be stopped immediately.

In Embodiments 1 to 3 above, the total number of sub heating coils that constitute the group of sub heating coils SC1 to SC4 and the total number of the sub inverter circuits SIV1 to SIV4 that supplies high-frequency current to the coils are both four and are the same in numbers; however, the invention is not limited to this. For example, as in the example in Fig. 15 illustrating Embodiment 2, relative to the center point X1, the first heating coil SC1 and the second heating coil SC2 may be disposed on the front side, and in a position symmetrical to the first heating coil SC1 and the second heating coil SC2 in the front-rear direction, the third heating coil SC3 and the fourth heating coil SC4 may be disposed. That is, it is an alternative example in which the four sub heating coils SC1 to SC4 are each disposed on 45 degrees slants. In this alternative example, the first sub inverter circuit SIV1 may drive the first heating coil SC1 and the fourth sub heating coil SC4, and the second sub inverter circuit SIV2 may drive the third heating coil SC3 and the second sub heating coil SC2.

In this case, the first sub inverter circuit SIV1 does not drive the first heating coil SC1 and the fourth sub heating coil SC4 at the same time but drives only either one of the two. The second sub inverter circuit SIV2 also does not drive the third heating coil SC3 and the second sub heating coil SC2 at the same time but drives only either one of the two. This is preferable since this can reduce unnecessary magnetic leakage and increase heating efficiency.

With the above configuration, advantageously, it is be possible to reduce the number of expensive inverter circuits and thus reduce cost, and it is possible to reduce the installing space of the circuit board. As in the exemplary Fig. 15, in a case in which four sub heating coils SC1 to SC4 are disposed and in which the user is cooking using a non-circular pan such as an elliptical or oval pan, when the pan is placed on the front side so as to be long sideways, the first heating coil SC1 and the second heating coil SC2 that are on the front side relative to the center point X1 may be driven, and when the pan is placed on the left side relative to the center point X1 so as to be long in the front-rear direction, the second heating coil SC2 and the fourth heating coil SC4 at the back may be driven, further, when the pan is placed on the right side relative to the center point X1 so as to be long in the front-rear direction, the first heating coil SC1 and the third heating coil SC3 may be driven. In any of the three patterns, the sub inverter circuit may be switched, and among the pairs (two heating coils) of sub heating coils, either one may be selected and used without any problem.

Note that in a case where a single common sub inverter circuit that switches two sub heating coils is used, consequently, two sub heating coils can be driven when the common sub inverter circuit switches the connection of one of the sub heating coil and the other sub heating coil alternatively under a temporal condition, such as a short time interval. Accordingly, in a case where more than four sub heating coils are provided, the number of sub inverter circuits can be suppressed to its minimum number with this concept.

As above, when a single common sub inverter circuit is shared by two sub heating coils at the same time, in a case of a full bridge circuit, for example, as shown in Fig. 21, the sub heating coil SC3 may be connected (in series or in parallel to SC1) to the series resonance circuit of the sub heating coil SC1 and the resonant capacitor 110B. With the above, even if SC1 and SC3 are driven at the same time, since no substantial difference will occur in the drive frequency, no beat noise is generated.

Further, when control such as sequentially switching energization to the first sub heating coil and the second sub heating coil or intermittently driving the first sub heating coil and the second sub heating coil is carried out, there is a possibility that the user not understanding how the induction heating is carried out may feel uneasy during use. As such, it is further preferable if the switching of energization of the groups of sub heating coils for accelerating convection and for preventing boiling over, as described above, are displayed in real time on the above integrated display means 100 or liquid crystal display screens 45R and 45L by means of characters and symbol, animation, or the like.

In the above description, although the control unit has supplied induction heating power alternately to the first sub heating coil and the second sub heating coil from the inverter circuit, the induction heating power may be supplied with a predetermined interval. That is, the aim of supplying alternatively is to exert an effect in which the heated portion of a pan and the like is made to change at separated positions and at a separate time such that the convection acceleration effect is improved. As such, in order to exert this effect, the ON-OFF period does not have to be totally opposite each other. For example, the method may be changed to one in which a few seconds before stopping energization of the first sub heating coil or the sub heating coils of the first group, the energization of the second sub heating coil or the sub heating coils of the second group is started. Alternatively, the heating power of the first sub heating coil or the sub heating coils of the first group may be gradually reduced before stopping the energization thereof while the heating power of the second sub heating coil or the sub heating coils of the second group are, on the other hand, gradually increased in accordance with the heating power reduction period or starts its driving with a high heating power from the start.

Note that in the above description, there are portions in which the boiling-over detection unit 50 is referred to as a static capacitance detection means; however, the static capacitance detection means does not necessarily have to detect how much static capacitance there are in the electrode 40, 41, and the like in digital values. Even if there is no boiling over, there is no guarantee that the static capacitance of each electrode is always constant and the same in the stage before the start of cooking and the state near the boiling state due to influence of the IH heating unit. With this change in static capacitance in consideration, the static capacitance at a certain time, for example, when at 95 degree C that is close to a boiling temperature, may be detected as a predetermined reference value, and detection of how much increase or decrease there is from this value may be carried out to detect sudden change (increase or decrease) in static capacitance such that boiling over is detected. Accordingly, it goes without saying that indexation of this amount of change may be carried out, as well as indexation of the change rate and the change speed (increase and decrease per unit time), and occurrence of boiling over may be determined by the amount of the index. As in the embodiments, by providing the electrodes continuously along a predetermined length, a merit such that it will be possible to detect boiling over of the cooked liquid at any portion of the electrodes is enjoyed; however, with the direction of the boiling over in consideration, it may be such that short electrodes are interspersed in a few spots such as in the front, rear, left, and right of the IH heating coil. In this case, each electrode may be preferably a curved shape extending along the outer shape of the IH heating coil as described in Embodiments 1 to 3. For example, in a case in which the outer shape of the main heating coil MC is annular, the above can be achieved by matching the longitudinal direction of the electrode with a concentric circle around the center point X1, X2. In this case, when the electrode is formed into a curved shape also extending along the outer shape of the sub heating coil, then the electrode will not be easily affected by the magnetic field generated by the high-frequency current flowing in the sub heating coil, and it will be further ideal.

Furthermore, in the above-described Embodiments 1 to 3, seven cooking menu keys, such as the selection key E1A for rapid heating, the selection key E1 B for water-boiling, and the like, have been provided. However, a case is assumed in which the convection acceleration control is not automatically carried out at an appropriate timing even when a cooking menu key is selected. Accordingly, it is preferable that a selection key of a cooking recipe that requires convection acceleration control is provided for the user to select. For example, when with a key for curry that is one of the cooking recipes, because of the thickness of the liquid, convection is not easily generated, and scorching tended to occur on the pan bottom. Thus, hitherto, cooking method such as adding the curry roux after the vegetables are sufficiently boiled, stopping the induction heating after the curry roux has been added, or stewing by driving the induction heating coil with the minimum heating power has been carried out.

Accordingly, when the user operates a selection key "curry" before start of cooking, after start of cooking, or in the middle of cooking, it is preferable that a notification notifying the user to carry out the convection acceleration control of the present invention when adding curry is issued. Specifically, a method can be conceived in which a display encouraging the convection acceleration control switch to be pushed is displayed using the integrated display means 100 of Embodiment 2 or announcement is made by the voice synthesizer 315. When the convection-acceleration-control selection switch is selected, the energization control circuit 200 automatically performs change in the energization conditions of the sub heating coils SC and the main heating coil MC and automatically performs determination of whether the timing is appropriate, such as after start of boiling. If the timing is appropriate, then, heating that accelerates convection is carried out continuously.

### [Industrial Applicability]

The induction cooking system according to the invention performs heat driving by combining the main heating coil and the sub heating coils and can be applied widely to table-top type and built-in type special purpose cooking systems for induction heated heat source and complex induction cooking systems with other radiant type heat sources.

### Reference Signs List

A main body; B top panel; C housing; D heating means; E operation means; F control means; G display means; W width; CL1 left-right center line of the main body A; CL2 left-right center line of the left IH heat source; DA outer diameter of left IH heating coil; DB arrangement outer diameter of auxiliary coil; DC maximum outer diameter of wide display; E1A selection key for rapid heating; E1 B selection key for water-boiling; E1 C selection key for boiling; E2A selection key for preheating; E2B selection key for cooking rice; E3A selection key for deep frying; E3B selection key for water-boiling and heat-retaining; N heated object (pan); SC sub heating coils (group);SC1 to SC4 sub heating coil; MC main heating coil; MIV inverter circuit for main heating coil; SIV1 to SIV4 inverter circuit for sub heating coil; SX space; STC center light emitting unit (main heating coil light emitting unit); X1 center point; X2 center point; 2 main body case; 2A body; 2B front flange plate; 2S inclined portion; 2U rear side wall of body; 3B rear flange; 3L left flange; 3R right flange; 6L left IH heat source; 6LC left IH heating coil; 6LM guide mark; 6R right IH heat source; 6RC right IH heating coil; 6RM guide mark; 7 central electric radiant heat source (heater); 7M guide mark; 8L left side cooling chamber; 8R right side cooling chamber; 9 grill heating chamber; 10 upper portion component chamber; 12 rear exhaust hood; 13 door; 13A center opening; 13B handle; 14 exhaust duct; 20 upper frame (frame body); 20B right vent hole; 20C center vent hole; 20D left vent hole; 21 top plate; 22 electric radiant heat source (heater); 23 electric radiant heat source (heater); 24A notch; 25 horizontal partition plate; 28 rear partition plate; 28A outlet; 31R infrared sensor; 31L, 31L1 to 31L5 infrared sensor; 33 driving circuit; 40 first electrode (outer electrode); 41 second electrode (outer electrode); 42A terminal; 42B terminal; 43A terminal; 43B terminal; 45R liquid crystal display screen; 45L liquid crystal display screen; 46 cooling duct; 47 flat plate; 48 first inner electrode; 48C inner bend; 48D arm portion; 48E outer bend; 49 second inner electrode; 49C inner bend; 49D arm portion; 49E outer bend; 50 boiling-over detection unit; 60 front side operating unit; 61 top side operating unit; 62L left front side operating frame; 62R right front side operating frame; 63 main power switch; 63A operation button; 64R right operation dial; 64L left operation dial; 66R right indicating lamp; 66L left indicating lamp; 70 right heating power setting operating unit; 71 left heating power setting operating unit; 72 center operating unit; 73 magnetic flux leakage prevention material; 75 AC power supply (commercial power supply); 76 rectifier circuit; 77A switching element; 77B switching element; 78A switching element; 78B switching element; 79A switching element; 79B switching element; 80 DC power supply; 81A switching element; 82B switching element; 86 smoothing capacitor; 88A switching element; 89A switching element; 100 integrated display means; 100LX display unit; 101R right heating power indicating lamp; 101L left heating power indicating lamp; 102B switching element; 103B switching element; 104B switching element; 105B switching element; 110A resonance capacitor; 110B resonance capacitor; 121H electric heater for catalyst; 130 cover; 200 energization control circuit; 201 input unit; 202 output unit; 203 storage unit; 204 arithmetic control unit (CPU); 210R inverter circuit for right IH heat source; 210L inverter circuit for left IH heat source; 211 heater driving circuit of central electric radiant heat source 7; 212 heater driving circuit; 213 heater drive circuit; 214 heater driving circuit; 215 driving circuit for driving liquid crystal screen; 221 rectifier bridge circuit; 228 driving circuit; 228A driving circuit; 228B driving circuit; 231 driving circuit; 240 temperature detecting circuit; 241 temperature detecting element (temperature sensor); 242 temperature detecting element (in-chamber temperature sensor); 243 temperature detecting element (temperature sensor); 244 temperature detecting element (temperature sensor); 245 temperature detecting element (temperature sensor); 250 key dedicated to bread; 251 compound cooking key; 266 current sensor; 267A current sensor; 267B current sensor; 267C current sensor; 267D current sensor; 270 to 275 space; 276 individual light emitting unit; 277 wide area light emitting unit; 278 driving circuit; 280 placement-of-heated-object determination unit; 290 coil support; 290A support protrusion; 290Y coil support; 291 shielding ring; 300 drive motor; 315 voice synthesizer; 316 speaker; 350 convection acceleration selection switch (selection switch)

## Claims

1. An induction cooking system, comprising:
a top plate for placing a heated object including a pan for holding an object to be cooked;
an annular main heating coil (MC) disposed below the top plate;
a first sub heating coil (SC1) and a second sub heating coil (SC2) adjoinedly disposed on both sides of the main heating coil (MC), and each having a flattened shape with a width smaller than a radius of the main heating coil (MC);
inverter circuits (MIV, SIV1, SIV2) supplying induction heating power to the main heating coil (MC), the first sub heating coil (SC1) and all of the second sub heating coil (SC2), respectively;
a static capacitance detection means disposing a plurality of electrodes at outside positions of the respective sub heating coils (SC) under the top plate;
a control unit (200) controlling outputs of the inverter circuits (MIV, SIV1, SIV2); and
an operating unit (61) commanding a cooking operation to the control unit (200), wherein
the control unit (200) supplies induction heating power from the inverter circuits (SIV1, SIV2) to the first sub heating coil (SC1) and the second sub heating coil (SC2) alternately or with a predetermined interval and stops driving of or reduces outputs of the inverter circuits (SIV1, SIV2) when the static capacitance detection means detects a change in static capacitance, and
the electrodes include a first electrode (40) that is disposed on an outer periphery of the first sub heating coil (SC1) and below and include a second electrode (41) that is disposed on an outer periphery of the second sub heating coil (SC2) and below.

2. The induction cooking system of claim 1, wherein the first sub heating coil (SC1) and the second sub heating coil (SC2) are disposed on both sides of the main heating coil (MC) so as to substantially surround a whole circumference of the main heating coil (MC), the first sub heating coil (SC1) and the second sub heating coil (SC2) having bilaterally symmetrical shape each other.

3. The induction cooking system of claim 1, further comprising spaces between mutual both ends of the sub heating coils (SC) for preventing magnetic interference between the sub heating coils (SC), wherein
the first and the second electrodes (40, 41) are connected to the control unit (200) through the spaces.

4. The induction cooking system of claim 1, wherein the control unit (200) switches from a boiling-over detection by the first electrode (40) to a boiling-over detection by the second electrode (41) when a high-frequency current supply target from the inverter circuits (SIV1, SIV2) is switched from the first sub heating coil (SC1) to the second sub heating coil (SC2).

5. The induction cooking system of claim 1, wherein the static capacitance detection means compares static capacitances between the first electrode (40) and the second electrode (41) to calculates a difference thereof, and
the control unit (200) determines that there is boiling over when the difference exceeds a predetermined value.

6. The induction cooking system of claim 1, further comprising spaces between mutual both ends of the sub heating coils (SC) for preventing magnetic interference between the sub heating coils (SC), wherein
the first and the second electrodes (40, 41) are connected to the control unit (200) through the spaces.

7. The induction cooking system of claim 1, further comprising spaces between mutual both ends of the sub heating coils (SC), wherein
each of the electrodes includes a bend that extends in an arc shape along an outer circumference shape of the corresponding sub heating coil (SC) and a connecting terminal that continues from the bend and extends toward the main heating coil (MC).

8. The induction cooking system of claim 1, further comprising a placement-of-heated-object determination unit (280) determining whether the heated object is placed above the main heating coil (MC) and at least one of the sub heating coils (SC), wherein
the control unit (200) allows execution of a cooperative heating operation when the placement-of-heated-object determination unit (280) determines that the heated object is placed on the main heating coil (MC) and the at least one of the sub heating coils (SC) simultaneously.

9. The induction cooking system of claim 1, further comprising
a display unit displaying a heating condition commanded by a user to the control unit (200), and
a placement-of-heated-object determination unit (280) determining whether the heated object is placed above the main heating coil (MC) and at least one of the sub heating coils (SC), wherein
the control unit (200) allows execution of a cooperative heating operation when the placement-of-heated-object determination unit (280) determines that the heated object is placed over the main heating coil (MC) and the at least one of the sub heating coils (SC) simultaneously and displays on the display unit that cooperative heating with the main heating coil (MC) and the at least one of the sub heating coils (SC) is being performed.

10. The induction cooking system of claim 1, wherein the operating unit (61) includes an input key (90) that is capable of input for operation information by utilizing change in static capacitance, and operation from the input key (90) is made invalid when the static capacitance detection means detects a capacity change in the first or the second electrode (40, 41) or inner or outer electrode (48, 49, 40, 41).

11. The induction cooking system of claim 1, wherein the operating unit (61) includes an input key (90) that is capable of input for operation information and a stop key (91) that is capable of input of a heating stop command by utilizing change in static capacitance, and operation from the input key (90) is made invalid and the heating stop command of the stop key (91) is kept valid when the static capacitance detection means detects a capacity change in the first or the second electrode (40, 41) or inner or outer electrode (48, 49, 40, 41).

## Patentansprüche

1. Induktionskochsystem, umfassend:
eine obere Platte zum Platzieren eines erhitzten Objekts, das einen Topf oder Pfanne beinhaltet, um ein zu kochendes Objekt aufzunehmen;
eine ringförmige Hauptheizspule (MC), die unterhalb der oberen Platte angeordnet ist;
eine erste Nebenheizspule (SC1) und eine zweite Nebenheizspule (SC2), die aneinandergrenzend auf beiden Seiten der Hauptheizspule (MC) angeordnet sind, und jeweils eine abgeflachte Form mit einer Breite kleiner als ein Radius der Hauptheizspule (MC) aufweisen,
Wechselrichterschaltungen (MIV, SIV1, SIV2), die Induktionsheizleistung jeweils der Hauptheizspule (MC), der ersten Nebenheizspule (SC1) und allem der zweiten Nebenheizspule (SC2) zuführen,
ein statische-Kapazität-Erfassungsmittel die eine Vielzahl von Elektroden an äußeren Positionen der entsprechenden Nebenheizspulen (SC) unterhalb der oberen Platte anordnen;
eine Steuereinheit (200), die Ausgänge der Wechselrichterschaltungen (MIV, SIV1, SIV2) steuert; und
eine Betriebseinheit (61), die einen Kochbetrieb an die Steuereinheit (200) anweist, wobei
die Steuereinheit (200) Induktionsheizleistung von den Wechselrichterschaltungen (SIV1, SIV2) zu der ersten Nebenheizspule (SC1) und der zweiten Nebenheizspule (SC2) abwechselnd oder mit einem vorherbestimmten Intervall zuführt und Antrieb von oder Ausgabe der Wechselrichterschaltungen (SIV1, SIV2) stoppt oder reduziert, wenn das statische-Kapazität-Erfassungsmittel eine Änderung in der statischen Kapazität erfasst, und
die Elektroden eine erste Elektrode (40) enthalten, die auf einer äußeren Peripherie der ersten Nebenheizspule (SC1) und unterhalb angeordnet ist, und eine zweite Elektrode (41) enthalten, die auf einer äußeren Peripherie der zweiten Nebenheizspule (SC2) und unterhalb angeordnet ist.

2. Induktionskochsystem nach Anspruch 1, wobei die erste Nebenheizspule (SC1) und die zweite Nebenheizspule (SC2) auf beiden Seiten der Hauptheizspule (MC) angeordnet sind, so dass sie im Wesentlichen einen gesamten Umfang der Hauptheizspule (MC) umgeben, wobei die erste Nebenheizspule (SC1) und die zweite Nebenheizspule (SC2) eine bilateral symmetrische Form zueinander aufweisen.

3. Induktionskochsystem nach Anspruch 1, ferner umfassend Zwischenräume zwischen gegenseitigen beiden Enden der Nebenheizspulen (SC), um magnetische Interferenz zwischen den Nebenheizspulen (SC) zu verhindern, wobei
die ersten und die zweiten Elektroden (40, 41) mit der Steuereinheit (200) durch die Zwischenräume verbunden sind.

4. Induktionskochsystem nach Anspruch 1, wobei die Steuereinheit (200) von einer Überkochdetektion durch die erste Elektrode (40) auf eine Überkochdetektion durch die zweite Elektrode (41) schaltet, wenn ein Hochfrequenz-Stromversorgungsziel von den Wechselrichterschaltungen (SIV1, SIV2) von der ersten Nebenheizspule (SC1) zur zweiten Nebenheizspule (SC2) geschaltet wird.

5. Induktionskochsystem nach Anspruch 1, wobei das statische-Kapazität-Erfassungsmittel statische Kapazitäten zwischen der ersten Elektrode (40) und der zweiten Elektrode (41) vergleicht, um eine Differenz hiervon zu berechnen, und
die Steuereinheit (200) bestimmt, dass Überkochen vorhanden ist, wenn die Differenz einen vorherbestimmten Wert überschreitet.

6. Induktionskochsystem nach Anspruch 1, ferner umfassend Zwischenräume zwischen gegenseitigen beiden Enden der Nebenheizspulen (SC), um magnetische Interferenz zwischen den Nebenheizspulen (SC) zu verhindern, wobei
die ersten und die zweiten Elektroden (40, 41) mit der Steuereinheit (200) durch die Zwischenräume verbunden sind.

7. Induktionskochsystem nach Anspruch 1, ferner umfassend Zwischenräume zwischen gegenseitigen beiden Enden der Nebenheizspulen (SC), wobei
jede der Elektroden eine Biegung, die sich in einer Bogenform entlang einer äußeren Umfangsform der entsprechenden Nebenheizspule (SC) erstreckt, und einen Verbindunganschluss enthält, der sich von der Biegung fortsetzt und sich zur Hauptheizspule (MC) erstreckt, enthält.

8. Induktionskochsystem nach Anspruch 1, ferner umfassend eine Platzierung-von-erhitztem-Objekt-Bestimmungseinheit (280), die bestimmt, ob das erhitzte Objekt über der Hauptheizspule (MC) und zumindest einer der Nebenheizspulen (SC) platziert ist, wobei
die Steuereinheit (200) Ausführung eines zusammenwirkenden Heizbetriebs zulässt, wenn die Platzierung-von-erhitztem-Objekt-Bestimmungseinheit (280) bestimmt, dass das erhitzte Objekt gleichzeitig auf der Hauptheizspule (MC) und der zumindest einen der Nebenheizspulen (SC) platziert ist.

9. Induktionskochsystem nach Anspruch 1, ferner umfassend
eine Anzeigeeinheit zum Anzeigen einer Heizbedingung, die von einem Benutzer an die Steuereinheit (200) angewiesen wird, und
eine Platzierung-von-erhitztem-Objekt-Bestimmungseinheit (280) die bestimmt, ob das erhitzte Objekt über der Hauptheizspule (MC) und zumindest einer der Nebenheizspulen (SC) platziert ist, wobei
die Steuereinheit (200) Ausführung eines zusammenwirkenden Heizbetriebs zulässt, wenn die Platzierung-von-erhitztem-Objekt-Bestimmungseinheit (280) bestimmt, dass das erhitzte Objekt gleichzeitig über der Hauptheizspule (MC) und der zumindest einen der Nebenheizspulen (SC) platziert ist, und auf der Anzeigeeinheit anzeigt, dass zusammenwirkendes Heizen mit der Hauptheizspule (MC) und der zumindest einen der Nebenheizspulen (SC) durchgeführt wird.

10. Induktionskochsystem nach Anspruch 1, wobei die Betriebseinheit (61) eine Eingabetaste (90) enthält, die Eingabe von Betriebsinformationen unter Verwendung einer Änderung in der statischen Kapazität ermöglicht, und Betrieb durch die Eingabetaste (90) ungültig gemacht wird, wenn das statische-Kapazität-Erfassungsmittel eine Kapazitätsänderung in der ersten oder der zweiten Elektrode (40, 41) oder inneren oder äußeren Elektrode (48, 49, 40, 41) erfasst.

11. Induktionskochsystem nach Anspruch 1, wobei die Betriebseinheit (61) eine Eingabetaste (90) enthält, die Eingabe von Betriebsinformationen ermöglicht, und eine Stopptaste (91) enthält, die Eingabe eines Heizstoppbefehls unter Verwendung einer Änderung in der statischen Kapazität ermöglicht, und Betrieb durch die Eingabetaste (90) ungültig gemacht wird und der Heizstoppbefehl der Stopptaste (91) gültig gehalten wird, wenn das statische-Kapazität-Erfassungsmittel eine Kapazitätsänderung in der ersten oder der zweiten Elektrode (40, 41) oder inneren oder äußeren Elektrode (48, 49, 40, 41) erfasst.

## Revendications

1. Système de cuisson par induction, comprenant :
une plaque supérieure pour placer un objet chauffé, notamment une poêle destinée à contenir un objet devant être cuit ;
un serpentin chauffant principal annulaire (MC) disposé en dessous de la plaque supérieure ;
un premier serpentin de chauffage auxiliaire (SC1) et un seconde serpentin de chauffage auxiliaire (SC2) disposés de manière contiguë sur les deux côté du serpentin de chauffage principal (MC), chacun ayant une forme aplatie avec une largeur inférieure à un rayon du serpentin de chauffage principal (MC) ;
des circuits inverseurs (MIV, SIV1, SIV2) fournissant une puissance de chauffage par induction au serpentin de chauffage principal (MC), au premier serpentin de chauffage auxiliaire (SC1) et à l'ensemble du second serpentin de chauffage auxiliaire (SC2), respectivement ;
des moyens de détection de capacité statique disposant une pluralité d'électrodes au niveau de positions extérieures des serpentins chauffants auxiliaires (SC) respectifs sous la plaque supérieure ;
une unité de commande (200) commandant les sorties des circuits inverseurs (MIV, SIV1, SIV2) ; et
une unité opérationnelle (61) commandant une opération de cuisson à l'unité de commande (200), dans lequel
l'unité de commande (200) fournit une puissance de chauffage par induction des circuits inverseurs (SIV1, SIV2) au premier serpentin chauffant auxiliaire (SC1) et au second serpentin chauffant auxiliaire (SC2) en variante ou avec un intervalle prédéterminé et arrête le pilotage ou réduit les sorties des circuits inverseurs (SIV1, SIV2) lorsque les moyens de détection de capacité statique détectent un changement de capacité statique, et
les électrodes comportent une première électrode (40) qui est disposée sur une périphérie externe du premier serpentin chauffant auxiliaire (SC1) et en dessous et comportent une seconde électrode (41) qui est disposée sur une périphérie externe du second serpentin chauffant auxiliaire (SC2) et en dessous.

2. Système de cuisson par induction selon la revendication 1, dans lequel le premier serpentin chauffant auxiliaire (SC1) et le second serpentin chauffant auxiliaire (SC2) sont disposés sur les deux côtés du serpentin chauffant auxiliaire (MC) de sorte à entourer sensiblement une circonférence totale du serpentin chauffant principal (MC), du premier serpentin chauffant auxiliaire (SC1) et du second serpentin chauffant auxiliaire (SC2) ayant une forme bilatéralement symétrique l'un par rapport à l'autre.

3. Système de cuisson par induction selon la revendication 1, comprenant en outre des espaces entre les deux extrémités mutuelles des serpentins chauffants auxiliaires (SC) pour empêcher l'interférence magnétique entre les serpentins chauffants auxiliaires (SC), dans lequel
les première et seconde électrodes (40, 41) sont connectées à l'unité de commande (200) à travers les espaces.

4. Système de cuisson par induction selon la revendication 1, dans lequel l'unité de commande (200) commute d'une détection d'ébullition par la première électrode (40) à une détection d'ébullition par la seconde électrode (41) lorsqu'une cible d'alimentation en courant haute fréquence à partir des circuits inverseurs (SIV1, SIV2) est commutée du premier serpentin chauffant auxiliaire (SC1) vers le second serpentin chauffant auxiliaire (SC2).

5. Système de cuisson par induction selon la revendication 1, dans lequel les moyens de détection de capacité statique comparent les capacités statiques entre la première électrode (40) et la seconde électrode (41) pour calculer une différence de celles-ci ; et
l'unité de commande (200) détermine qu'il existe une ébullition lorsque la différence dépasse une valeur prédéterminée.

6. Système de cuisson par induction selon la revendication 1, comprenant en outre des espaces entre les deux extrémités mutuelles des serpentins chauffants auxiliaires (SC) pour empêcher une interférence magnétique entre les serpentins chauffants auxiliaires (SC), dans lequel
les première et seconde électrodes (40, 41) sont connectées à l'unité de commande (200) à travers les espaces.

7. Système de cuisson par induction selon la revendication 1, comprenant en outre des espaces entre les deux extrémités mutuelles des serpentins chauffants auxiliaires (SC), dans lequel
chacune des électrodes comprend une courbure qui s'étend selon une forme en arc le long d'une forme circonférentielle externe du serpentin chauffant auxiliaire (SC) correspondant et une borne de connexion qui continue à partir de la courbure et s'étend vers le serpentin chauffant principal (MC).

8. Système de cuisson par induction selon la revendication 1, comprenant en outre une unité de détermination de placement d'objet chauffé (280) déterminant si l'objet chauffé est placé au-dessus du serpentin chauffant principal (MC) et au moins un des serpentins chauffants auxiliaires (SC), dans lequel
l'unité de commande (200) permet l'exécution d'une opération de chauffage coopérative lorsque l'unité de détermination de placement d'objet chauffé (280) détermine que l'objet chauffé est placé sur le serpentin chauffant principal (MC) et l'au moins un des serpentins chauffants auxiliaires (SC) simultanément.

9. Système de cuisson par induction selon la revendication 1, comprenant en outre
une unité d'affichage affichant un état de chauffage commandé par un utilisateur à l'unité de commande (200), et
une unité de détermination de placement d'objet chauffé (280) déterminant si l'objet chauffé est placé au-dessus du serpentin chauffant principal (MC) et au niveau d'au moins un des serpentins chauffants auxiliaires (SC), dans lequel
l'unité de commande (200) permet l'exécution d'une opération de chauffage coopérative lorsque l'unité de détermination de placement d'objet chauffé (280) détermine que l'objet chauffé est placé au-dessus du serpentin chauffant principal (MC) et de l'au moins un des serpentins chauffants auxiliaires (SC) simultanément et affiche sur l'unité d'affichage que le chauffage coopératif avec le serpentin chauffant principal (MC) et l'au moins un des serpentins chauffants auxiliaire (SC) est effectué.

10. Système de cuisson par induction selon la revendication 1, dans lequel l'unité opérationnelle (61) comporte une touche d'entrée (90) qui est capable d'entrer des informations de fonctionnement en utilisant un changement de capacité statique, et le fonctionnement à partir de la touche d'entrée (90) est rendu invalide lorsque les moyens de détection de capacité statique détectent un changement de capacité dans la première ou la seconde électrode (40, 41) ou l'électrode interne ou externe (48, 49, 40, 41).

11. Système de cuisson par induction selon la revendication 1, dans lequel l'unité opérationnelle (61) comporte une touche d'entrée (90) qui est capable d'entrer des informations de fonctionnement et une touche d'arrêt (91) qui est capable d'entrer une commande d'arrêt de chauffage en utilisant un changement de capacité statique, et le fonctionnement à partir de la touche d'entrée (90) est rendu invalide et la commande d'arrêt de chauffage de la touche d'arrêt (91) est maintenue valide lorsque les moyens de détection de capacité statique détectent un changement de capacité dans la première ou la seconde électrode (40, 41) ou une électrode interne ou externe (48, 49, 40, 41).
